(19) **Europäisches Patentamt / European Patent Office / Office européen des brevets**

(11) **EP 4 250 864 A1**

(12) **EUROPEAN PATENT APPLICATION**
published in accordance with Art. 153(4) EPC

(43) Date of publication:
27.09.2023 Bulletin 2023/39

(21) Application number: 21905169.5

(22) Date of filing: 17.09.2021

(51) International Patent Classification (IPC):
H04W 84/12 (2009.01)    H04W 72/00 (2023.01)
H04W 4/30 (2018.01)

(52) Cooperative Patent Classification (CPC):
G01S 13/58; H04W 4/30; H04W 72/00;
H04W 84/12

(86) International application number:
PCT/CN2021/119034

(87) International publication number:
WO 2022/127237 (23.06.2022 Gazette 2022/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.12.2020 CN 202011488455

(71) Applicant: Huawei Technologies Co., Ltd.
Shenzhen, Guangdong 518129 (CN)

(72) Inventors:
• DU, Rui
Shenzhen, Guangdong 518129 (CN)
• ZHANG, Mingxing
Chengdu, Sichuan 611756 (CN)
• HAN, Xiao
Shenzhen, Guangdong 518129 (CN)
• LIU, Chenchen
Shenzhen, Guangdong 518129 (CN)
• SUN, Yingxiang
Shenzhen, Guangdong 518129 (CN)
• TAN, Danny Kai Pin
Shenzhen, Guangdong 518129 (CN)
• LIN, Wei
Shenzhen, Guangdong 518129 (CN)
• YANG, Xun
Shenzhen, Guangdong 518129 (CN)
• ZHOU, Zhengchun
Chengdu, Sichuan 611756 (CN)
• YANG, Yang
Chengdu, Sichuan 611756 (CN)

(74) Representative: Epping - Hermann - Fischer
Patentanwaltsgesellschaft mbH
Schloßschmidstraße 5
80639 München (DE)

(54) **DATA TRANSMISSION METHOD AND APPARATUS, MEDIUM, AND COMPUTER PROGRAM**

(57) This application relates to the field of sensing technologies, and may be used for speed measurement and ranging in a sensing system, and specifically, to a data transmission method. The method includes: generating a physical layer protocol data unit PPDU, where the PPDU includes a training field, and the training field includes a sequence used for target sensing; and sending the PPDU. According to technical solutions provided in this application, target sensing can be performed in an existing standard related to high frequency band, and sensing performance is improved.

Transmit device | Receive device

S110:
Generate a physical layer protocol data unit
PPDU, where the PPDU includes a training
field, and the training field includes a
sequence used for target sensing

S120: Send the PPDU

S130: Receive the PPDU

S140: Perform target sensing based on
the sequence used for target sensing

FIG. 1

EP 4 250 864 A1

**Description**

**TECHNICAL FIELD**

This application relates to the field of communication technologies, and in particular, to a data transmission method and apparatus, a medium, and a computer program.

**BACKGROUND**

Wireless local area network (Wireless Local Area Network, WLAN) sensing is a technology using a wireless signal to sense a target. This technology is based on radio measurement and environment sampling capabilities. Each communication path between two physical devices provides an opportunity to extract information about an ambient environment. WLAN devices are increasingly widely used because they are wireless, and have high mobility and high transmission rates. Therefore, WLAN-based WLAN sensing (WLAN Sensing) has wide application prospects.

Existing IEEE 802.11 series standards include mainstream low frequency band (for example, 2.4 GHz and 5 GHz) related standards (for example, 802.11n, 802.11ac, and 802.11ax) and high frequency band (for example, 60 GHz) related standards (for example, 802.11ad and 802.11ay). WLAN sensing in a conventional technology generally senses a target based on the foregoing existing standards.

A high frequency band (for example, 60 GHz) signal is sensitive to a moving object, and has a short wavelength, a large transmission bandwidth, and a high distance resolution. Therefore, the high frequency band signal has a good target sensing advantage. However, sequences of training fields used in existing standards related to high frequency band (for example, 802.11ad and 802. Hay) are designed for optimal communication. When these sequences are used for target sensing, optimal sensing performance of the sequences cannot be implemented.

**SUMMARY**

In view of the foregoing problem in the conventional technology, this application provides a data transmission method and apparatus, to perform target sensing in an existing standard related to high frequency, and improve sensing performance.

To achieve the foregoing objective, according to a first aspect, this application provides a data transmission method, including:

generating a physical layer protocol data unit PPDU, where the PPDU includes a training field, and the training field includes a sequence used for target sensing; and

sending the PPDU.

The sequence is redesigned and optimized, so that the sequence can be applied to an existing standard related to high frequency band to perform target sensing with higher performance.

In a possible implementation of the first aspect, the sequence includes at least one of eight sequences.

In a possible implementation of the first aspect, when a length of the sequence is 256 bits, the eight sequences are respectively:

$Sn256_1$, $Sn256_2$, $Sn256_3$, $Sn256_4$, $Sn256_5$, $Sn256_6$, $Sn256_7$, and $Sn256_8$.

For specific forms of $Sn256_1$, $Sn256_2$, $Sn256_3$, $Sn256_4$, Sn256s, $Sn256_6$, $Sn256_7$, and $Sn256_8$, refer to description of embodiments.

In a possible implementation of the first aspect, when a length of the sequence is 512 bits, the eight sequences are respectively:

$Sn512_1$, $Sn512_2$, $Sn512_3$, $Sn512_4$, $Sn512_5$, $Sn512_6$, $Sn512_7$, and $Sn512_8$.

For specific forms of $Sn512_1$, $Sn512_2$, $Sn512_3$, $Sn512_4$, Sn512s, $Sn512_6$, $Sn512_7$, and Sn512s, refer to description of embodiments.

In a possible implementation of the first aspect, when a length of the sequence is 1024 bits, the eight sequences are respectively:

$Sn1024_1$, $Sn1024_2$, $Sn1024_3$, $Sn1024_4$, $Sn1024_5$, $Sn1024_6$, $Sn1024_7$, and $Sn1024_8$.

For specific forms of $Sn1024_1$, $Sn1024_2$, $Sn1024_3$, $Sn1024_4$, $Sn1024_5$, $Sn1024_6$, $Sn1024_7$, and $Sn1024_8$, refer to description of embodiments.

In a possible implementation of the first aspect, when a length of the sequence is 2048 bits, the eight sequences are respectively:

$Sn2048_1$, $Sn2048_2$, $Sn2048_3$, $Sn2048_4$, $Sn2048_5$, $Sn2048_6$, $Sn2048_7$, and $Sn2048_8$.

For specific forms of $Sn2048_1$, $Sn2048_2$, $Sn2048_3$, $Sn2048_4$, $Sn2048_5$, $Sn2048_6$, $Sn2048_7$, and $Sn2048_8$, refer

to description of embodiments.

According to a second aspect, this application provides a data transmission method, including:

receiving a physical layer protocol data unit PPDU, where the PPDU includes a training field, and the training field includes a sequence used for target sensing; and
performing target sensing based on the sequence used for target sensing.

In a possible implementation of the second aspect, the sequence includes at least one of eight sequences.

In a possible implementation of the second aspect, when a length of the sequence is 256 bits, the eight sequences are respectively:

$Sn256_1$, $Sn256_2$, $Sn256_3$, $Sn256_4$, $Sn256_5$, $Sn256_6$, $Sn256_7$, and $Sn256_8$.

For specific forms of $Sn256_1$, $Sn256_2$, $Sn256_3$, $Sn256_4$, $Sn256s$, $Sn256_6$, $Sn256_7$, and $Sn256_8$, refer to description of embodiments.

In a possible implementation of the second aspect, when a length of the sequence is 512 bits, the eight sequences are respectively:

$Sn512_1$, $Sn512_2$, $Sn512_3$, $Sn512_4$, $Sn512_5$, $Sn512_6$, $Sn512_7$, and $Sn512_8$.

For specific forms of $Sn512_1$, $Sn512_2$, $Sn512_3$, $Sn512_4$, $Sn512s$, $Sn512_6$, $Sn512_7$, and $Sn512s$, refer to description of embodiments.

In a possible implementation of the second aspect, when a length of the sequence is 1024 bits, the eight sequences are respectively:

$Sn1024_1$, $Sn1024_2$, $Sn1024_3$, $Sn1024_4$, $Sn1024_5$, $Sn1024_6$, $Sn1024_7$, and $Sn1024_8$.

For specific forms of $Sn1024_1$, $Sn1024_2$, $Sn1024_3$, $Sn1024_4$, $Sn1024_5$, $Sn1024_6$, $Sn1024_7$, and $Sn1024_8$, refer to description of embodiments.

In a possible implementation of the second aspect, when a length of the sequence is 2048 bits, the eight sequences are respectively:

$Sn2048_1$, $Sn2048_2$, $Sn2048_3$, $Sn2048_4$, $Sn2048_5$, $Sn2048_6$, $Sn2048_7$, and $Sn2048_8$.

For specific forms of $Sn2048_1$, $Sn2048_2$, $Sn2048_3$, $Sn2048_4$, $Sn2048_5$, $Sn2048_6$, $Sn2048_7$, and $Sn2048_8$, refer to description of embodiments.

According to a third aspect, this application provides a data transmission apparatus, including a unit configured to perform the method according to any one of the first aspect or the possible implementations of the first aspect.

According to a fourth aspect, this application provides a data transmission apparatus, including a unit configured to perform the method according to any one of the second aspect or the possible implementations of the second aspect.

According to a fifth aspect, this application provides a data transmission apparatus, including a processor and a transceiver internally communicating with the processor.

The processor is configured to generate a physical layer protocol data unit PPDU. The PPDU includes a training field, and the training field includes a sequence used for target sensing.

The transceiver is configured to send the physical layer protocol data unit PPDU.

According to a sixth aspect, this application provides a data transmission apparatus, including a processor and a transceiver internally communicating with the processor.

The transceiver is configured to receive a physical layer protocol data unit PPDU. The PPDU includes a training field, and the training field includes a sequence used for target sensing.

The processor is configured to perform target sensing based on the sequence used for target sensing.

According to a seventh aspect, this application provides a data transmission apparatus, including a processing circuit and an output interface internally communicating with the processing circuit.

The processing circuit is configured to generate a physical layer protocol data unit PPDU. The PPDU includes a training field, and the training field includes a sequence used for target sensing.

The output interface is configured to send the PPDU.

According to an eighth aspect, this application provides a data transmission apparatus, including a processing circuit and an input interface internally communicating with the processing circuit.

The input interface is configured to receive a physical layer protocol data unit PPDU. The PPDU includes a training field, and the training field includes a sequence used for target sensing.

The processing circuit is configured to perform target sensing based on the sequence used for target sensing.

According to a ninth aspect, this application provides a computer-readable storage medium, configured to store a computer program. The computer program includes instructions used to perform the method according to any one of the first aspect, the second aspect, or the possible implementations of the first aspect and the second aspect.

According to a tenth aspect, this application provides a computer program, including instructions used to perform the method according to any one of the first aspect, the second aspect, or the possible implementations of the first aspect and the second aspect.

In this application, a sequence in a sequence set is redesigned. The sequence needs to meet that energy of an auto-ambiguity function is minimum in a local range, and energy of a cross-ambiguity function is minimum in the local range. Based on this, the sequence generated in this application can be well sensed in an existing high frequency standard, and has positive effect on improving sensing performance.

These aspects and another aspect of this application will be clearer and easier to understand in descriptions of the following (a plurality of) embodiments.

**BRIEF DESCRIPTION OF DRAWINGS**

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference signs is also the same. The specific accompanying drawings are described as follows:

FIG. 1 is a schematic flowchart of a data transmission method according to an embodiment of this application;
FIG. 2 is a schematic diagram of energy of a sequence having an ideal local ambiguity function according to an embodiment of this application;
FIG. 3 is a typical frame structure of 802.11ad according to an embodiment of this application;
FIG. 4 is a typical frame structure of 802.11ay according to an embodiment of this application;
FIG. 5 is a schematic flowchart of a sequence set generation method according to an embodiment of this application;
FIG. 6 is a specific schematic flowchart of iteratively updating a sequence set by using a coordinate descent algorithm according to an embodiment of this application;
FIG. 7 is an execution flowchart of a specific implementation of a sequence set generation method according to an embodiment of this application;
FIG. 8 is a flowchart of a specific implementation of iteratively updating a sequence set by using a coordinate descent algorithm in a sequence set generation method according to an embodiment of this application;
FIG. 9 is an effect verification diagram of a sequence set generated by using a sequence set generation method according to an embodiment of this application;
FIG. 10 is a schematic diagram of a structure of a data transmission apparatus applied to a transmit device according to an embodiment of this application; and
FIG. 11 is a schematic diagram of a structure of a data transmission apparatus applied to a receive device according to an embodiment of this application.

**DESCRIPTION OF EMBODIMENTS**

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that the embodiments of this application described herein can be implemented in an order other than an order illustrated or described herein.

In the following descriptions, involved reference numerals such as S 110 and S 120 that indicate steps do not necessarily indicate that the steps are to be performed based on the order, and consecutive steps may be transposed if allowed, or may be performed simultaneously.

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are merely for the purpose of describing embodiments of this application, but are not intended to limit this application.

To accurately describe technical content in this application and accurately understand this application, the following explanations, descriptions, or definitions are first provided for terms used in this specification before specific implementations are described.

Ambiguity function: indicates a two-dimensional correlation of a sequence, and specifically indicates a correlation between the sequence and a sequence after the sequence is affected by a delay and a Doppler shift. For a sequence set, there are two types of ambiguity functions: auto-ambiguity function and cross-ambiguity function. The auto-ambiguity function is a correlation function between a sequence and itself, and the cross-ambiguity function is a correlation function between a sequence and another sequence.

Simulated annealing (SA, Simulated Annealing): A simulated annealing algorithm is based on a solid annealing principle. A solid is heated to a high level and then gradually cooled. When the solid is heated, particles inside the solid become disordered and internal energy increases. When the solid is gradually cooled, the particles gradually become orderly, reach an equilibrium state at each temperature, and finally, reach a ground state at room temperature. The internal energy is minimized. According to a Metropolis criterion, a probability that a particle tends to reach an equilibrium state at a temperature T is exp(-$\Delta$E/(kT)), where E is internal energy at the temperature T, $\Delta$E is a change amount, and k is a Boltzmann (Boltzmann) constant. Solid annealing is used to simulate a combinatorial optimization problem. Internal energy E is simulated as a target function value f, and the temperature T evolves into a control parameter t. In other words, a simulated annealing algorithm for solving the combinatorial optimization problem is obtained. Starting from an initial solution i and an initial value t of the control parameter, iteration of "generating a new solution - computing a target function difference - accepting or discarding" is repeated for a current solution, and the t value is gradually degraded. At the end of the algorithm, the current solution is an approximate optimal solution. This is a heuristic random search process based on a Monte Carlo iterative solution. Control of an annealing process includes the initial value t of the control parameter, an attenuation factor $\Delta$t of the initial value t of the control parameter, a quantity W of iterations for each t value, and a stop condition S.

Coordinate descent (CD, Coordinate Descent): A coordinate descent algorithm is a non-gradient optimization algorithm. In each iteration, the algorithm performs a one-dimensional search at a current point in a coordinate direction to obtain a local minimum value of a function. Different coordinate directions are cyclically used throughout the process.

Unit modulus sequence: indicates a sequence in which a modulus length of each element is 1.

A multi-variable sequence is a sequence in which a letter set of each element value is not less than 2. A binary sequence is a sequence in which a letter set of each element value is 2, and is generally {-1, 1} or {0, 1}. A quaternary sequence is a sequence in which a letter set of each element value is 4. Generally, the sequence is { 1, -1, i, -i}, where i is an imaginary unit root.

Sequence set: indicates a sequence set including a plurality of single sequences.

Letter set: indicates a set of values of an element.

This application provides a data transmission method. The data transmission method may be applied to an existing high frequency band standard to perform target sensing, and can improve sensing performance.

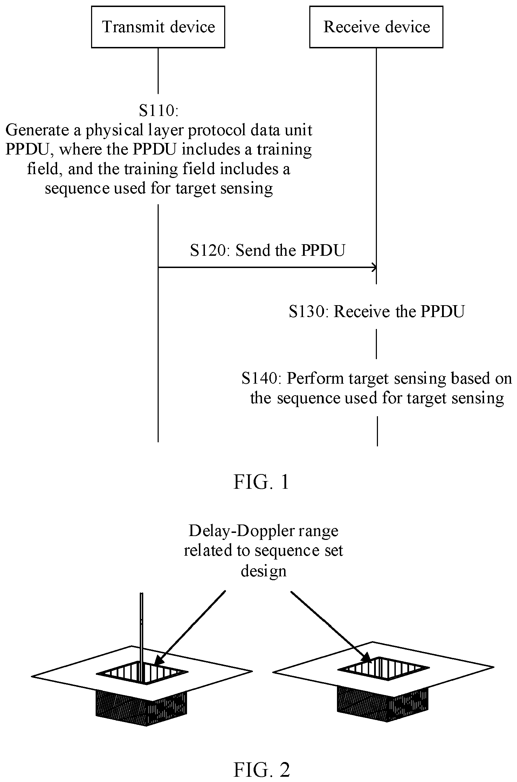

The following describes in detail a data transmission method provided in an embodiment of this application with reference to the accompanying drawings. Specifically, as shown in FIG. 1, the method may include the following steps S110 to S130.

S110: The transmit device generates a physical layer protocol data unit PPDU, where the PPDU includes a training field, and the training field includes a sequence used for target sensing.

In this embodiment, a design rule of the sequence included in the training field is as follows:

The design rule of the sequence may be: enabling an auto-ambiguity function of the sequence to have minimum energy in a local range and a cross-ambiguity function to have minimum energy in the local range. Specifically, in an ambiguity function theory, there is no ideal ambiguity function sequence in an entire delay-Doppler shift range. However, during actual application of a target sensing technology, it only needs to be considered that energy of a side lobe of an auto-ambiguity function of a sequence is in a push pin shape in a local delay-Doppler shift range, and energy of a side lobe of a cross-ambiguity function of the sequence is close to 0 in the local delay-Doppler shift range. A schematic diagram is shown in FIG. 2. Therefore, the sequence included in the training field in this embodiment is designed by using this as one of design rules. In addition, an application range in an actual application scenario in the field of target sensing technologies and a speed of 1.76 Gbps of a single carrier physical layer in the existing high frequency standard is considered. The local range in the foregoing design rule may be configured to ±128. The local range corresponds to ±21.82 meters in the actual scenario. For auto-receiving and auto-sending, the local range corresponds to ±10.91 meters in the actual scenario. A value of the local range may meet the application scenario in the existing standard related to high frequency. Based on the foregoing design rule, a sequence having a good local ambiguity function may be generated, and target sensing is performed by using the sequence, to improve precision of target sensing.

In an embodiment, the sequence includes at least one of eight sequences. When a length of the sequence is 256 bits, the eight sequences include: $Sn256_1$, $Sn256_2$, $Sn256_3$, $Sn256_4$, $Sn256_5$, $Sn256_6$, $Sn256_7$, and $Sn256_8$. In an embodiment, $Sn256_1$ may be as follows: $Sn256_1$ = [-1, 1, -1, -1, -1, 1, -1, 1, -1, -1, -1, -1, -1, -1, 1, -1, -1, -1, -1, -1, -1, 1, -1, -1, 1, 1, -1, 1, -1, 1, -1, 1, -1, 1, 1, 1, -1, 1, -1, 1, -1, -1, 1, 1, 1, -1, -1, 1, -1, -1, -1, -1, 1, -1, 1, 1, -1, 1, 1, -1, -1, 1, -1, 1, -1, -1, -1, 1, 1, 1, 1, 1, 1, 1, 1, -1, -1, -1, 1, 1, -1, 1, -1, 1, 1, -1, -1, -1, -1, -1, 1, 1, 1, 1, 1, 1, -1, 1, -1, 1, 1, -1, -1, -1, -1, -1, 1, -1, 1, 1, -1, 1, 1, 1, -1, 1, -1, 1, -1, -1, 1, -1, 1, -1, -1, 1, 1, 1, 1, -1, -1, 1, -1, 1, 1, 1, 1, -1, 1, -1, 1, 1, 1, 1, 1, -1, 1, 1, 1, 1, 1, -1, 1, 1, -1, -1, 1, -1, 1, -1, 1, -1, 1, -1, -1, -1, 1, -1, 1, -1, 1, 1, -1, -1, -1, 1, 1, -1, 1, 1, 1, 1, -1, 1, -1, 1, 1, -1, 1, 1, -1, 1, -1, 1, 1, 1, -1, -1, -1, -1, -1, -1, -1, -1, 1, 1, 1, -1, -1, 1, -1, 1, -1, -1, 1, 1, 1, 1, -1, -1, -1, -1, -1, 1, -1, 1, -1, -1, 1, 1, 1, 1, -1, 1, 1, -1, -1, 1, -1, -1, -1, 1, -1, 1, 1, -1, 1, 1, -1, 1, -1, 1, 1].

In an embodiment, $Sn256_2$ may be as follows: $Sn256_2$ = [-1, -1, -1, 1, -1, 1, -1, -1, -1, 1, -1, 1, 1, -1, 1, -1, -1, 1, -1, 1, 1, 1, 1, -1, 1, 1, 1, 1, -1, -1, 1, -1, -1, -1, -1, 1, -1, -1, 1, -1, 1, -1, 1, -1, 1, 1, 1, 1, -1, 1, 1, -1, 1, 1, 1, -1, 1, 1, 1, -1, 1, -1, 1, 1, -1, 1, 1, -1, 1, 1, 1, 1, -1, -1, -1, -1, 1, 1, -1, 1, -1, -1, -1, -1, -1, -1, -1, 1, 1, 1, -1, 1, -1, -1, -1, -1, -1, -1, -1, -1, 1, -1, -1, 1, 1, -1, 1, 1, -1, -1, -1, 1, 1, -1, 1, -1, 1, 1, -1, 1, 1, 1, -1, 1, -1, -1, -1, 1, 1, -1, -1, -1, 1, -1, 1, 1, 1, -1, 1, -1, 1, 1, 1, -1, -1, -1, -1, 1, -1, -1, 1, 1, 1, -1, -1, -1, 1, -1, 1, -1, 1, -1, 1, 1, 1, -1, -1, -1, -1, 1, -1, -1, -1, -1, 1, 1, 1, 1, -1, 1, 1, -1, 1, -1, 1, -1, 1, -1, 1, -1, -1, -1, -1, 1, -1, -1, 1, -1, -1, -1, -1, -1, 1, -1, 1, -1, 1, -1, -1, 1, 1, -1, -1, -1, -1, 1, 1, 1, 1, 1, 1, 1, 1, 1, -1, -1, 1, 1, -1, 1, 1, 1, -1, 1, 1, 1, -1, -1, 1, -1, 1, -1, -1, 1, -1, -1, -1, 1, -1, 1, 1].

In an embodiment, $Sn256_3$ may be as follows: $Sn256_3$ = [-1, 1, 1, -1, 1, 1, -1, 1, 1, 1, 1, 1, -1, -1, 1, -1, 1, -1, -1, 1, -1, 1, -1, -1, -1, 1, 1, 1, 1, -1, -1, 1, -1, 1, 1, 1, 1, -1, -1, 1, 1, -1, 1, -1, 1, 1, 1, -1, -1, 1, 1, -1, 1, -1, -1, -1, -1, 1, -1, -1, -1, 1, -1, -1, -1, 1, -1, 1, 1, 1, -1, -1, -1, -1, -1, -1, 1, 1, -1, 1, 1, 1, 1, -1, -1, 1, -1, 1, 1, -1, -1, -1, -1, 1, -1, -1, 1, -1, -1, 1, 1, -1, 1, -1, -1, 1, -1, -1, 1, 1, -1, 1, -1, -1, 1, -1, -1, -1, 1, -1, -1, -1, -1, 1, 1, -1, 1, -1, 1, 1, 1, -1, 1, -1, 1, 1, 1, -1, 1, 1, 1, -1, -1, -1, -1, 1, 1, -1, 1, -1, 1, 1, 1, -1, 1, -1, -1, -1, 1, 1, 1, -1, -1, 1, -1, -1, 1, 1, 1, -1, 1, -1, 1, 1, 1, -1, -1, -1, -1, -1, 1, -1, 1, -1, -1, 1, 1, -1, -1, -1, -1, -1, -1, 1, 1, 1, 1, 1, 1, -1, -1, 1, -1, -1, -1, 1, 1, -1, 1, -1, -1, 1, 1, 1, 1, -1, 1, 1, 1, -1, 1, 1, 1, -1, -1, 1, 1, 1, -1, 1, 1, -1, -1, 1, -1, 1].

In an embodiment, $Sn256_4$ may be as follows: $Sn256_4$ = [-1, -1, -1, -1, -1, 1, -1, 1, 1, -1, -1, 1, 1, 1, 1, -1, 1, 1, 1, 1, 1, -1, -1, -1, 1, -1, 1, 1, 1, -1, 1, -1, -1, -1, 1, 1, 1, -1, 1, 1, -1, -1, -1, -1, 1, -1, 1, 1, -1, -1, 1, 1, 1, 1, 1, 1, -1, -1, -1, -1, 1, -1, -1, -1, -1, 1, 1, 1, -1, -1, 1, 1, 1, -1, -1, 1, 1, 1, -1, -1, 1, 1, 1, -1, -1, -1, 1, -1, 1, 1, -1, -1, 1, 1, 1, -1, 1, -1, -1, -1, 1, -1, 1, -1, -1, 1, -1, -1, -1, 1, -1, -1, -1, 1, 1, -1, -1, -1, -1, -1, 1, -1, 1, -1, -1, -1, 1, 1, 1, 1, 1, -1, 1, -1, -1, 1, 1, -1, -1, -1, -1, 1, -1, -1, -1, -1, -1, 1, 1, 1, -1, 1, -1, 1, -1, 1, 1, -1, -1, -1, -1, 1, -1, 1, -1, 1, -1, -1, -1, -1, -1, 1, -1, 1, 1, 1, 1, -1, 1, -1, -1, -1, 1, 1, 1, 1, -1, -1, 1, 1, -1, -1, 1, -1, -1, 1, 1, -1, -1, -1, -1, -1, 1, 1, -1, 1, 1, 1, -1, -1, 1, 1, -1, -1, 1, -1, -1, 1, 1, -1, -1, -1, -1, -1, 1, 1, -1, 1, 1, -1, 1, -1, 1, -1, 1, 1, -1, 1, 1, 1, -1, 1, -1, 1, 1, -1, 1, 1, 1, -1, -1, 1, 1, 1, 1].

In an embodiment, $Sn256_5$ may be as follows: $Sn256_5$ = [1, -1, 1, -1, 1, 1, -1, -1, -1, -1, 1, 1, -1, 1, -1, 1, 1, -1, 1, -1, 1, -1, 1, 1, 1, 1, -1, -1, 1, 1, -1, -1, 1, -1, 1, -1, 1, -1, -1, 1, 1, 1, 1, -1, -1, 1, 1, 1, -1, 1, 1, 1, -1, 1, 1, -1, 1, 1, 1, -1, -1, -1, -1, -1, 1, 1, 1, 1, -1, -1, 1, 1, -1, -1, 1, 1, -1, 1, 1, -1, -1, 1, -1, -1, 1, 1, 1, 1, -1, -1, -1, 1, -1, -1, 1, -1, -1, 1, 1, 1, -1, 1, 1, 1, -1, 1, 1, -1, 1, 1, 1, 1, -1, -1, 1, 1, 1, 1, -1, -1, -1, 1, -1, 1, -1, -1, -1, 1, 1, -1, 1, 1, 1, -1, 1, -1, 1, -1, -1, 1, -1, 1, -1, 1, -1, -1, -1, -1, 1, 1, -1, -1, 1, 1, -1, -1, 1, -1, -1, 1, 1, -1, 1, 1, 1, -1, -1, -1, -1, -1, 1, 1, -1, -1, 1, 1, 1, -1, -1, 1, -1, -1, 1, 1, -1, 1, 1, -1, -1, -1, -1, 1, 1, 1, -1, 1, 1, -1, -1, -1, 1, -1, -1, -1, 1, -1, -1, 1, -1, -1, -1, -1, 1, 1, -1, -1, -1, -1, -1, 1, 1, 1, -1].

In an embodiment, $Sn256_6$ may be as follows: $Sn256_6$ = [1, 1, -1, -1, 1, 1, 1, 1, -1, -1, 1, 1, -1, -1, -1, -1, -1, -1, 1, -1, -1, -1, 1, -1, -1, -1, -1, -1, -1, -1, 1, -1, 1, -1, -1, 1, 1, 1, -1, 1, -1, 1, -1, 1, 1, -1, 1, -1, 1, -1, 1, 1, -1, -1, 1, 1, -1, 1, -1, -1, -1, 1, 1, 1, 1, 1, -1, -1, -1, -1, -1, -1, -1, 1, 1, -1, -1, -1, 1, 1, 1, 1, 1, -1, -1, -1, -1, -1, -1, -1, -1, 1, -1, -1, 1, 1, 1, 1, -1, 1, -1, -1, 1, -1, -1, -1, 1, -1, -1, -1, 1, 1, 1, -1, 1, -1, 1, -1, -1, 1, 1, 1, 1, 1, -1, 1, 1, -1, 1, 1, -1, -1, 1, 1, 1, 1, -1, -1, 1, 1, 1, 1, -1, 1, -1, -1, 1, 1, 1, -1, 1, -1, -1, 1, 1, 1, 1, 1, 1, 1, 1, -1, 1, 1, 1, 1, 1, 1, 1, -1, 1, -1, 1, 1, 1, 1, -1, 1, -1, -1, 1, -1, -1, 1, 1, 1, 1, 1, 1, -1, -1, -1, 1, 1, 1, 1, 1, -1, 1, 1, -1, -1, -1, -1, -1, 1, 1, 1, 1, 1, 1, 1, 1, -1, 1, 1, -1, -1, -1, -1, -1, 1, -1, 1, 1, -1, 1, 1, 1, -1, 1, 1, 1, -1, -1, 1, -1, 1, -1, 1, 1, -1].

In an embodiment, $Sn256_7$ may be as follows: $Sn256_7$ = [-1, -1, 1, 1, 1, 1, -1, -1, 1, 1, 1, -1, -1, 1, 1, 1, -1, -1, 1, 1, -1, -1, -1, 1, 1, 1, 1, 1, -1, 1, -1, 1, 1, 1, 1, -1, -1, 1, -1, 1, 1, 1, -1, 1, 1, 1, -1, -1, -1, -1, -1, -1, -1, -1, -1, -1, 1, -1, -1, 1, -1, -1, 1, -1, 1, 1, -1, -1, -1, -1, 1, 1, 1, -1, -1, 1, -1, -1, 1, 1, -1, 1, 1, -1, 1, -1, -1, 1, -1, 1, 1, -1, 1, 1, -1, 1, 1, -1, 1, 1, -1, -1, -1, -1, 1, 1, 1, 1, 1, -1, -1, 1, 1, -1, -1, 1, 1, -1, -1, 1, -1, 1, 1, -1, 1, 1, -1, 1, 1, -1, 1, 1, -1, -1, -1, -1, -1, 1, 1, -1, 1, -1, -1, -1, 1, 1, -1, -1, 1, 1, 1, -1, -1, -1, -1, -1, 1, -1, 1, -1, -1, -1, -1, 1, 1, -1, 1, -1, 1, -1, 1, 1, 1, 1, 1, 1, 1, -1, 1, 1, -1, 1, 1, -1, 1, -1, -1, 1, 1, 1, 1, 1, -1, -1, 1, 1, -1, 1, 1, 1, 1, -1, 1, 1, -1, 1, -1, -1, -1, 1, -1, -1, 1, -1, -1, 1, 1, 1, -1, 1, 1, 1, -1, -1, 1, 1, -1, -1, 1, -1, 1, 1, -1, 1, 1, -1, 1, -1, 1, 1, -1, 1, -1, 1, -1, 1].

In an embodiment, $Sn256_8$ may be as follows: $Sn256_8$ = [1, 1, -1, 1, 1, 1, 1, -1, -1, 1, 1, -1, -1, -1, 1, 1, -1, -1, -1, 1, 1, 1, -1, 1, 1, 1, -1, 1, 1, 1, 1, -1, -1, 1, -1, 1, 1, 1, -1, -1, 1, 1, 1, -1, 1, -1, 1, 1, 1, 1, -1, -1, 1, 1, 1, -1, 1, -1, -1, 1, 1, 1, -1, -1, 1, -1, -1, 1, 1, -1, -1, 1, -1, -1, -1, -1, 1, 1, 1, 1, 1, 1, -1, -1, -1, -1, -1, 1, -1, -1, -1, 1, -1, 1, -1, -1, 1, 1, 1, -1, -1, -1, 1, 1, -1, -1, 1, 1, -1, 1, 1, -1, -1, 1, 1, -1, 1, -1, -1, 1, -1, -1, -1, 1, 1, -1, -1, -1, 1, 1, 1, -1, -1, -1, 1, -1, -1, -1, -1, 1, 1, -1, -1, -1, -1, 1, 1, 1, -1, -1, -1, 1, -1, -1, -1, -1, 1, -1, -1, -1, -1, 1, 1, -1, 1, -1, -1, -1, -1, 1, 1, -1, -1, -1, -1, -1, 1, -1, -1, -1, -1, 1, -1, 1, 1, -1, 1, 1, -1, 1, -1, -1, -1, 1, -1, -1, 1, -1, -1, -1, -1, 1, -1, -1, 1,

1, 1, 1, 1, 1, 1, 1, 1, -1, 1, -1, 1, -1, -1, -1, 1, 1, -1, 1, 1, 1, - 1, -1, 1, 1, -1, -1, 1, -1, -1, -1, 1, 1, -1].

In an embodiment, the sequence includes at least one of eight sequences. When a length of the sequence is 512, the eight sequences include: $Sn512_1$, $Sn512_2$, $Sn512_3$, $Sn512_4$, $Sn512_5$, $SnS12_6$, $Sn512_7$, and $Sn512_8$. In an embodiment, $Sn512_1$ may be as follows: $Sn512_1$ = [-1, -1, 1, -1, -1, -1, 1, 1, 1, -1, 1, 1, -1, -1, 1, 1, 1, -1, 1, 1, 1, -1, 1, 1, 1, -1, 1, 1, -1, 1, -1, -1, 1, -1, 1, -1, -1, 1, 1, 1, -1, 1, 1, 1, -1, 1, -1, 1, 1, 1, -1, -1, -1, -1, 1, -1, 1, 1, 1, 1, 1, -1,1,1,1,-1, -1, -1, -1, 1, 1, -1, -1, -1, -1, -1, -1, 1, 1, -1, -1, -1, -1, -1, -1, -1, -1, 1, 1, -1, 1, -1, -1, -1, -1, 1, -1, -1, -1, 1, -1, 1, 1, 1, 1, -1, -1, 1, -1, 1, 1, -1, -1, -1, 1, 1, 1, 1, -1, 1, -1, -1, -1, -1, 1, 1, 1, 1, -1, -1, -1, 1, -1, -1, -1, - 1, 1, 1, -1, 1, 1, 1, -1, 1, 1, -1, -1, -1, 1, -1, -1, 1, 1, -1, 1, 1, -1, -1, -1, -1, 1, 1, -1, -1, 1, -1, -1, -1, 1, 1, -1, -1, -1, 1, -1, -1, -1, 1, 1, 1, 1, 1, 1, 1, -1, 1, -1, -1, -1, 1, -1, -1, -1, -1, -1, -1, 1, 1, 1, 1, 1, 1, -1, 1, 1, 1, -1, - 1, 1, -1, -1, -1, -1, 1, -1, -1, -1, 1, -1, -1, -1, -1, 1, 1, -1, 1, -1, 1, -1, -1, -1, -1, 1, 1, -1, 1, -1, -1, -1, 1, - 1, 1, -1, 1, -1, -1, -1, 1, - 1, 1, 1, 1, 1, 1, -1, -1, 1, 1, 1, -1, 1, 1, -1, -1, -1, -1, 1, 1, 1, 1, - 1, -1, -1, -1, 1, 1, 1, -1, -1, -1, -1, 1, -1, 1, 1, 1, 1, 1, 1, 1, 1, 1, -1, 1, 1, -1, -1, -1, -1, 1, -1, -1, 1, 1, 1, 1, - 1, -1, -1, -1, 1, 1, 1, 1, -1, -1, -1, 1, -1, -1, 1, 1, 1, 1, -1, 1, 1, 1, -1, -1, -1, -1, -1, 1, -1, 1, 1, 1, 1, 1, -1, -1, -1, 1, -1, -1, -1, 1, 1, 1, -1, -1, -1, -1, 1, -1, 1, -1, 1, 1, -1, 1, 1, 1, -1, -1, -1, 1, 1, -1, 1, -1, 1, -1, -1, 1, -1, -1, -1, - 1, -1, -1, 1, 1, 1, 1, -1, 1, 1, -1, 1, 1, 1, 1, -1, 1, 1, 1, -1, 1, 1, 1, 1, -1, -1, 1, -1, 1, -1, 1, -1, -1, 1, -1, 1, 1, 1].

In an embodiment, $Sn512_2$ may be as follows: $Sn512_2$ = [-1, 1, -1, 1, -1, -1, 1, 1, 1, 1, -1, 1, 1, 1, 1, -1, -1, 1, 1, -1, 1, -1, -1, 1, 1, -1, 1, 1, 1, 1, -1, 1, 1, -1, -1, -1, 1, -1, -1, 1, -1, 1, -1, 1, 1, 1, -1, 1, -1, -1, 1, -1, 1, -1, -1, 1, 1, -1, 1, -1, -1, -1, -1, 1, -1, -1, -1, -1, 1, -1, -1, -1, -1, -1, 1, 1, 1, 1, -1, -1, -1, -1, -1, 1, 1, 1, 1, -1, -1, 1, -1, -1, -1, 1, -1, -1, 1, -1, 1, 1, -1, -1, -1, 1, 1, -1, 1, -1, 1, -1, -1, 1, 1, -1, -1, 1, 1, -1, -1, -1, 1, -1, 1, 1, -1, -1, -1, 1, -1, 1, 1, -1, -1, -1, -1, 1, -1, 1, 1, -1, -1, -1, -1, - 1, -1, -1, -1, 1, 1, -1, -1, 1, -1, 1, -1, -1, 1, -1, -1, -1, -1, -1, 1, 1, -1, 1, -1, 1, -1, 1, -1, -1, 1, -1, 1, -1, -1, 1, -1, -1, 1, 1, 1, 1, -1, 1, 1, 1, -1, -1, -1, 1, 1, -1, -1, -1, 1, 1, -1, 1, -1, 1, -1, 1, -1, 1, 1, 1, 1, 1, 1, 1, 1, -1, 1, -1, -1, -1, 1, 1, -1, 1, -1, 1, 1, 1, 1, -1, 1, 1, 1, -1, 1, 1, -1, 1, 1, 1, -1, -1, - 1, 1, 1, -1, -1, -1, -1, 1, 1, -1, 1, -1, -1, 1, 1, 1, 1, 1, -1, -1, -1, 1, 1, 1, 1, 1, -1, 1, 1, -1, -1, 1, 1, -1, 1, 1, -1, -1, -1, 1, -1, -1, 1, -1, 1, 1, -1, -1, -1, 1, -1, 1, 1, -1, 1, 1, -1, 1, 1, -1, 1, -1, 1, 1, 1, -1, -1, 1, -1, -1, -1, 1, -1, 1, -1, -1, -1, -1, -1, -1, 1, -1, -1, -1, -1, 1, -1, -1, -1, -1, 1, 1, 1, -1, -1, 1, -1, -1, 1, 1, 1, 1, -1, 1, 1, -1, 1, -1, 1, -1, -1, 1, 1, 1, -1, 1, 1, -1, -1, 1, 1, -1, 1, -1, -1, 1, -1, -1, - 1, -1, -1, -1, 1, 1, 1, 1, -1, -1].

In an embodiment, $Sn512_3$ may be as follows: $Sn512_3$ = [-1, -1, 1, -1, -1, 1, -1, 1, -1, 1, -1, 1, 1, 1, -1, -1, 1, 1, -1, 1, 1, -1, -1, -1, -1, 1, 1, 1, 1, -1, -1, 1, -1, -1, 1, -1, 1, -1, -1, 1, 1, 1, 1, -1, 1, -1, -1, -1, -1, -1, -1, 1, -1, 1, 1, -1, 1, 1, 1, 1, -1, -1, -1, -1, 1, -1, -1, -1, -1, -1, 1, 1, -1, -1, -1, 1, -1, -1, 1, -1, -1, -1, 1, -1, 1, 1, -1, -1, -1,-1, 1, 1, 1, -1, -1, -1, 1, -1, 1, -1, 1, -1, 1, 1, 1, -1, -1, -1, -1, 1, -1, -1, 1, 1, 1, -1, -1, -1, 1, -1, 1, -1, 1, -1, -1, -1, -1, -1,-1, 1, 1, 1, 1, -1, -1, 1, 1, -1, -1, 1, 1, 1, 1, 1, -1, -1, 1, 1, 1, -1, -1, 1, -1, -1, -1, 1, -1, -1, 1, 1, 1, 1, -1, -1, 1, -1, -1, -1, 1, 1, -1, 1, -1, -1, -1, -1, 1, 1, 1, -1, 1, 1, -1, 1, -1, -1, -1, -1, -1, -1,-1, -1, 1, -1, 1, 1, 1, -1, 1, -1, 1, 1, 1, 1, 1, 1, -1, 1, -1, 1, -1, 1, 1, 1, 1, 1, -1, -1, 1, -1, -1, -1, -1, -1, -1, 1, 1,-1, 1, 1, -1, 1, -1, 1, -1, 1, -1, 1, -1, 1, -1, 1, -1, -1, -1, -1, 1, 1, 1, -1, 1, -1, 1, 1, -1, -1, -1, 1, 1, 1, 1, -1, -1, -1, 1, 1, -1, -1, -1, 1, -1, 1, -1, -1, 1, 1, 1, -1, -1, 1, -1, -1, 1, -1, -1, 1, 1, 1, 1, 1, -1, -1, 1, -1, -1, 1, -1, -1, 1, -1, -1, 1, 1, 1, -1, 1, 1, 1, 1, -1, -1, -1, 1, -1, 1, -1, -1, 1, 1, 1, 1, 1, 1, 1, -1, 1, 1, -1, 1, -1, 1, -1, -1, -1, 1, 1, 1, 1, -1, -1,-1, -1, 1, 1, 1, -1, -1, -1, 1, 1, 1, -1, -1, 1, 1, 1, -1, -1, 1, 1, 1, -1, 1, 1, 1, -1, -1, -1, -1, 1, -1, 1, -1, 1, -1, 1, -1, -1, 1, -1, -1, 1, -1, 1, 1, 1, 1, -1, 1, 1, 1, -1, 1, 1, -1, 1, -1, -1, 1, -1, -1, 1, 1, 1, -1, 1, 1, 1, -1, -1, 1, -1, -1, -1, 1, 1, 1, 1, -1, 1, 1, -1, -1, -1, -1, 1, -1, -1, -1, 1, -1, -1, -1, -1, 1, -1, -1, -1, -1, 1, 1, 1, -1, -1, -1, -1, 1, 1, 1, 1, 1, 1, 1, -1,-1, -1, 1, 1, 1, -1, -1, -1, -1, -1].

In an embodiment, $Sn512_4$ may be as follows: $Sn512_4$ = [1, -1, 1, 1, -1, -1, 1, 1, 1, 1, 1, 1, -1, -1, 1, 1, -1, -1, 1, 1, -1, -1, -1, 1, 1, -1, -1, -1, -1, -1, -1, 1, -1, 1, -1, 1, 1, 1, -1, 1, 1, 1, 1, -1, 1, -1, 1, -1, -1, -1, -1, -1, 1, -1, 1, 1, -1, 1, 1, -1, -1, -1, 1, -1, 1, 1, -1, -1, -1, -1, -1, 1, 1, 1, 1, -1, 1, 1, 1, -1, -1, -1, -1, 1, -1, -1, 1, 1, 1, 1, -1, -1, -1, -1, 1, -1, -1, 1, 1, 1, 1, -1, -1,-1, 1, 1, -1, -1, -1, -1, 1, -1, -1, 1, -1, -1, 1, 1, -1, 1, 1, -1, 1, -1, 1, 1, 1, 1, -1, -1, 1,-1, -1, 1, 1, -1, 1, 1, 1, 1, -1, 1, 1, -1, -1, -1, 1, -1, -1, -1, -1, 1, 1, -1, 1, 1, 1, -1, 1, 1, 1, -1, -1, -1, -1, 1, -1, 1, -1, 1, -1, -1, -1, 1, -1, 1, 1, 1, 1, -1, 1, 1, 1, -1, 1, 1, -1, -1, 1, 1, 1, -1, 1, 1, -1, -1, -1, 1,-1, 1, 1, -1, 1, -1, -1, 1, 1, -1, 1, -1, -1, -1, -1, 1, 1, 1, -1, 1, -1, -1, -1, -1, 1, 1, 1, 1, 1, 1, -1, 1, 1, 1, 1, 1, 1, -1, -1, -1, -1, -1, 1, 1, -1, 1, 1, 1, -1, 1, 1, 1, -1, -1, 1, -1, -1, 1, 1, 1, 1, -1, 1, 1, 1, 1, 1, 1, -1, 1, 1, 1, 1, 1, -1, 1, 1, -1, -1, 1, 1, -1, 1, 1, -1, -1, -1, -1, -1, 1, 1, -1, 1, 1, 1, -1, 1, 1, 1, -1, 1, 1, 1, -1, -1, 1, -1, -1, -1, 1, -1, -1, 1, 1, 1, 1, -1, 1, 1, -1,-1, 1, -1, 1, 1, 1, -1, -1, -1, -1, -1, -1, 1, -1, -1, 1, 1, 1, 1, -1, 1, 1, 1, -1, 1, 1, 1, 1, -1, -1, -1, 1, -1, -1, -1, -1, -1, 1, 1, -1,-1, 1, -1, -1, 1, 1, 1, -1, 1, 1, 1, -1, 1, -1, -1, -1, -1, 1, -1, -1, 1, 1, 1, 1, -1, 1, 1, 1, -1, 1, -1, -1, 1, -1, -1, 1, 1, -1,-1, 1, 1, -1, 1, -1, 1, 1, 1, 1, -1, 1, 1, -1, -1, -1, 1, -1, -1, -1, -1, 1, 1, -1, -1, -1, -1, -1, -1, -1, 1, 1, -1, -1, -1, -1, 1, 1, -1, -1, -1, -1, 1, 1, -1, 1, 1, -1, 1, -1, 1, 1, -1, 1, 1, -1, 1, 1, -1, 1, 1, 1, -1, 1, 1, 1, 1, -1, -1, -1, 1, -1, -1, -1, 1, -1, 1, 1, 1, -1, 1, 1, 1, -1, 1, 1, -1, -1, -1, -1, 1, -1, 1, 1, -1, -1, 1, 1, -1, 1, 1, 1, 1, -1, -1, -1, -1, 1, -1, 1, 1, -1, 1, 1, 1].

In an embodiment, $Sn512_5$ may be as follows: $Sn512_5$ = [1, -1, 1, -1, -1, -1, 1, 1, 1, 1, 1, 1, 1, -1, -1, 1, 1, 1, 1, 1, 1, -1, -1, 1, -1, 1, -1, -1, 1, -1, 1, -1, -1, 1, -1, -1, -1, 1, -1, -1, 1, -1, 1, 1, 1, 1, 1, -1, -1, -1, 1, -1, 1, 1, -1, 1, 1, 1, 1, -1, -1,

-1, -1, -1, 1, -1, 1, -1, -1, -1, 1, 1, 1, 1, 1, 1, 1, -1, 1, -1, 1, 1, 1, -1, 1, 1, -1, -1, -1, -1, 1, 1, 1, 1, -1, 1, 1, -1, -1, 1, 1, -1, -1,
-1, -1, 1, -1, 1, 1, -1, 1, -1, 1, -1, -1, -1, -1, -1, -1, -1, 1, 1, 1, 1, -1, 1, 1, -1, 1, -1, -1, 1, 1, 1, 1, -1, -1, -1, 1, 1, -1, -1,
1, -1, 1, 1, -1, 1, -1, -1, 1, 1, 1, 1, -1, 1, -1, -1, 1, 1, 1, 1, -1, 1, 1, -1, -1, 1, 1, -1, -1, -1, -1, 1, 1, -1, 1, 1, -1, 1, 1, 1, 1,
1, -1, 1, 1, -1, 1, -1, -1, 1, -1, -1, -1, 1, 1, -1, 1, -1, 1, -1, 1, 1, 1, 1, -1, 1, 1, -1, 1, -1, -1, -1, -1, 1, 1, 1, 1, -1, 1, -1, 1, -1,
1, 1, 1, -1, 1, 1, -1, -1, -1, 1, -1, -1, -1, 1, -1, 1, 1, -1, 1, -1,-1, -1, 1, 1, -1, -1, -1, -1, 1, -1, 1, 1, 1, -1, -1, -1, -1, -1, -1, 1,
-1, 1, 1, 1, 1, -1, -1, 1, 1, -1, 1, -1, -1, -1, 1, 1, -1, 1, 1, 1, -1, 1, 1, -1, 1, 1, 1, 1, 1, 1, -1, 1, -1, 1, -1, 1, 1, 1, -1, 1, 1, -1, -1,
-1, -1, -1, -1, 1, 1, -1, -1, -1, -1, 1, 1, -1, 1, 1, -1, -1, 1, 1, 1, 1, 1, 1, 1, -1, -1, 1, -1, -1, -1, -1, 1, -1, -1, 1, -1, 1, -1, 1,
1, 1, -1, -1, 1, -1, 1, 1, -1, -1, 1, 1, 1, 1, -1, -1, 1, -1, 1, 1, -1, 1, 1, -1, 1, -1, -1, 1, -1, -1, -1, 1, 1, 1, 1, 1, -1, 1, 1, -1, -1, 1,
-1, 1, -1, -1, -1,-1, 1, -1, -1, 1, -1, 1, 1, -1, -1, -1, 1, -1, 1, -1, -1, 1, -1, -1, 1, 1, -1, -1, -1, -1, 1, -1, -1, -1, 1, -1, -1, 1, 1, 1, -1,
1,-1, 1, 1, 1, -1, 1, 1, 1, -1, 1, -1, -1, -1, 1, 1, -1, 1, -1, -1, 1, -1, 1, 1, -1, 1, 1, 1, 1, -1, 1, 1, -1, -1, -1, 1, -1, 1, 1, -1,-1, -1, 1,
-1, 1, -1, 1, -1, 1, 1, -1, 1, 1, 1, -1, -1, 1, -1, -1, 1, 1, 1, -1, 1, -1, -1, 1, 1, 1, -1, -1, -1, 1, 1, 1, 1, 1, -1, 1, -1, -1, 1].

In an embodiment, Sn512$_6$ may be as follows: Sn512$_6$ = [-1, 1, 1, -1, 1, 1, 1, -1, -1, 1, -1, -1, 1, -1, 1, 1, -1,-1,
-1, 1, 1, 1, -1, 1, 1, 1, -1, 1, -1, 1, 1, -1, -1, -1, -1, 1, -1, -1, 1, 1, -1, -1, -1, -1, 1, 1, 1, 1, 1, 1, -1, 1, -1, -1, 1, 1,-1, -1, -1, -1,
-1, 1, -1, 1, 1, -1, -1, -1, 1, -1, -1, -1, -1, -1, -1, 1, -1, 1, -1, -1, 1, -1, 1, -1, 1, -1, -1, -1, 1, 1, 1,-1, -1, -1, -1, 1, 1, -1, -1, 1,
-1, 1, 1, 1, -1, -1, 1, -1, -1, 1, -1, 1, -1, -1, -1, -1, 1, 1, -1, -1, -1, -1, -1, 1, -1, -1, 1, 1, 1, -1, 1, -1, -1, 1, 1, -1, -1, 1, 1, 1,
1, -1, -1, 1, -1, -1, 1, 1, -1, -1, 1, -1, -1, -1, -1, -1, 1, -1, 1, 1, -1, -1, 1, 1,-1, -1, -1, -1, 1, 1, 1, -1, 1, 1, 1, -1, 1, -1, -1, -1,
1, -1, 1, -1, -1, 1, 1, -1, 1, 1, -1, 1, -1, 1, -1, 1, -1, -1, 1, -1, 1, 1, 1, 1, 1, 1, 1, -1, 1, -1, 1, -1, -1, 1, 1, -1, -1, -1, 1, -1, 1, -1,
1, 1, 1, -1, 1, 1, 1, -1, 1, 1, -1, 1, -1, 1, -1, 1, 1, 1,-1, 1, 1, 1, 1, -1, 1, -1, -1, -1, 1, 1, 1, 1, 1, -1, -1, -1, 1, -1, -1, 1, 1, -1,
1, -1, -1, -1, 1, 1, -1, -1, 1, -1, -1, 1, 1, 1, 1, 1, -1, -1, -1, 1, -1, -1, 1, -1, 1, -1, -1, 1, -1, 1, 1, 1, 1, 1, -1, 1, 1, -1, 1, -1, 1,
1, -1, -1, 1, 1, -1, 1, 1, -1, -1, 1, 1, -1, 1, -1, -1, 1, 1, 1, -1, 1, 1, 1, -1, 1, 1, -1, -1, 1, 1, 1, 1, 1, 1, -1, -1, 1, 1, -1, -1,
-1, -1, 1, 1, -1, 1, -1,-1, 1, 1, 1, -1, 1, 1, 1, -1, -1, 1, 1, 1, -1, -1, -1, -1, 1, 1, -1, 1, 1, -1, 1, 1, 1, -1, 1, -1, -1, 1, 1, 1, 1, -1,
-1, -1, 1, -1, -1, 1, -1, 1, 1, 1, -1, -1, -1, 1, 1, -1, -1, 1, -1, 1, 1, 1, 1, -1, -1, 1, -1, 1, -1, 1, -1, 1, -1, 1, 1, 1, -1, -1, -1, 1, -1, 1,-
1, -1, 1, 1, 1, -1, -1, 1, -1, -1, 1, -1, -1, 1, -1, 1, -1, 1, 1, 1, 1, -1, -1, 1, -1, 1, -1, -1, -1, 1, 1, 1, -1, -1, 1, 1, -1,-1, -1, -1, -1,
-1, 1, -1, 1, 1, 1, -1, 1, 1, 1, -1, 1, 1, -1, -1, -1, -1, -1, 1, 1, 1, -1, -1, -1, -1, -1, 1, 1, -1, -1, 1, -1, -1, 1, -1, -1, -1, -1, 1].

In an embodiment, Sn512$_7$ may be as follows: Sn512$_7$ = [1, 1, -1, 1, -1, -1, 1, 1, 1, -1, -1, -1, 1, -1, -1, 1, -1, 1, -1, 1,
-1, -1, -1, 1, 1, -1, -1, 1, 1, 1, 1, -1, 1, 1, 1, -1, 1, 1, 1, -1, -1, -1, -1, -1, -1, -1, -1, 1, -1, -1, -1, 1, 1, 1, 1, -1, 1, -1, -1, -1, 1,
1, 1, 1, 1, -1, -1, -1, 1, -1, -1, -1, 1, -1, 1, -1, 1, -1, -1, 1, 1, 1, -1, 1, 1, -1, 1, -1, 1, 1, 1, 1, 1, -1, 1,-1, 1, 1, 1, -1, 1, -1, 1,
-1, 1, 1, 1, 1, -1, -1, -1, 1, 1, -1, -1, -1, -1, 1, 1, -1, 1, -1, 1, -1, -1, -1, -1, 1, 1, -1, -1, -1, -1, -1, -1, 1, 1, 1, 1, 1, -1,
-1, 1, 1, 1, 1, -1, 1, 1, 1, 1, 1, 1, -1, -1, 1, 1, -1, 1, 1, -1, 1, 1, -1, 1, 1, -1, 1, 1,-1, -1, 1, 1, 1, -1, 1, 1, -1, -1, 1, -1, 1, 1, 1,
1, 1, 1, 1, 1, 1, -1, 1, -1, -1, 1, -1, -1, 1, -1, -1, 1, -1, 1, 1, 1, -1, -1, 1,-1, -1, 1, -1, -1, 1, -1, -1, -1, 1, -1, 1, -1, -1, 1, -1, 1,
-1, -1, -1, 1, -1, -1, -1, 1, -1, -1, 1, -1, -1, 1, 1, -1, -1, -1,-1, 1, -1, -1, -1, 1, 1, -1, -1, -1, -1, 1, 1, 1, 1, -1, 1, 1, 1, -1, -1, 1, 1, 1,
-1, -1, -1, 1, 1, -1, -1, 1, 1, -1, 1, 1, 1, -1, -1, 1, 1, 1, 1, -1, -1, 1, -1, 1, -1, -1, -1, 1, 1, -1, -1, -1, -1, -1, 1, 1, -1, -1, -1, -1,
-1, 1, 1, 1, 1, 1, -1, -1, -1, 1, 1,-1, -1, 1, 1, 1, -1, 1, -1, -1, 1, -1, -1, -1, 1, -1, -1, 1, 1, -1, 1, 1, 1, 1, -1, -1, 1, 1, 1, 1, -1, -1,
-1, -1, -1, 1, 1, -1, -1, 1, -1, 1, -1, 1, 1, -1, -1, -1, -1, 1, 1, 1, 1, -1, -1, -1, 1, 1, 1, 1, 1, -1, 1, 1, -1, -1, -1, -1, 1, 1, 1,
1, -1, -1, 1, 1, 1, -1, 1, -1, 1, 1, 1, -1, 1, -1, -1, -1, 1, -1, 1, -1, 1, 1, -1, -1, -1, 1, -1, 1, -1, -1, -1, -1, -1, 1, 1, -1, 1, -1, 1, -1,-
1, 1, -1, -1, 1, -1, 1, -1, -1, 1, 1, -1, 1, -1, -1, 1, 1, -1, 1, 1, -1, 1, 1, -1, -1, 1, -1, -1, 1, 1, -1, 1, 1, 1, -1, 1, 1, 1, -1,
-1, 1, -1, -1, 1, -1, 1, -1, 1, 1, -1, 1, 1, 1, -1, 1, 1, -1, 1, 1, 1, 1, -1, 1, 1, 1, -1, 1, 1, 1, -1, -1, -1, -1, 1, 1, 1, 1, -1, -1, 1, 1].

In an embodiment, Sn512$_8$ may be as follows: Sn512$_8$ = [-1, -1, -1, -1, -1, 1, -1, 1, 1, -1, 1, 1, 1, -1, 1, -1, -1, 1,
-1, 1, 1, -1, 1, 1, 1, -1, 1, 1, -1, -1, 1, -1, -1, -1, 1, 1, 1, -1, -1, -1, 1, -1, 1, 1, 1, -1, 1, -1, 1, -1, 1, -1, 1, -1, 1, 1, 1, 1, -1,
-1, -1, 1, 1, 1, -1, 1, 1, -1, 1, -1, 1, -1, 1, -1, 1, -1, -1, 1, 1, 1, -1, -1, -1, 1, 1, 1, -1, -1, -1, 1, -1, -1, 1, 1, 1, 1, -1, 1, -1, 1,
1, 1, 1, -1, 1, -1, -1, 1, -1, 1, 1, -1, -1, -1, -1, -1, 1, -1, -1, 1, -1, -1, -1, -1, 1, -1, -1, 1, -1, -1, -1, -1, -1, -1, 1, -1, -1, -1,
-1, 1, 1, 1, 1, 1, 1, -1, 1, -1, -1, 1, 1, 1, -1, 1, -1, -1, 1, -1, -1, 1, 1, 1, 1, 1, 1,-1, -1, -1, 1, 1, 1, -1, 1, 1, 1, -1, -1, -1, 1, 1, -1,
-1, 1, -1, 1, -1, -1, 1, 1, 1, 1, 1, -1, 1, -1, -1, -1, -1, -1, -1, -1, 1, 1, -1, 1, -1, 1, 1, -1, 1, -1, 1, 1, 1, -1, 1, 1, 1, 1, -1, 1, 1,
1, -1, -1, -1, 1, 1, -1, -1, -1, 1, 1, 1, -1, 1, -1, -1, 1, 1, 1, 1, 1, 1, 1, -1, 1, 1, -1, -1, -1, 1, -1, 1, -1, -1, 1, 1, 1, -1, -1,
1, -1, 1, -1, 1, -1, 1, -1, 1, 1, 1, -1, -1, 1, -1, -1, -1, -1, 1, 1, 1, 1, -1, -1, -1, -1, -1, 1, -1, -1, 1, 1, 1, -1, -1, 1, 1, 1, -1, -1,
1, 1, 1, -1, 1, -1, -1, 1, 1, 1, 1, 1, -1, 1, -1, -1, -1, -1, -1, -1, 1, 1, -1, 1, -1, 1, 1, -1, 1, -1, 1, 1, 1, -1, 1, 1, 1, 1, -1, 1, 1,
1, -1, 1, -1, 1, -1, 1, -1, 1, -1, 1, 1, -1, -1, 1, -1, -1, -1, -1, 1, 1, 1, 1, -1, -1, -1, -1, -1, 1, -1, -1, 1, 1, 1, -1, -1, 1, 1, -1, -1,
1, 1, 1, -1, 1, -1, -1, -1, 1, 1, 1, -1, -1, 1, 1, 1, -1, -1, -1, -1, 1, -1, 1, 1, 1, -1, -1, 1, 1, 1, 1, 1, -1, -1, -1, -1, 1, -1, 1, 1, 1,
1, -1, 1, 1, 1, 1, 1, 1, -1, 1, -1, 1, 1, -1, 1, 1, -1, 1, -1, -1, 1, -1, 1, -1, 1, -1, -1, 1, 1, 1, 1, 1, 1, 1, 1, -1, 1, 1, 1, 1, -1, 1, 1, 1, -1,
-1, 1, 1, 1, 1, 1, 1,-1, 1, -1, -1, 1, 1, 1, 1, -1, -1, -1, -1, -1, -1, -1, -1, 1, 1, -1, -1, -1, -1, 1, -1, 1, -1, 1, -1, -1, -1, 1, -1,
-1, -1, 1, -1, 1, -1, -1, 1, 1, 1, 1, 1, 1, 1, 1, -1, 1, 1, -1, 1, -1, 1, 1, -1, -1, 1, 1, -1, -1, -1, 1, -1, -1, 1, 1, -1, 1, 1, -1, 1, 1,
-1, 1, -1, 1, 1, -1, 1, -1, -1, -1, -1, 1, 1, -1, -1, -1, -1, -1, 1, -1, 1, -1, 1, 1, 1, 1, -1, 1, 1, -1, -1, -1, 1, 1, 1, -1,-1, -1, 1, -1, -1].

In an embodiment, the sequence includes at least one of eight sequences. When a length of the sequence is 1024, the eight sequences include: Sn1024$_1$, Sn1024$_2$, Sn1024$_3$, Sn1024$_4$, Sn1024$_5$, Sn1024$_6$, Sn1024$_7$, and Sn1024$_8$. In an embodiment, Sn1024$_1$ may be as follows: Sn1024$_1$ = [1, -1, 1, 1, 1, -1, -1, -1, -1, 1, -1, 1, -1, 1, 1, -1, 1, -1, -1,
1, -1, 1, -1, -1, 1, -1, -1, -1, 1, -1, -1, 1, 1, 1, 1, 1, -1, 1, 1, 1, 1, -1, 1, 1, -1, -1, 1, 1, 1, 1, 1, 1, -1, -1, -1, -1, 1, 1, -1,
-1, -1, -1, -1, 1, -1, 1, 1, -1, -1, 1, 1, 1, -1, -1, 1, -1, -1, 1, 1, 1, -1, -1, -1, -1, 1, -1, 1, 1, -1, 1, -1, 1, -1, -1, 1, -1, -1, -1, -1,
-1, -1, 1, 1, -1, 1, -1, 1, -1, -1, -1, 1, -1, 1, -1, 1, 1, 1, 1, -1, -1, 1, 1, 1, -1, -1, -1, -1, 1, -1, 1, -1, 1, 1, -1, 1, 1, -1, -1, -1, -1,
1, -1, -1, -1, 1, -1, -1, -1, -1, 1, 1, 1, -1, 1, 1, -1, -1, 1, 1, -1, -1, -1, -1, 1, 1, -1, -1, -1, -1, 1, -1, -1, 1, 1, 1, 1, 1, -1, 1,
1, -1, 1, 1, 1, -1, 1, -1, -1, -1, 1, -1, 1, 1, 1, -1, -1, -1, -1, 1, -1, 1, 1, 1, 1, -1, -1, 1, -1, -1, 1, -1, 1, 1, -1, -1, 1, 1, 1, -1, 1,

-1, -1, -1, 1, -1, -1, -1, 1, -1, -1, 1, -1, 1, 1, -1, 1, -1, -1, 1, 1, -1, 1, -1, 1, -1, 1, -1, 1, -1, -1, -1, 1, -1, -1, -1, 1, 1, 1, -1, -1, -1, -1, 1, 1, -1, 1, 1, 1, -1, 1, 1, -1, -1, -1, -1, -1, 1, -1, 1, 1, 1, -1, 1, 1, -1, -1, -1, -1, 1, -1, 1, 1, 1, 1, -1, 1, -1, -1, -1, -1, -1, 1, 1, 1, - 1, -1, 1, -1, -1, 1, -1, -1, -1, 1, -1, 1, -1, -1, -1, -1, -1, -1, 1, 1, -1, -1, 1, 1, 1, -1, -1, -1, 1, -1, -1, -1, -1, -1, -1, - 1, 1, -1, -1, -1, 1, -1, 1, -1, -1, -1, -1, -1, -1, 1, 1, 1, -1, -1, 1, -1, -1, -1, 1, -1, -1, 1, 1, - 1, -1, 1, -1, 1, -1, -1, 1, 1, 1, 1, 1, 1, 1, 1, -1, 1, -1, -1, 1, 1, -1, 1, -1, 1, 1, 1, 1, -1, 1, -1, 1, 1, -1, 1, 1, -1, -1, 1, 1, 1, -1, -1, 1, -1, 1, -1, -1, 1, 1, -1, -1, -1, -1, 1, 1, 1, -1, -1, 1, 1, 1, -1, 1, -1, -1, -1, 1, -1, -1, 1, -1, 1, -1, 1, 1, 1, -1, -1, 1, 1, 1, -1, -1, -1, -1, 1, 1, 1, -1, 1, -1, 1, 1, -1, 1, -1, 1, 1, -1, -1, 1, 1, 1, -1, 1, -1, -1, -1, 1, -1, -1, 1, 1, - 1, -1, 1, -1, 1, -1, -1, -1, 1, -1, -1, 1, 1, 1, 1, 1, 1, 1, 1, 1, 1, 1, 1, -1, -1, 1, -1, -1, - 1, -1, 1, -1, -1, 1, -1, -1, -1, -1, 1, -1, -1, -1, 1, -1, -1, 1, -1, 1, 1, 1, -1, -1, -1, -1, -1, 1, -1, -1, 1, 1, 1, 1, -1, -1, -1, -1, -1, 1, -1, -1, 1, 1, 1, 1, -1, -1, -1, 1, 1, -1, -1, 1, -1, -1, 1, -1, 1, -1, -1, 1, -1, 1, -1, -1, 1, - 1, 1, -1, -1, 1, 1, 1, -1, 1, -1, -1, -1, -1, 1, -1, 1, 1, 1, -1, 1, 1, 1, -1, -1, 1, -1, -1, -1, -1, 1, 1, -1, 1, -1, 1, 1, 1, -1, -1, -1, -1, 1, 1, -1, 1, 1, 1, 1, -1, 1, 1, -1, -1, -1, -1, 1, 1, -1, 1, -1, 1, -1, -1, 1, 1, -1, 1, -1, -1, -1, -1, -1, -1, -1, 1, -1, 1, 1, 1, 1, -1, 1, 1, -1, 1, -1, 1, -1, 1, 1, -1, 1, -1, 1, -1, 1, -1, -1, -1, 1, 1, -1, -1, -1, -1, -1, -1, -1, 1, -1, -1, - 1,1,1,1,1].

In an embodiment, Sn1024$_2$ may be as follows: Sn1024$_2$ = [1, -1, -1, -1, 1, -1, 1, 1, 1, 1, 1, -1, -1, 1, 1, 1, 1, 1, -1, -1, -1, -1, 1, 1, -1, -1, 1, -1, 1, 1, 1, 1, 1, -1, -1, 1, -1, 1, 1, 1, -1, -1, 1, -1, -1, 1, -1, 1, 1, 1, -1, 1, 1, -1, 1, -1, 1, 1, -1, -1, -1, 1, -1, -1, -1, 1, -1, 1, -1, -1, -1, 1, 1, -1, -1, 1, 1, -1, -1, 1, -1, 1, 1, -1, 1, 1, -1, 1, -1, -1, 1, -1, -1, -1, 1, 1, 1, 1, -1, 1, -1, -1, 1, 1, 1, -1, 1, 1, 1, 1, -1, 1, 1, 1, 1, 1, -1, -1, -1, -1, 1, -1, -1, 1, -1, -1, -1, 1, -1, 1, -1, 1, 1, -1, -1, 1, 1, 1, 1, -1, -1, -1, -1, 1, -1, - 1, -1, -1, -1, -1, 1, -1, -1, 1, -1, -1, 1, 1, -1, 1, 1, -1, -1, 1, -1, 1, 1, 1, 1, 1, 1, 1, 1, -1, 1, -1, -1, 1, 1, 1, -1, -1, 1, 1, 1, 1, -1, -1, -1, 1, -1, 1, -1, -1, 1, -1, -1, -1, 1, 1, 1, -1, 1, 1, -1, -1, -1, -1, 1, -1, -1, 1, 1, 1, -1, 1, 1, 1, 1, 1, -1, 1, 1, 1, 1, -1, 1, 1, -1, -1, -1, 1, -1, 1, 1, -1, -1, 1, -1, 1, 1, -1, 1, 1, -1, -1, 1, -1, 1, 1, 1, 1, -1, -1, -1, -1, 1, -1, -1, -1, -1, 1, 1, 1, -1, 1, 1, -1, 1, 1, -1, 1, -1, 1, 1, 1, 1, - 1, -1, 1, 1, 1, -1, -1, 1, -1, -1, 1, -1, 1, 1, 1, 1, 1, -1, -1, 1, 1, 1, 1, -1, -1, 1, 1, 1, 1, -1, -1, 1, -1, 1, 1, 1, -1, 1, 1, -1, -1, 1, 1, 1, -1, 1, 1, 1, 1, -1, -1, -1, -1, -1, 1, 1, -1, -1, -1, -1, -1, 1, 1, - 1, 1, 1, 1, -1, -1, 1, -1, 1, 1, -1, -1, -1, 1, -1, -1, -1, -1, -1, 1, -1, 1, -1, 1, 1, -1, -1, 1, -1, 1, 1, -1, 1, 1, 1, 1, 1, -1, -1, -1, - 1, 1, 1, 1, -1, -1, -1, -1, -1, 1, 1, 1, 1, -1, -1, 1, -1, -1, 1, 1, 1, -1, -1, 1, -1, -1, 1, 1, 1, -1, 1, 1, 1, -1, -1, 1, -1, 1, -1, 1, 1, 1, 1, -1, 1, 1, 1, -1, -1, -1, -1, -1, 1, -1, -1, -1, -1, 1, 1, -1, - 1, -1, -1, -1, 1, -1, -1, -1, 1, 1, -1, 1, 1, 1, 1, -1, -1, -1, -1, -1, 1, 1, -1, 1, 1, -1, -1, -1, -1, 1, -1, -1, - 1, -1, -1, 1, -1, -1, -1, 1, -1, 1, 1, -1, -1, -1, 1, -1, 1, 1, 1, -1, -1, -1, 1, 1, -1, -1, -1, 1, -1, -1, - 1, 1, -1, -1, 1, 1, 1, 1, -1, -1, 1, -1, 1, 1, 1, 1, -1, -1, -1, -1, 1, -1, 1, 1, 1, 1, -1, 1, 1, 1, -1, -1, -1, 1, -1, 1, 1, 1, -1, 1, -1, 1, 1, 1, 1, -1, -1, -1, -1, 1, 1, -1, 1, 1, 1, -1, -1, 1, 1, 1, -1, 1, -1, -1, 1, 1, 1, 1, -1, -1, 1, 1, 1, -1, 1, 1, 1, 1, -1, -1, -1, -1, -1, 1, -1, -1, -1, -1, -1, 1, -1, -1, 1, 1, -1, 1, 1, 1, 1, -1, 1, 1, 1, -1, 1, 1, -1, 1, 1, 1, -1, 1, -1, 1, 1, 1, -1, -1, 1, 1, -1, - 1, -1, -1, -1, 1, 1, 1, 1, -1, 1, 1, -1, 1, 1, 1, 1, 1, -1, 1, 1, -1, -1, -1, 1, -1, -1, 1, 1, 1, -1, -1, -1, -1, -1, 1, -1, -1, -1, -1, 1, 1, 1, 1, -1, -1, 1, 1, -1, 1, 1, 1, 1, -1, -1, 1, 1, 1, -1, 1, -1, -1, 1, 1, -1, -1, -1, 1, -1, 1, 1, 1, 1, -1, 1, -1, 1, 1, 1, -1, 1, 1, -1, -1, -1, 1, 1, -1, -1, 1, 1, 1, -1, 1, 1, 1, 1, -1, -1, -1, -1, -1, -1, -1, -1, -1, 1, 1, 1, 1, -1, 1, 1, -1, -1, -1, 1, 1, 1, 1, 1, -1, -1].

In an embodiment, Sn1024$_3$ may be as follows: Sn1024$_3$ = [-1, -1, -1, -1, 1, -1, 1, -1, -1, -1, 1, 1, 1, 1, 1, 1, - 1, 1, 1, 1, -1, -1, -1, 1, 1, 1, 1, -1, 1, -1, 1, 1, -1, -1, 1, 1, -1, -1, 1, 1, -1, -1, -1, -1, 1, 1, 1, -1, -1, 1, 1, -1, -1, 1, -1, 1, 1, 1, 1, -1, 1, 1, -1, 1, -1, -1, -1, 1, 1, 1, -1, -1, 1, 1, 1, -1, -1, -1, -1, 1, -1, 1, 1, -1, 1, 1, 1, -1, -1, -1, 1, 1, 1, -1, 1, -1, -1, -1, 1, 1, 1, -1, 1, -1, 1, 1, -1, -1, 1, -1, 1, 1, 1, 1, -1, -1, 1, 1, 1, -1, -1, -1, 1, 1, 1, 1, -1, -1, 1, 1, 1, 1, -1, -1, -1, 1, 1, 1, 1, -1, 1, 1, -1, 1, 1, 1, 1, 1, 1, -1, 1, 1, 1, 1, -1, 1, 1, -1, 1, 1, -1, -1, -1, -1, -1, 1, 1, 1, 1, -1, -1, 1, -1, -1, 1, -1, -1, 1, 1, 1, 1, -1, -1, -1, -1, -1, 1, 1, 1, -1, 1, 1, 1, 1, 1, 1, -1, -1, -1, 1, -1, -1, 1, -1, 1, 1, -1, 1, 1, -1, -1, 1, -1, 1, 1, -1, 1, 1, -1, -1, -1, -1, 1, 1, -1, 1, -1, 1, -1, 1, 1, 1, 1, -1, 1, 1, 1, -1, -1, -1, 1, -1, -1, -1, -1, -1, 1, 1, 1, -1, 1, 1, 1, 1, -1, -1, 1, -1, -1, -1, -1, -1, -1, 1, -1, -1, -1, 1, 1, -1, 1, 1, -1, -1, -1, 1, -1, 1, -1, -1, -1, 1, 1, 1, -1, -1, 1, 1, -1, -1, -1, 1, -1, -1, 1, 1, -1, 1, 1, 1, 1, -1, -1, -1, 1, -1, 1, 1, 1, 1, -1, 1, -1, 1, 1, 1, -1, -1, -1, 1, 1, -1, -1, -1, 1, -1, 1, -1, -1, -1, 1, 1, 1, 1, -1, -1, -1, 1, -1, -1, 1, -1, 1, 1, 1, -1, -1, 1, 1, 1, -1, 1, 1, 1, -1, -1, -1, 1, -1, 1, 1, 1, -1, 1, 1, 1, 1, -1, -1, -1, 1, -1, 1, 1, -1, -1, 1, 1, -1, -1, -1, -1, 1, -1, -1, -1, -1, -1, 1, -1, 1, 1, 1, 1, -1, 1, 1, -1, -1, -1, -1, 1, 1, 1, 1, 1, -1, -1, 1, -1, -1, 1, -1, -1, 1, -1, 1, -1, -1, -1, -1, -1, -1, 1, -1, -1, 1, 1, -1, -1, 1, 1, 1, 1, -1, 1, 1, 1, 1, -1, -1, 1, -1, 1, 1, 1, 1, -1, -1, 1, 1, 1, -1, 1, 1, -1, -1, 1, 1, -1, -1, 1, -1, 1, 1, -1, 1, 1, -1, -1, 1, -1, -1, -1, 1, 1, 1, 1, -1, 1, 1, -1, -1, -1, -1,

-1, -1, 1, 1, -1, 1, 1, 1, -1, -1, 1, 1, -1, 1, -1, -1, 1, 1, 1, 1, -1, -1, 1, -1, 1, 1, -1, -1, 1, 1, 1, -1, -1, -1, -1, 1, 1, -1, -1, 1, 1,
1, 1, 1, 1, -1, -1, -1, 1, 1, -1, -1, -1, -1, -1, 1, 1, -1, 1, -1, -1, 1, 1, -1, 1, 1, -1, -1, -1, 1, -1, 1, 1, 1, 1, -1, -1, -1, 1, 1, 1, -1,
1, 1, 1, 1, -1, 1, 1, -1, -1, 1, 1, -1, -1, -1, -1, -1, 1, -1, -1, 1, 1, 1, -1, -1, 1, -1, -1, -1, -1, 1, 1, 1, 1, -1, 1, -1, 1, 1, 1, -1, 1,
-1, 1, 1, 1, -1, -1, 1, -1, 1, -1, 1, -1, 1, 1, -1, 1, -1, 1, 1, -1, 1, 1, -1, -1, 1, 1, 1, -1, 1, 1, 1, 1, 1, -1, -1, -1, 1, 1, 1, 1, -1, 1,
-1, 1, 1, -1, 1, 1, -1, -1, -1, 1, 1, 1, 1, -1, -1, -1, 1, -1, 1, -1, -1, -1, -1, -1, 1, -1, - 1, 1, -1, -1, 1, -1, -1, -1, 1, 1, 1, 1, -1, -1, 1,
1, -1, -1, -1, 1, -1, -1, 1, 1, 1, -1, -1, 1, -1, 1, -1, -1, 1, 1, -1, 1, 1, 1, -1, -1, -1, -1, 1, -1, 1, 1, -1, -1, -1, -1, -1, 1, 1, -1, -1,
-1, 1, 1, -1, 1, 1, 1, -1, 1, -1, 1, 1, -1, 1, 1, -1, 1, 1, 1, -1, -1, -1, -1, 1, -1, -1, -1, -1, -1, 1, -1, 1, 1, 1, 1, -1, -1, 1, -1, -1, -1,
-1, -1, 1, -1, 1, 1, -1, 1, 1, -1, -1, -1, -1, 1, -1, - 1, -1, 1, -1, 1, 1, 1, 1, -1, 1, -1, 1, 1, -1, -1, 1, 1, -1, 1, 1, -1, 1, 1, -1, 1, -1, 1, -1, 1, -1, 1, -1,
1, -1, 1, -1, -1, 1, -1, 1, 1, -1, 1, -1, 1, -1, -1, -1, 1, -1, 1, -1, -1, 1, -1, 1, 1, -1, -1, 1, -1, -1, -1, -1, -1, 1, -1, -1, 1, 1, 1, -1,
-1, -1, -1, 1, -1, 1, 1, 1, -1, 1, -1, -1, 1, 1, 1, 1, 1, 1, -1, 1, 1, 1, 1, -1, -1, -1, 1, 1, -1, 1, 1, 1, 1, 1, -1, -1, -1, 1, -1, -1, -1,
-1, -1, 1, -1, 1, -1, 1, 1, 1, 1, 1, 1, 1, 1, 1, -1, -1, 1, -1, -1, -1, -1, 1, 1, 1, 1, -1, 1, 1, -1, 1, 1, 1, 1, 1, 1, 1, -1, -1, 1, -1, -1,
1, 1, 1, -1, 1, 1, -1, 1, 1, 1, -1, 1, 1, 1, 1, 1, -1, -1, -1, 1, -1, -1, -1, 1, 1, -1, 1, -1, 1, 1, -1, -1, 1, 1, 1, 1, -1, -1, -1, 1, 1, -1,
-1, 1, -1, 1, -1, -1, 1, -1, -1, 1, -1, -1, 1, -1, -1, 1, 1, -1, -1, -1, -1, 1, -1, 1, 1, 1, -1, -1, -1, 1, 1, 1, 1, 1, -1, 1, -1, 1, -1, 1, -1,
-1, 1, 1, 1, 1, 1, 1, 1, -1, -1, -1, 1, 1, -1, 1, -1, 1, -1, 1, 1, 1, 1].

In an embodiment, $Sn1024_4$ may be as follows: $Sn1024_4$ = [1, 1, -1, -1, 1, -1, 1, -1, 1, -1, 1, -1, -1, -1, -1, -1,
-1, -1, -1, -1, -1, -1, -1, -1, 1, -1, 1, -1, 1, -1, 1, 1, 1, 1, 1, 1, -1, -1, 1, -1, 1, -1, 1, -1, 1, 1, 1, 1, -1, 1, -1, 1, 1, 1, -1, 1,
1, 1, 1, 1, -1, 1, -1, -1, 1, -1, -1, 1, -1, 1, 1, 1, 1, -1, -1, -1, 1, -1, 1, -1, -1, -1, 1, 1, 1, -1, 1, 1, 1, 1, -1, 1, 1, - 1, -1, 1, 1, -1, 1, 1,
-1, 1, -1, -1, 1, 1, 1, 1, 1, -1, 1, 1, 1, -1, 1, 1, 1, -1, 1, -1, -1, -1, 1, -1, 1, 1, -1, -1, 1, -1, 1, 1, 1, 1, 1, - 1, 1, 1, 1, 1, 1, -1, 1, -1, 1,
-1, -1, -1, 1, 1, 1, 1, -1, -1, -1, -1, 1, 1, -1, -1, 1, 1, 1, -1, -1, 1, -1, 1, 1, 1, 1, 1, 1, -1, - 1, -1, -1, -1, 1, -1, -1, 1, 1, -1, 1, -1,
-1, 1, 1, -1, -1, -1, 1, 1, -1, -1, -1, 1, -1, 1, 1, 1, 1, 1, -1, 1, 1, 1, 1, 1, -1, 1, 1, -1, -1, -1, 1, -1, -1, -1, -1, 1, 1, 1, 1, -1, 1, -1,
-1, 1, -1, 1, 1, -1, 1, -1, -1, -1, 1, -1, 1, 1, 1, -1, 1, -1, 1, -1, -1, 1, 1, 1, -1, 1, -1, -1, -1, 1, 1, -1, 1, 1, -1, 1, 1, -1, 1, -1, 1, -1,
-1, -1, -1, 1, 1, 1, 1, -1, -1, 1, 1, -1, 1, -1, -1, 1, -1, 1, 1, 1, -1, -1, -1, 1, 1, -1, 1, -1, -1, 1, -1, 1, -1, -1, -1, 1, 1, 1, 1, -1, 1,
1, -1, 1, -1, 1, -1, -1, 1, 1, -1, -1, 1, -1, -1, - 1, -1, 1, 1, -1, -1, -1, 1, -1, -1, 1, 1, -1, -1, 1, -1, 1, -1, -1, 1, 1, 1, 1, -1, 1, 1,
-1, 1, -1, 1, 1, 1, 1, -1, -1, 1, 1, 1, - 1, 1, 1, 1, 1, -1, -1, -1, 1, 1, 1, -1, 1, 1, -1, 1, 1, 1, 1, 1, -1, -1, -1, 1, -1, -1, -1, -1, 1, -1,
-1, 1, 1, 1, -1, -1, 1, -1, 1, -1, 1, 1, -1, -1, -1, 1, 1, 1, 1, 1, -1, -1, -1, -1, -1, -1, 1, -1, -1, 1, 1, 1, -1, 1, -1, 1, -1, 1, 1, 1, 1,
-1, -1, 1, 1, 1, 1, -1, -1, 1, 1, 1, -1, 1, -1, -1, -1, 1, -1, 1, -1, -1, -1, -1, -1, -1, 1, -1, 1, -1, 1, -1, 1, -1, -1, -1, 1, -1, 1, 1, 1,
-1, - 1, -1, 1, 1, -1, -1, -1, 1, 1, 1, 1, -1, 1, -1, -1, -1, 1, -1, -1, -1, 1, -1, 1, 1, 1, -1, 1, 1, 1, -1, -1, -1, -1, 1, 1, 1, -1, -1, - 1, -1,
-1, -1, -1, 1, -1, 1, -1, 1, 1, 1, -1, -1, 1, 1, 1, 1, 1, 1, 1, 1, 1, 1, -1, 1, 1, 1, 1, -1, -1, 1, 1, -1, 1, 1, -1, -1, 1, 1, 1, 1, -1, 1, -1,
-1, -1, 1, -1, 1, 1, -1, 1, -1, -1, 1, -1, -1, 1, -1, -1, -1, 1, -1, 1, 1, 1, 1, 1, -1, -1, -1, -1, 1, 1, -1, 1, 1, -1, 1, -1, -1, -1, 1, -1,
1, -1, 1, -1, 1, 1, -1, 1, -1, -1, -1, 1, -1, -1, 1, -1, 1, -1, 1, -1, 1, 1, -1, -1, 1, -1, -1, 1, -1, -1, 1, - 1, 1, 1, 1, -1, -1, 1, 1, 1, 1, -1, -1, -1, 1,
1, -1, -1, 1, -1, -1, -1, -1, -1, -1, -1, 1, -1, 1, 1, 1, -1, 1, 1, -1, 1, -1, 1, 1, - 1, 1, 1, 1, 1, -1, -1, -1, 1, 1, 1, 1, -1, -1, 1, 1, 1, -1,
-1, -1, 1, 1, 1, 1, -1, 1, 1, 1, -1, 1, 1, 1, -1, 1, -1, -1, -1, 1, -1, - 1, 1, -1, -1, -1, -1, 1, 1, 1, 1, -1, 1, 1, 1, 1, -1, -1, -1, -1, 1,
-1, -1, 1, 1, 1, 1, 1, 1, -1, 1, -1, 1, 1, -1, -1, -1, -1, 1, 1, -1, 1, -1, 1, -1, 1, -1, -1, -1, 1, 1, 1, -1, 1, -1, 1, 1, 1, -1, -1, -1,
1, 1, 1, -1, -1, 1, -1, 1, -1, 1, 1, 1, -1, 1, 1, -1, 1, 1, -1, -1, 1, 1, 1, -1, -1, 1, -1, 1, 1, -1, -1, -1, 1, 1, 1, -1, 1, 1, -1,
1, -1, -1, 1, -1, 1, 1, 1, -1, 1, -1, -1, 1, -1, 1, 1, -1, 1, -1, 1, 1, -1, 1, 1, 1, 1, -1, 1, 1, 1, 1, -1, 1, 1, -1, 1, -1, 1, 1, -1, -1, -1, 1,
1, -1, -1, 1, 1, 1, -1, -1, -1, -1, 1, 1, 1, -1, -1, -1, 1, 1, 1, -1, -1, -1, -1, -1, -1, -1, -1, -1, -1, 1, 1, 1, 1, 1, 1, -1, -1, 1,
1, -1, 1, -1, 1, - 1, 1, 1, 1, 1, 1, 1, -1, -1, 1, 1, 1, 1, -1, -1, -1, 1, 1, 1, -1, 1, -1, -1, -1, 1, 1, -1, -1, -1, 1, 1, -1, -1, 1, 1, 1, -1, 1, -1,
1, -1, 1, -1, -1, -1, 1, 1, -1, -1, 1, -1, -1, 1, 1, 1, 1, -1, 1, 1, 1, -1, 1, -1, -1, 1, 1, -1, -1, -1, 1, -1, -1, -1, 1, 1, -1, 1, - 1,
1, 1, -1, -1, 1, 1, 1, -1, 1, 1, -1, 1, 1, 1, 1, 1, 1, -1, 1, -1, -1, 1, 1, -1, -1, 1, 1, -1, -1, -1, 1, 1, 1, 1, -1, -1, -1, -1, - 1, -1, 1, 1,
1, 1, 1, 1, -1, 1, -1, 1, -1, -1, -1, 1, 1, 1, 1, 1, -1, 1, -1, -1, 1, -1]].

In an embodiment, $Sn1024_5$ may be as follows: $Sn1024_5$ = [-1, 1, 1, 1, -1, -1, -1, 1, 1, 1, -1, -1, 1, -1, -1, -1, -
1, -1, 1, 1, -1, -1, -1, 1, -1, -1, -1, 1, 1, 1, 1, -1, 1, 1, -1, -1, 1, -1, 1, 1, -1, -1, -1, -1, -1, 1, 1, -1, 1, 1, -1, 1,-1, -1, -1, -1,
1, -1, 1, 1, -1, 1, 1, -1, 1, -1, 1, -1, 1, 1, -1, -1, -1, 1, 1, -1, 1, -1, 1, -1, -1, -1, 1, -1, -1, 1, 1, -1, -1, 1, 1, 1, 1, -1, -1, -1, -1,
-1, 1, 1, -1, -1, 1, 1, 1, 1, -1, 1, -1, 1, 1, -1, -1, 1, -1, -1, -1, -1, -1, -1, 1, 1, 1, 1, -1, 1, 1, 1, -1, -1, 1, -1, -1, 1, -1, 1,
-1, 1, -1, -1, -1, -1, -1, -1, -1, 1, 1, 1, 1, -1, -1, -1, -1, -1, 1, 1, -1, -1, 1, 1, -1, - 1, -1, -1, -1, 1, -1, -1, 1, 1, -1, -1, -1, 1, -1,
1, 1, -1, -1, 1, -1, -1, 1, 1, 1, 1, 1, -1, -1, 1, 1, 1, -1, 1, -1, 1, 1, 1, 1, -1, 1, 1, 1, -1, 1, -1, 1, -1, 1, -1, -1, 1, 1, 1, -1, 1, 1,
-1, -1, -1, 1, 1, -1, -1, -1, 1, -1, 1, -1, -1, 1, 1, -1, 1, -1, 1, 1, 1, 1, 1, -1, 1, 1, 1, 1, -1, 1, -1, -1, -1, -1, 1, 1, 1, 1, 1, 1, -1, 1, -1,
1, 1, -1, -1, 1, -1, 1, 1, -1, 1, 1, 1, -1, -1, -1, -1, 1, 1, - 1, 1, 1, -1, 1, 1, 1, -1, -1, -1, -1, -1, 1, 1, 1, -1, -1, 1, 1, 1, -1, 1, 1, -1, -1, -1, -1,
1, -1, 1, 1, -1, -1, 1, 1, -1, 1, -1, -1, 1, - 1, -1, 1, 1, 1, -1, -1, 1, 1, 1, 1, -1, -1, 1, 1, -1, 1, 1, 1, -1, 1, -1, 1, 1, -1, 1, -1, 1, -1,
-1, -1, 1, -1, -1, 1, -1, 1, -1, 1, 1, 1, -1, 1, -1, -1, -1, -1, -1, -1, 1, -1, -1, 1, 1, 1, 1, -1, 1, 1, 1, 1, 1, 1, 1, 1, 1, 1, 1, 1,
-1, 1, 1, -1, -1, 1, -1, - 1, -1, 1, 1, -1, -1, -1, 1, -1, 1, 1, 1, 1, -1, 1, 1, -1, -1, -1, 1, 1, -1, 1, 1, -1, 1, -1, 1, 1, 1, -1, 1, 1, -1, 1, -1,
-1, -1, 1, - 1, 1, 1, -1, -1, -1, -1, 1, 1, 1, 1, -1, 1, 1, 1, -1, -1, -1, 1, 1, 1, 1, -1, 1, 1, 1, -1, 1, -1, 1, 1, 1, 1, -1, -1, 1, 1, -1, -1, -1,
1, -1, 1, -1, 1, -1, -1, -1, 1, -1, 1, 1, 1, 1, -1, 1, -1, 1, -1, 1, -1, -1, 1, -1, 1, 1, -1, -1, -1, -1, -1, 1, 1, -1, -1, - 1, -1, 1,
1, 1, -1, -1, 1, -1, -1, -1, 1, 1, -1, -1, 1, -1, 1, -1, -1, 1, -1, 1, -1, -1, -1, 1, 1, -1, -1, -1, -1, -1, -1,1, -1, - 1, -1, 1, 1, -1, 1, 1,
-1, 1, 1, 1, 1, 1, -1, -1, 1, -1, -1, 1, 1, 1, 1, -1, -1, -1, -1, -1, 1, 1, 1, -1, -1, 1, 1, 1, 1, 1, -1, 1, 1, -1, -1, -1, -1, -1, 1, 1, 1, 1,
1, 1, 1, 1, -1, -1, 1, -1, -1, 1, 1, -1, 1, 1,-1, -1, 1, 1, -1,1, -1, -1, 1, 1, -1, -1, 1, 1, - 1, 1, -1, -1, -1, -1, -1, -1, 1, 1, 1, 1, -1, 1,
-1, 1, -1, -1, -1, -1, 1, 1, -1, -1, 1, 1, -1, -1, 1, 1, -1, -1, 1, 1, 1, 1, 1, -1, 1, -1, -1, -1, -1, 1, 1, 1, 1, -1, 1, 1, 1, -1, 1, 1, 1, 1,
1, 1, -1, 1, 1, -1, -1, 1, -1, 1, 1, -1, -1, -1, 1, -1, 1, 1, -1, 1, -1, 1, -1, 1, -1, 1, 1, -1, -1, -1, -1, -1, 1, 1, -1, 1, 1, -1, -1, -1, -1,

1, -1, 1, 1, 1, 1, 1, 1, 1, 1, 1, -1, -1, 1, 1, 1, -1, -1,1,-1, -1, 1, -1, 1, -1, 1, -1, 1, -1, 1, -1, 1, 1, 1, -1, -1, -1, 1, -1, -1, -1, -1, 1, -1, 1, 1, -1, 1, 1, -1, -1, -1, 1, 1, 1, -1, -1, 1, 1, 1, -1, -1, -1, -1, 1, -1, 1, 1, 1, -1, -1, -1, 1, 1, 1, -1, -1, -1, 1, 1, 1, -1, 1, 1, 1, -1, -1, -1, 1, 1, -1, 1, -1, -1, 1, -1, -1, 1, 1, 1, -1, 1, - 1, 1, -1, 1, 1, 1, 1, 1, -1, -1, 1, -1, -1, 1, -1, -1, -1, -1, -1, 1, -1, -1, 1, 1, 1, -1, 1, 1, 1, 1, 1, -1, 1, -1, -1, 1, 1, 1, 1, -1, 1, -1, 1, 1, -1, 1, 1, 1, 1, -1, -1, 1, 1, 1, -1, -1, 1, -1, 1, 1, 1, 1, 1, 1, 1, 1, -1, -1, 1, -1, -1, -1, 1, -1, 1, -1, 1, -1, 1, 1, 1, - 1, -1, 1, -1, -1, -1, 1, -1, 1, 1, -1, -1, -1, -1, 1, 1, -1, -1, 1, -1, -1, -1, 1, 1, -1, -1, -1, -1, 1, 1, 1, -1, 1, 1, 1, 1, 1, 1, 1, 1, - 1, 1, 1, 1, 1, -1, 1, -1, -1, 1, -1, -1, -1, -1, -1, -1, 1, -1, 1, -1, -1, 1, -1, 1, -1, -1, -1, 1, -1, 1, 1, -1, 1, -1, 1, -1, 1, - 1, 1, 1, -1, 1, -1, 1, -1, -1, -1, 1, -1, -1, 1, -1, -1, -1, -1, -1, 1, -1, -1, 1, -1, 1, 1, -1, -1, 1, -1, 1, 1, 1, 1, -1, 1, -1, 1, 1, -1, 1, -1, -1, -1, -1, 1, 1, 1, 1, 1, 1, -1, -1, 1, 1, -1, 1, -1, 1, -1, 1, -1, 1, 1, 1, 1, 1, 1].

In an embodiment, Sn1024$_6$ may be as follows: Sn1024$_6$ = [1, -1, 1, -1, -1, 1, -1, 1, 1, 1, 1, -1, 1, -1, 1, -1, 1, 1, 1, -1, -1, -1, -1, -1, 1, 1, 1, 1, -1, 1, -1, -1, -1, 1, 1, -1, -1, -1, -1, 1, -1, -1, 1, 1, 1, 1, -1, 1, 1, 1, -1, 1, 1, 1, -1, 1, 1, -1, 1, 1, -1, 1, -1, -1, 1, 1, 1, -1, 1, 1, -1, 1, 1, -1, 1, -1, -1, -1, -1, -1, -1, -1, 1, 1, -1, -1, -1, 1, -1, 1, 1, -1, 1, 1, -1, -1, -1, 1, 1, 1, -1, 1, -1, -1, -1, 1, -1, 1, -1, 1, -1, 1, 1, -1, 1, -1, -1, -1, 1, 1, 1, 1, 1, 1, 1, -1, -1, -1, 1, -1, 1, 1, -1, 1, 1, -1, -1, -1, 1, -1, 1, -1, 1, -1, 1, -1, -1, -1, -1, 1, -1, -1, -1, 1, -1, 1, 1, -1, 1, 1, -1, -1, -1, 1, -1, -1, 1, 1, -1, 1, 1, 1, 1, -1, 1, -1, -1, 1, 1, 1, -1, -1, 1, 1, 1, -1, -1,1, -1, 1, 1, 1, 1, 1, 1, -1, 1, 1, 1, 1, -1, -1, 1, 1, -1, -1, 1, -1, - 1, 1, -1, 1, -1, -1, -1, 1, -1, 1, 1, 1, 1, -1, -1, 1, 1, 1, 1, -1, -1, 1, 1, 1, -1, -1, -1, -1, -1, 1, 1, -1, -1, 1, -1, 1, 1, 1, -1, 1, 1, -1, 1, -1, 1, -1, 1, -1, 1, -1, 1, 1, 1, 1, 1, 1, 1, -1, 1, 1, 1, 1, 1, -1, -1, 1, -1, -1, -1, -1, 1, 1, 1, 1, 1, -1, -1, 1, 1, 1, -1, -1, -1, -1, 1, 1, 1, -1, 1, 1, 1, -1, -1, 1, 1, 1, -1, 1, 1, 1, -1, -1, 1, 1, 1, -1, 1, -1, 1, 1, 1, 1, -1, -1, -1, -1, -1, 1, 1, 1, 1, -1, -1, 1, -1, -1, -1, 1, -1, 1, -1, 1, -1, -1, 1, 1, 1, 1, -1, 1, -1, 1, 1, 1, 1, 1, -1, 1, -1, 1, 1, -1, -1, -1, 1, -1, 1, 1, 1, 1, -1, -1, -1, 1, 1, 1, 1, 1, 1, -1, 1, -1, -1, -1, -1, -1, -1, - 1, 1, 1, -1, 1, 1, 1, 1, -1, -1, -1, -1, -1, 1, 1, 1, 1, -1, -1, 1, -1, -1, 1, 1, 1, 1, -1, 1, 1, 1, 1, -1, -1, 1, 1, 1, -1, -1, -1, 1, -1, 1, 1, 1, 1, -1, -1, -1, 1, 1, 1, 1, -1, 1, 1, 1, 1, 1, 1, 1, -1, 1, 1, -1, -1, 1, -1, 1, 1, -1, -1, -1, -1, 1, -1, 1, 1, 1, -1, -1, -1, -1, -1, 1, -1, 1, -1, -1, -1, - 1, 1, 1, -1, 1, 1, 1, -1, 1, -1, -1, -1, 1, -1, 1, -1, 1, 1, -1, 1, -1, -1, -1, 1, -1, -1, -1, 1, -1, -1, 1, -1, 1, -1, -1, -1, 1, -1, 1, 1, 1, 1, -1, 1, 1, -1, 1, -1, -1, 1, -1, -1, -1, -1, 1, -1, 1, 1, 1, 1, -1, -1, -1, -1, 1, -1, 1, 1, -1, -1, -1, -1, 1, -1, 1, -1, -1, 1, 1, 1, -1, -1, 1, 1, 1, -1, 1, 1, 1, 1, -1, 1, 1, -1, 1, 1, -1, -1, -1, 1, 1, 1, 1, -1, 1, -1, -1, -1, 1, -1, 1, 1, 1, 1, 1, -1, 1, 1, -1, 1, 1, -1, -1, 1, -1, 1, -1, 1, -1, 1, -1, -1, 1, 1, 1, 1, 1, -1, 1, 1, -1, 1, 1, -1, -1, -1, 1, -1, 1, -1, 1, -1, -1, 1, 1, -1, - 1, 1, 1, -1, 1, 1, -1, -1, 1, 1, -1, -1, -1, -1, 1, -1, 1, 1, 1, -1, 1, 1, -1, -1, 1, 1, -1, -1, -1, 1, -1, -1, 1, 1, 1, 1, -1, 1, -1, -1, -1, 1, -1, 1, 1, 1, 1, 1, 1, -1, -1, -1, 1, -1, 1, -1, 1, 1, 1, -1, -1, 1, 1, 1, -1, 1, 1, 1, 1, -1, -1, -1, 1, -1, 1, -1, 1, 1, -1, 1, -1, -1, -1, 1, 1, 1, -1, -1, 1, 1, 1, -1, 1, 1, -1, 1, -1, 1, 1, 1, 1, 1, 1, -1]].

In an embodiment, Sn1024$_7$ may be as follows: Sn1024$_7$ = [-1, -1, -1, 1, -1, -1, -1, 1, -1, 1, 1, -1, 1, 1, -1, -1, -1, -1, -1, 1, -1, -1, -1, -1, 1, 1, 1, 1, 1, 1, -1, 1, -1, -1, 1, 1, -1, -1, 1, 1, 1, 1, 1, 1, -1, 1, -1, -1, -1, 1, 1, -1, -1, 1, 1, 1, -1, 1, -1, 1, 1, -1, 1, -1, 1, 1, 1, -1, -1, 1, -1, 1, 1, -1, 1, 1, 1, -1, 1, -1, 1, -1, -1, 1, - 1, -1, 1, 1, 1, -1, -1, -1, 1, 1, -1, 1, -1, 1, 1, -1, 1, 1, 1, -1, 1, 1, -1, -1, 1, -1, -1, -1, -1, 1, -1, 1, -1, 1, 1, 1, 1, 1, -1, -1, -1, 1, 1, 1, -1, 1, 1, 1, -1, 1, 1, -1, -1, -1, -1, 1, -1, 1, 1, -1, -1, -1, -1, 1, -1, -1, -1, 1, -1, -1, -1, 1, 1, 1, -1, -1, -1, -1, -1, 1, 1, 1, -1, 1, -1, -1, -1, 1, -1, -1, -1, -1, 1, -1, -1, -1, -1, 1, 1, 1, 1, 1, 1, -1, -1, 1, 1, 1, 1, 1, 1, -1, 1, 1, 1, 1, 1, 1, -1, 1, 1, -1, 1, 1, 1, 1, 1, -1, 1, -1, -1, 1, 1, 1, -1, -1, 1, - 1, 1, 1, -1, -1, 1, 1, -1, -1, 1, -1, -1, -1, 1, -1, -1, -1, 1, 1, 1, -1, -1, 1, 1, 1, -1, 1, -1, 1, 1, -1, -1, 1, -1, -1, -1, 1, -1, -1, 1, 1, 1, 1, -1, -1, -1, -1, 1, 1,-1, -1, 1, -1, -1, -1, -1, -1, -1, 1, -1, 1, 1, -1, -1, 1, 1, 1, -1, -1, -1, -1, 1, -1, -1, -1, -1, -1, -1, -1, -1, 1, -1, -1, 1, 1, 1, 1, -1, 1, 1, -1, 1, -1, -1, -1, -1, 1, 1, 1, 1, -1, -1, 1, 1, 1, -1, -1, -1, 1, 1, 1, 1,-1, -1, 1, 1, -1, 1, 1, 1, 1, 1, -1, 1, -1, 1, -1, 1, 1, 1, -1, -1, 1, 1, 1, -1, -1, 1, -1, -1, -1, 1, -1, 1, 1, 1, 1, -1, 1, -1, -1, -1, 1, - 1, 1, 1, -1, -1, 1, 1, -1, -1, 1, -1, 1, 1, 1, -1, 1, 1, -1, 1, 1, -1, -1, 1, -1, -1, 1, 1, 1, -1, -1, -1, -1, 1, 1, 1, -1, - 1, 1, 1, -1, -1, 1, 1, 1, 1, 1, -1, 1, 1, 1, -1, -1, -1, 1, 1, -1, 1, -1, -1, -1, -1, 1, 1, -1, -1, -1, 1, -1, 1, 1, 1, -1, - 1, 1, 1, -1, 1, 1, 1, -1, 1, -1, -1, 1, 1, 1, -1, 1, 1, 1, 1, 1, 1, -1, -1, -1, 1, -1, 1, 1, -1, 1, -1, -1, 1, 1, 1, -1, -1, 1, -1, -1, -1, -1, -1, -1, 1, 1, -1, 1, -1, 1, 1, -1, 1, 1, -1, -1, 1, 1, -1, 1, 1, -1, -1, 1, -1, -1, -1, 1, -1, -1, 1, 1, -1, 1, 1, -1, 1, 1, 1, 1, -1, 1, 1, -1, -1, -1, -1, 1, 1, -1, 1, 1, -1, 1, 1, -1, 1, -1, 1, 1, -1, -1, 1, 1, -1, -1, 1, 1, 1, 1, -1, 1, -1, -1, -1, -1, 1, 1, -1, 1, -1, -1, -1, -1, - 1, -1, -1, 1, -1, -1, 1, 1, 1, 1, -1, 1, 1, -1, 1, 1, -1, -1, -1, -1, 1, 1, -1, -1, 1, -1, -1, -1, -1, 1, 1, 1, -1, -1, -1, -1, -1, -1, 1, 1, 1, -1, -1, 1, 1, -1, -1, 1, 1, - 1, 1, 1, 1, -1, 1, -1, -1, 1, -1, -1, -1, -1, 1, -1, -1, 1, 1, -1, -1, 1, -1, -1, 1, -1, -1, -1, 1, -1, -1, -1, -1, 1, -1, -1, 1, 1, -1, -1, -1, -1, - 1, -1, -1, 1, -1, 1, -1, 1, -1, -1, -1, -1, 1, -1, -1, 1, 1, -1, 1, 1, -1, -1, -1, -1, 1, 1, -1, -1, 1, 1, 1, 1, 1, 1, -1, -1, -1, -1, 1, -1, 1, -1, -1, 1, 1, 1, -1, -1, 1, -1, -1, -1, -1, 1, 1, 1, 1, 1, -1, 1, -1, -1, 1, 1, 1, 1, -1, -1, -1, 1, 1, 1, 1, -1, 1, -1, -1, -1, 1, 1, 1, -1, -1, -1, -1, 1, 1, 1, 1, 1, -1, -1, -1, 1, 1, -1, 1, 1, 1, -1, -1, -1, -1, -1, 1, 1, 1, 1, -1, -1, 1,

EP 4 250 864 A1

-1, -1, 1, -1, -1, 1, -1, 1, 1, -1, -1, 1, -1, 1, -1, 1, 1, -1, 1, 1, -1, -1, 1, -1, 1, -1, 1, 1, -1, 1, -1, 1, 1, 1, 1, -1, -1, -1, -1, -1, -1,
-1, 1, -1, 1, -1, -1, 1, -1, 1, -1, -1, 1, 1, 1, -1, 1, -1, 1, -1, 1, -1, -1, -1, 1, -1, -1, - 1, 1, -1, -1].

In an embodiment, Sn1024$_8$ may be as follows: Sn1024$_8$ = [1, -1, -1, -1, -1, 1, -1, -1, 1, 1, -1, 1, -1, -1, -1, - 1,
-1, 1, 1, 1, 1, -1, 1, 1, -1, -1, -1, -1, 1, 1, 1, 1, 1, -1, -1, 1, -1, -1, 1, -1, -1, -1, -1, 1, -1, -1, 1, -1, -1, -1, 1, - 1, 1, 1, -1,
-1, -1, 1, 1, 1, 1, -1, 1, -1, -1, -1, 1, -1, 1, 1, -1, 1, 1, 1, -1, 1, 1, 1, -1, -1, 1, 1, 1, -1, 1, -1, -1, 1, -1, 1, -1, -1, -1, 1, 1, 1, 1, -1,
1, 1, 1, -1, -1, -1, 1, -1, -1, 1, -1, -1, -1, 1, -1, -1, 1, -1, 1, 1, -1, -1, 1, 1, -1, 1, -1, 1, 1, 1, 1, 1, 1, -1, 1, -1, -1, -1, -1, -1,
1, 1, -1, 1, 1, 1, -1, 1, 1, 1, 1, -1, -1, -1, 1, 1, 1, 1, 1, -1, 1, 1, 1, 1, 1, 1, -1, -1, 1, -1, -1, -1, -1, 1, -1, 1, -1, -1, 1, 1, 1, -1,
1, 1, -1, -1, -1, -1, 1, 1, 1, -1, 1, -1, -1, 1, -1, -1, -1, 1, -1, -1, 1, -1, 1, 1, -1, 1, -1, 1, -1, 1, 1, 1, -1, 1, 1, -1, 1, 1, -1, 1,
-1, 1, -1, -1, -1, 1, -1, 1, -1, 1, -1, 1, 1, -1, 1, 1, -1, 1, -1, 1, - 1, -1, 1, 1, 1, -1, -1, 1, -1, -1, 1, 1, 1, -1, 1, 1, 1, -1, 1, 1, -1, 1,
-1, -1, -1, -1, 1, 1, 1, -1, 1, -1, 1, 1, -1, -1, 1, 1, 1, 1, 1, -1, 1, -1, 1, -1, 1, -1, 1, 1, -1, -1, 1, -1, -1, 1, -1, 1, -1, 1, -1, -1,
-1, -1, 1, 1, 1, 1, 1, -1, 1, 1, 1, 1, 1, 1, -1, 1, - 1, 1, 1, -1, -1, -1, -1, 1, 1, -1, 1, -1, -1, -1, 1, 1, -1, 1, 1, 1, -1, 1, -1, -1, -1,
-1, 1, 1, -1, -1, -1, -1, 1, 1, -1, 1, 1, - 1, 1, -1, -1, -1, 1, -1, 1, 1, 1, 1, 1, -1, 1, 1, -1, 1, -1, 1, 1, -1, -1, 1, -1, -1, 1, -1, -1, 1,
1, -1, 1, -1, 1, 1, -1, -1, 1, 1, 1, -1, -1, 1, -1, -1, -1, -1, 1, -1, 1, 1, -1, 1, 1, 1, -1, 1, -1, -1, -1, 1, -1, 1, -1, 1, 1, 1, -1, -1, 1,
1, 1, 1, 1, -1, 1, - 1, -1, -1, 1, 1, -1, -1, -1, 1, -1, 1, -1, 1, 1, -1, 1, -1, -1, -1, -1, 1, -1, 1, 1, -1, 1, 1, -1, -1, 1, -1, -1, 1, -1,
1, 1, 1, 1, -1, 1, -1, -1, -1, 1, -1, -1, -1, 1, 1, -1, -1, 1, -1, -1, -1, -1, -1, 1, 1, 1, -1, -1, -1, 1, 1, -1, 1, -1, -1, -1, 1, -1, 1, - 1, -1,
1, 1, -1, 1, 1, 1, 1, 1, 1, -1, 1, 1, 1, 1, -1, -1, 1, -1, 1, 1, 1, -1, -1, -1, 1, 1, 1, -1, -1, 1, -1, -1, 1, 1, 1, 1, 1, 1, 1, 1, -1, 1,
1, 1, -1, -1, -1, 1, 1, 1, 1, 1, 1, 1, -1, -1, 1, 1, 1, -1, 1, 1, 1, -1, 1, -1, -1, 1, -1, -1, 1, -1, -1, 1, -1, 1, 1, -1, 1, 1, -1, -1, -1, 1,
1, -1, -1, 1, 1, 1, -1, 1, -1, 1, -1, 1, -1, 1, 1, 1, 1, 1, -1, 1, 1, 1, -1, -1, -1, 1, 1, -1, 1, 1, - 1, 1, -1, 1, -1, 1, 1, -1, 1, 1, -1,
-1, 1, 1, -1, 1, -1, 1, -1, 1, -1, 1, 1, -1, -1, 1, -1, 1, -1, -1, 1, 1, -1, -1, -1, -1, -1, -1, 1, -1, 1, -1, 1, 1, 1, 1, 1, 1, -1, -1, 1,
1, -1, -1, 1, 1, -1, -1, -1, -1, 1, -1, 1, 1, -1, -1, -1, -1, 1, 1, -1, -1, 1, - 1, -1, 1, 1, 1, -1, 1, 1, -1, -1, 1, -1, -1, -1, -1, 1, -1, 1,
1, 1, 1, 1, 1, 1, 1, -1, -1, -1, -1, -1, 1, 1, -1, 1, -1, -1, 1, 1, 1, 1, 1, 1, -1, -1, 1, 1, -1, 1, -1, 1, 1, 1, 1, -1, 1, -1, -1, 1, 1, 1,
-1, 1, 1, -1, 1, 1, -1, 1, -1, -1, 1, -1, 1, 1, -1, 1, 1, 1, -1, 1, -1, -1, 1, 1, -1, 1, -1, -1, 1, -1, 1, 1, -1, 1, -1, 1, 1, -1, 1, -1, -1,
1, 1, 1, -1, 1, -1, -1, -1, -1, -1, 1, 1, -1, - 1, -1, -1, 1, -1, 1, -1, 1, -1, -1, -1, -1, 1, -1, 1, 1, -1, 1, 1, -1, 1, 1, 1, 1, -1, 1, 1, 1,
-1, 1, 1, -1, 1, 1, 1, 1, 1, 1, - 1, 1, 1, 1, 1, 1, -1, -1, -1, -1, -1, -1, 1, -1, 1, 1, 1, -1, -1, 1, -1, 1, 1, 1, -1, 1, 1, 1, -1, 1, -1,
1, 1, 1, -1, -1, 1, 1, -1, 1, -1, -1, 1, -1, 1, -1, -1, -1, 1, -1, 1, -1, -1, 1, 1, -1, -1, -1, 1, 1, -1, -1, -1, 1, -1, -1, -1, -1, -1, 1, -1,
-1, 1, 1, 1, -1, -1, 1, -1, 1, -1, 1, -1, 1, -1, 1, 1, -1, 1, -1, -1, -1, 1, -1, -1, 1, -1, -1, 1, 1, -1, 1, -1, -1, 1, 1, -1, -1, -1, 1, -
1, -1, 1, -1, -1, -1, 1, 1, -1, 1, -1, 1, -1, -1, 1, -1, -1, 1, 1, 1, -1, -1, -1, -1, -1, 1, 1, -1, -1, -1, 1, 1, 1, 1, 1, -1, -1, 1, -1, -1,
-1, -1, 1, 1, 1, 1, -1, -1, -1, -1, 1, 1, -1, -1, 1, 1, -1, -1, -1, 1, 1].

In an embodiment, the sequence includes at least one of eight sequences. When a length of the sequence is 1024, the eight sequences include: Sn2048$_1$, Sn2048$_2$, Sn2048$_3$, Sn2048$_4$, Sn2048$_5$, Sn2048$_6$, Sn2048$_7$, and Sn2048$_8$. In an embodiment, Sn2048$_1$ may be as follows: Sn2048$_1$ = [1, -1, 1, 1, -1, 1, -1, 1, 1, 1, 1, 1, -1, 1, -1, 1, 1, 1, -1, -1, 1,
- 1, -1, 1, 1, -1, 1, -1, 1, -1, -1, 1, 1, -1, 1, 1, 1, -1, 1, 1, 1, -1, 1, -1, -1, -1, 1, -1, 1, -1, -1, 1, -1, -1, 1, 1, -1, - 1, -1, 1,
-1, 1, -1, -1, 1, -1, -1, 1, -1, -1, -1, -1, 1, 1, 1, -1, 1, -1, 1, 1, -1, 1, -1, 1, -1, 1, -1, -1, -1, 1, -1, -1, -1, 1, -1, 1, 1, 1, -1, -1,
1, 1, -1, -1, 1, -1, 1, 1, -1, -1, -1, 1, 1, 1, -1, 1, 1, -1, 1, -1, 1, 1, -1, 1, -1, -1, -1, 1, -1, -1, 1, -1, -1, -1, -1, -1, -1, 1, 1,
1, -1, 1, -1, -1, -1, 1, -1, 1, 1, 1, -1, 1, -1, 1, -1, -1, 1, 1, 1, -1, -1, -1, -1, -1, 1, -1, - 1, -1, -1, -1, 1, -1, -1, -1, -1, -1, 1, -1,
-1, 1, 1, 1, 1, 1, 1, 1, -1, -1, -1, -1, -1, 1, -1, -1, 1, 1, -1, -1, 1, -1, -1, 1, 1, 1, -1, -1, 1, 1, 1, 1, -1, 1, 1, 1, -1, -1, 1, 1, -1, -1,
-1, -1, -1, 1, 1, 1, 1, 1, -1, -1, -1, -1, 1, 1, -1, -1, -1, 1, 1, 1, 1, 1, -1, -1, -1, -1, 1, 1, -1, -1, -1, 1, 1, 1, 1, 1, 1, 1, -1, -1, 1,
1, -1, 1, -1, -1, 1, 1, -1, -1, -1, -1, 1, 1, 1, 1, 1, -1, 1, 1, -1, 1, -1, 1, -1, 1, -1, -1, -1, 1, 1, -1, 1, -1, -1, -1, -1, -1, -1, -1, 1, 1,
-1, 1, -1, 1, -1, -1, -1, 1, 1, -1, -1, -1, - 1, 1, 1, 1, 1, 1, -1, -1, 1, -1, -1, -1, -1, 1, 1, -1, -1, -1, -1, 1, -1, -1, -1, -1, -1, -1,
1, -1, -1, 1, -1, 1, 1, 1, -1, -1, -1, 1, 1, 1, 1, -1, 1, 1, 1, 1, -1, -1, 1, 1, 1, -1, 1, 1, 1, 1, 1, -1, -1, 1, -1, -1, 1, 1, -1, -1, -1, -1,
1, 1, -1, -1, -1, 1, 1, -1, 1, -1, -1, 1, -1, 1, 1, 1, -1, -1, 1, -1, 1, -1, 1, -1, 1, -1, -1, 1, 1, 1, -1, 1, 1, 1, -1, -1, 1, 1, -1, -1, -1, 1,
-1, 1, -1, -1, 1, 1, 1, -1, 1, 1, -1, 1, -1, -1, -1, 1, 1, 1, 1, 1, -1, -1, 1, 1, 1, 1, 1, -1, -1, -1, -1, 1, 1, 1, 1, 1, 1, 1, -1, -1, 1,
1, 1, -1, -1, -1, -1, 1, -1, 1, -1, -1, 1, -1, 1, 1, 1, -1, -1, 1, -1, 1, -1, 1, -1, 1, -1, -1, -1, 1, 1, -1, 1, 1, -1, -1, 1, 1, 1, 1, -1, -1,
-1, -1, -1, -1, 1, -1, -1, -1, 1, 1, -1, 1, 1, 1, 1, -1, 1, -1, -1, -1, -1, -1, -1, -1, 1, 1, -1, 1, 1, 1, 1, -1, -1, 1, -1, 1, 1, 1, 1, -1,
-1, -1, -1, -1, 1, -1, -1, 1, 1, -1, 1, 1, 1, -1, 1, 1, -1, -1, -1, -1, 1, -1, -1, -1, -1, - 1, 1, 1, -1, 1, 1, -1, -1, 1, 1, 1, 1, -1, 1, -1, -1, 1,
1, 1, -1, 1, 1, 1, 1, -1, -1, 1, -1, -1, 1, -1, -1, -1, 1, 1, 1, -1, 1, 1, -1, -1, 1, 1, 1, 1, -1, 1, -1, -1, -1, 1, 1, -1, -1, 1, -1, -1, -1, -1,
-1, 1, 1, -1, -1, 1, 1, -1, 1, 1, 1, 1, -1, 1, 1, -1, -1, -1, -1, 1, -1, -1, -1, 1, -1, -1, -1, 1, -1, -1, -1, 1, 1, -1, -1, 1, -1, -1, -1, -1,
-1, 1, 1, 1, -1, -1, 1, 1, -1, 1, -1, 1, 1, -1, -1, 1, -1, -1, 1, -1, 1, 1, -1, 1, 1, 1, 1, -1, 1, -1, -1, 1, -1, 1, -1, 1, -1, -1, 1, 1, 1, 1,
-1, -1, 1, -1, -1, -1, 1, -1, 1, -1, 1, 1, -1, - 1, 1, -1, 1, 1, -1, 1, 1, 1, -1, 1, -1, 1, -1, 1, -1, 1, -1, -1, 1, 1, 1, 1,
-1, -1, 1, -1, 1, 1, 1, -1, -1, 1, -1, - 1, 1, 1, 1, -1, -1, -1, -1, -1, -1, -1, -1, 1, -1, 1, 1, -1, 1, 1, 1, 1, -1, -1, 1, -1, 1, 1, 1, 1, -1, 1,
-1, 1, 1, -1, -1, -1, 1, -1, 1, -1, -1, 1, -1, -1, -1, -1, -1, 1, -1, 1, 1, -1, 1, 1, 1, 1, -1, -1, 1, -1, 1, 1, 1, -1, -1, -1, -1, 1, -1,
-1, 1, 1, -1, -1, -1, 1, -1, 1, 1, -1, -1, -1, -1, -1, 1, -1, 1, 1, -1, 1, 1, 1, 1, -1, -1, -1, 1, 1, 1, 1, -1, 1, -1, -1, 1, -1, 1, -1, -1,
-1, 1, 1, -1, -1, -1, 1, -1, 1, -1, 1, 1, 1, -1, -1, -1, 1, 1, -1, -1, -1, -1, -1, -1, 1, 1, -1, 1, 1, 1, 1, -1, -1, 1, -1, 1, 1, 1, 1, -1, -1, 1,
1, 1, 1, -1, 1, -1, 1, 1, -1, 1, -1, -1, 1, 1, -1, 1, 1, -1, -1, -1, -1, 1, -1, -1, -1, 1, -1, -1, -1, 1, 1, -1, 1, -1, -1, 1, 1, 1, 1, 1,
1, 1, 1, -1, 1, -1, 1, 1, -1, 1, -1, 1, 1, 1, -1, -1, 1, -1, 1, 1, -1, 1, 1, 1, -1, 1, -1, 1, -1, 1, 1, 1, 1, -1, 1, -1, -1, 1, 1, 1, 1,
1, 1, 1, -1, -1, 1, 1, -1, 1, -1, 1, 1, -1, -1, 1, -1, 1, 1, -1, 1, 1, -1, -1, 1, 1, -1, 1, 1, -1, -1, 1, 1, -1, -1, 1, 1, -1, -1, 1,
-1, 1, 1, 1, 1, 1, 1, 1, 1, -1, -1, 1, 1, -1, 1, -1, -1, -1, -1, 1, 1, -1, -1, -1, - 1, -1, -1, 1, 1, 1, -1, 1, -1, 1, 1, 1, 1, -1, -1, 1, -1, -1,

1, -1, -1, -1, -1, 1, -1, -1, -1, -1, -1, 1, 1, -1, -1, -1, 1, 1, 1, 1, 1, -1, -1, 1, 1, -1, 1, -1, -1, 1, 1, 1, -1, -1, 1, 1, -1, -1, -1, 1, -1, 1, -1, -1, 1, 1, -1, -1, 1, -1, 1, 1, 1, -1, -1, -1, 1, -1, 1, -1, 1, 1, 1, -1, -1, 1, 1, 1, 1, 1, -1, 1, 1, 1, 1, -1, -1, 1, -1, 1, -1, -1, 1, 1, 1, -1, 1, -1, 1, 1, -1, -1, -1, -1, 1, 1, -1, -1, 1, -1, 1, 1, 1, -1, -1, -1, 1, 1, 1, -1, 1, 1, 1, -1, -1, -1, 1, 1, 1, 1, 1, -1, 1, -1, -1, 1, -1, 1, 1, 1, -1, -1, 1, 1, 1, 1, 1, -1, -1, 1, 1, 1, 1, -1, -1, -1, 1, 1, 1, 1, 1, -1, 1, -1, -1, 1, 1, -1, -1, 1, -1, -1, -1, 1, - 1, 1, 1, 1, -1, 1, 1, 1, -1, -1, 1, -1, -1, 1, 1, 1, -1, 1, -1, 1, 1, -1, 1, 1, 1, -1, 1, -1, 1, 1, -1, 1, 1, 1, -1, 1, -1, 1, 1, -1, -1, 1, 1, -1, -1, 1, -1, -1, -1, 1, - 1, 1, 1, 1, -1, -1, -1, -1, -1, 1, 1, 1, 1, 1, 1, -1, -1, 1, 1, 1, 1, -1, -1, -1, 1, 1, 1, 1, 1, -1, 1, -1, 1, 1, -1, -1, -1, 1, 1, -1, -1, 1, 1, -1, -1, 1, 1, 1, -1, -1, -1, -1, 1, -1, -1, 1, 1, -1, -1, -1, -1, -1, -1, -1, -1, 1, -1, 1, 1, 1, 1, -1, 1, 1, 1, 1, 1, 1, -1, 1, -1, 1, 1, -1, 1, 1, 1, 1, 1, 1, -1, 1, 1, -1, 1, 1, 1, 1, -1, -1, -1, -1, 1, 1, -1, 1, 1, 1, 1, 1, 1, 1, 1, 1, 1, -1, -1, -1, 1, -1, -1, -1, -1, 1, -1, 1, -1, -1, -1, -1, -1, -1, 1, 1, 1, 1, -1, 1, -1, -1, -1, -1, -1, 1, 1, -1, 1, 1, 1, 1, -1, -1, -1, -1, -1, 1, -1, -1, -1, 1, 1, -1, 1, 1, -1, 1, -1, -1, 1, -1, -1, -1, 1, -1, -1, 1, 1, -1, 1, -1, 1, 1, 1, 1, 1, -1, -1, -1, -1, 1, -1, 1, -1, 1, -1, -1, 1, -1, 1, 1, 1, 1, -1, 1, 1, -1, 1, -1, 1, 1, 1, -1, 1, -1, 1, 1, -1, -1, -1, -1, 1, 1, 1, 1, 1, 1, 1, -1, 1, -1, 1, 1, -1, -1, 1, 1, 1, 1, -1, 1, 1, -1, 1, -1, 1, -1, -1, -1, 1, 1, -1, 1, 1, 1, 1, -1, 1, -1, -1, 1, 1, -1, 1, -1, 1, -1, -1, -1, -1, -1, -1, -1, -1, 1, -1, 1, 1, 1, 1, -1, 1, 1, 1, 1, 1, 1, -1, -1, -1, 1, 1, 1, 1, -1, -1, 1, 1, 1, 1, 1, -1, 1, -1, 1, 1, -1, -1, -1, 1, 1, 1, 1, 1, -1, -1, 1, 1, 1, 1, -1, -1, -1, 1, 1, 1, 1, 1, -1, 1, -1, -1, 1, 1, -1, -1, 1, -1, -1, -1, 1, -1, 1, 1, 1, -1, 1, 1, 1, -1, -1, 1, -1, -1, 1, 1, 1, -1, 1, -1, 1, 1, -1, 1, 1, 1, -1, 1, -1, 1, 1, -1, 1, 1, 1, -1, 1, -1, 1, 1, -1, -1, 1, 1, -1, -1, 1, -1, -1, -1, 1, - 1, 1, 1, 1, -1, -1, -1, -1, -1, 1, 1, 1, 1, 1, 1, -1, -1, 1, 1, 1, 1, -1, -1, -1, 1, 1, 1, 1, 1, -1, 1, -1, 1, 1, -1, -1, -1, 1, 1, -1, -1, 1, 1, -1, -1, 1, 1, 1, -1, -1, -1, -1, 1, -1, -1, 1, 1, -1, -1, -1, - 1, -1, -1, 1, -1, 1, -1, -1, -1, 1, 1, -1, 1, 1, -1, -1, -1, 1, 1, -1, -1, 1, -1, -1, 1, -1, -1, 1, 1, 1, -1, 1, -1, 1, 1, -1, 1, 1, 1, -1, 1, -1, 1, 1, -1, 1, -1, 1, -1, -1, -1, -1, -1, 1, -1, 1, -1, -1, 1, -1, -1, 1, 1, 1, -1, 1, -1, -1, -1, - 1, -1, 1, -1, -1, 1, -1, -1, 1, -1, 1, -1, 1, -1, -1, 1, 1, -1, 1, 1, -1, -1, -1, 1, 1, 1, -1, -1, 1, 1, 1, -1, -1, -1, -1, 1, -1, -1, 1, 1, 1, 1, 1, 1, -1, -1, -1, 1, -1, -1, 1, -1, -1, 1, 1, -1, -1, -1, -1, -1, -1, -1, 1, -1, -1, 1, 1, 1, 1, 1, 1, -1, -1, -1, 1, -1, -1, 1, -1, -1, 1, 1, 1, -1, -1, -1, -1, 1, -1, -1, 1, 1, 1, 1, 1, -1, 1, -1, 1, 1, -1, -1, 1, -1, 1, 1, 1, -1, 1, -1, 1, -1, 1, 1, -1, -1, 1, 1, -1, 1, -1, -1, -1, 1, 1, -1, 1, -1, 1, 1, -1, -1, -1, 1, 1, -1, -1, 1, -1, -1, -1, 1, 1, 1, -1, 1, -1, 1, 1, -1, 1, 1, 1, 1, 1, 1, 1, 1, 1, -1, 1, 1, 1, 1, -1, 1, -1, -1, 1, 1, -1, 1, 1, 1, -1, -1, 1, -1, -1, 1, 1, 1, -1, -1, -1, 1, 1, 1, 1, -1, 1, 1, 1, -1, -1, -1, 1, 1, 1, 1, 1, -1, -1, -1, 1, 1, 1, 1, -1, 1, 1, 1, 1, 1, -1, -1, -1, 1, 1, 1, 1, 1, -1, -1, -1, 1, 1, 1, -1, 1, -1, 1, 1, 1, -1, -1, -1, -1, -1, 1, -1, -1, 1, 1, 1, -1, 1, -1, -1, -1, -1, 1, 1, -1, -1, 1, 1, 1, 1, 1, 1, 1, 1, 1, 1, 1, 1, 1, -1, 1, 1, 1, 1, 1, -1, -1, -1, 1.

In an embodiment, Sn2048$_2$ may be as follows: Sn2048$_2$ = [-1, -1, -1, 1, 1, 1, -1, -1, -1, 1, 1, 1, -1, -1, 1, 1, 1, -1, 1, 1, 1, -1, 1, 1, 1, -1, 1, 1, 1, -1, -1, 1, 1, 1, 1, 1, -1, 1, 1, 1, 1, -1, -1, 1, -1, 1, -1, -1, -1, - 1, -1, 1, 1, 1, 1, -1, -1, -1, -1, 1, -1, -1, -1, -1, -1, 1, -1, -1, 1, 1, 1, 1, 1, 1, 1, -1, 1, -1, -1, -1, 1, 1, 1, -1, 1, -1, -1, -1, 1, 1, -1, 1, -1, -1, 1, 1, -1, -1, -1, 1, 1, -1, -1, -1, 1, -1, 1, 1, 1, -1, 1, -1, 1, 1, 1, 1, 1, 1, -1, 1, 1, 1, 1, 1, 1, 1, -1, 1, 1, 1, 1, 1, 1, 1, - 1, 1, 1, -1, -1, -1, 1, 1, -1, -1, 1, 1, 1, 1, 1, -1, 1, -1, -1, 1, 1, -1, -1, -1, -1, -1, 1, 1, 1, 1, -1, 1, -1, -1, -1, -1, 1, 1, -1, 1, -1, 1, 1, 1, 1, -1, 1, -1, -1, -1, -1, -1, -1, -1, 1, -1, -1, -1, -1, 1, 1, -1, 1, -1, -1, -1, - 1, 1, 1, 1, 1, -1, 1, -1, -1, 1, 1, 1, 1, 1, 1, -1, -1, 1, -1, 1, 1, -1, 1, 1, 1, -1, -1, -1, -1, -1, -1, -1, -1, 1, -1, -1, -1, -1, -1, 1, 1, 1, -1, 1, -1, -1, -1, 1, 1, -1, 1, -1, -1, -1, -1, 1, -1, 1, 1, -1, -1, -1, -1, 1, 1, -1, -1, 1, -1, -1, -1, 1, 1, -1, -1, 1, -1, -1, -1, 1, 1, 1, 1, 1, -1, 1, -1, -1, 1, 1, -1, -1, -1, -1, -1, -1, -1, 1, 1, 1, 1, -1, 1, 1, 1, 1, -1, 1, -1, 1, 1, -1, -1, -1, -1, 1, 1, 1, 1, 1, 1, -1, 1, -1, -1, 1, 1, 1, 1, -1, 1, -1, -1, -1, -1, 1, 1, 1, 1, 1, -1, 1, 1, 1, 1, -1, 1, 1, 1, 1, 1, 1, 1, 1, -1, 1, 1, 1, 1, - 1, -1, -1, 1, -1, 1, -1, -1, -1, 1, -1, 1, 1, 1, -1, -1, 1, 1, 1, -1, 1, -1, 1, 1, 1, -1, -1, -1, 1, -1, -1, -1, 1, -1, 1, 1, 1, 1, -1, - 1, -1, 1, -1, 1, 1, 1, -1, -1, 1, 1, -1, -1, -1, 1, 1, 1, -1, 1, -1, 1, 1, 1, -1, -1, -1, 1, -1, -1, 1, -1, -1, -1, -1, -1, 1, 1, -1, 1, 1, 1, -1, 1, -1, 1, -1, -1, 1, 1, 1, -1, 1, 1, 1, -1, 1, 1, -1, -1, -1, -1, 1, -1, -1, -1, -1, 1, -1, -1, -1, -1, -1, 1, -1, 1, 1, 1, -1, -1, 1, 1, 1, -1, -1, -1, 1, 1, 1, 1, 1, -1, 1, 1, 1, -1, -1, -1, 1, 1, 1, -1, - 1, 1, 1, -1, 1, 1, 1, 1, 1, 1, 1, 1, -1, -1, 1, -1, 1, -1, 1, 1, 1, 1, 1, 1, -1, 1, 1, 1, -1, -1, -1, 1, -1, -1, -1, -1, 1, 1, 1, 1, 1, 1, 1, 1, -1, 1, 1, 1, 1, 1, -1, -1, -1, -1, 1, -1, 1, 1, 1, -1, -1, -1, -1, 1, 1, 1, 1, - 1, -1, -1, 1, -1, 1, -1, -1, -1, 1, -1, 1, 1, 1, -1, -1, 1, 1, 1, -1, 1, -1, 1, 1, 1, -1, -1, -1, 1, -1, -1, -1, 1, -1, 1, 1, 1, 1, - 1, 1, 1, -1, -1, 1, 1, 1, -1, -1, -1, 1, 1, -1, 1, 1, 1, -1, -1, -1, 1, 1, -1, 1, -1, -1, 1, 1, 1, -1, -1, -1, 1, -1, -1, -1, -1, - 1, 1, 1, -1, 1, 1, 1, -1, 1, -1, 1, -1, -1, -1, -1, 1, 1, 1, -1, 1, -1, 1, 1, 1, -1, -1, 1, -1, 1, -1, 1, -1, 1, 1, 1, 1, 1, 1, 1, 1, 1, -1, -1, 1, -1, 1, 1, 1, -1, 1, 1, -1, -1, -1, 1, 1, 1, -1, 1, 1, -1, -1, -1, 1, 1, 1, -1, 1, -1, 1, 1, 1, 1, 1, 1, 1, -1, -1, 1, -1, 1, 1, -1, 1, -1, -1, -1, 1, -1, -1, 1, 1, 1, 1, -1, -1, -1, 1, -1, 1, 1, 1, 1, -1, 1, -1, 1, 1, 1, 1, 1, 1, 1, -1, -1, 1, -1, 1, 1, 1, -1, -1, -1, -1, -1, -1, -1, 1, -1, 1, 1, 1, -1, -1, 1, 1, 1, -1, -1, -1, 1, 1, 1, 1, 1, -1, 1, 1, 1, -1, -1, -1, 1, 1, 1, -1, -1, 1, 1, -1, 1, 1, 1, 1, 1, 1, -1, -1, -1, -1, 1, -1, 1, 1, 1, -1, -1, -1, -1, 1, 1, 1, -1, 1, -1, 1, 1, 1, -1, 1, -1, 1, -1, -1, -1, 1, 1, 1, -1, 1, 1, 1, -1, 1, 1, -1, -1, -1, 1, 1, -1, 1, 1, 1, -1, -1, -1, -1, -1, -1, -1, 1, -1, 1, -1, -1, -1, -1, 1, -1, -1, -1, -1, -1, 1, -1, -1, -1, -1, -1, 1, -1, -1, -1, -1, -1, 1, -1, -1, -1, -1, -1, 1, -1, -1, -1, -1, -1, 1, -1, 1, 1, 1, 1, 1, 1, 1, 1, 1, 1, -1, -1, 1, -1, 1, 1, 1, -1, -1, -1, -1, -1, -1, -1, 1, 1, 1, -1, -1, 1, 1, 1, -1, -1, -1, 1, 1, 1, 1, 1, -1, 1, 1, 1, -1, -1, -1, 1, 1, 1, -1, -1, 1, 1, 1, -1, 1, 1, 1, 1, 1, -1, -1, -1, -1, -1, 1, -1, 1, 1, -1, -1, -1, -1, -1, 1, -1, -1, -1, 1, 1, -1, 1, 1, 1, -1, 1, 1, 1, 1, 1, 1, 1, 1, 1, 1, -1, 1, 1, 1, 1, -1, 1, 1, 1, 1, 1, 1, -1, -1, -1, 1, 1, 1, 1, -1, -1, -1, 1, 1, 1, -1, 1, -1, 1, 1, 1, -1, -1, -1, -1, -1, 1, 1, -1, 1, -1, 1, 1, 1, 1, 1, 1, 1, 1, 1, -1, -1, -1, 1, -1, -1, 1, 1, 1, 1, -1, 1, 1, 1, 1, 1, 1, 1, -1, -1, 1, -1, 1].

1, 1, -1, -1, 1, 1, -1, 1, -1, -1, -1, -1, -1, 1, -1, 1, 1, 1, 1, -1, 1, -1, -1, -1, -1, 1, 1, -1, -1, 1, 1, -1, 1, 1, -1, 1, -1, -1, -1, 1, 1,
1, -1, -1, 1, -1, -1, 1, -1, 1, 1, -1, 1, 1, -1, 1, 1, 1, 1, 1, 1, -1, -1, 1, 1, 1, -1, -1, -1, -1, 1, -1, -1, -1, 1, 1, 1, -1, -1, 1, -1,
-1, -1, -1, 1, 1, 1, 1, -1, 1, -1, 1, 1, 1, 1, 1, -1, 1, 1, 1, 1, -1, 1, -1, -1, 1, 1, 1, -1, -1, -1, -1, 1, 1, 1, -1, -1, -1, 1, -1, 1, 1, -1, 1,
1, -1, 1, -1, -1, -1, 1, -1, 1, -1, -1, 1, -1, 1, -1, 1, -1, -1, 1, -1, 1, -1, 1, -1, -1, -1, -1, 1, 1, -1, 1, -1, 1, -1, -1, -1, -1, 1, 1, -1,
-1, 1, 1, -1, -1, -1, -1, -1, 1, 1, -1, 1, 1, -1, -1, -1, 1, 1, 1, 1, 1, -1, 1, 1, -1, -1, 1, -1, 1, 1, 1, -1, 1, 1, 1, 1, -1, -1, -1, 1, 1, 1, 1,
1, 1, 1, 1, 1, 1, -1, -1, -1, 1, -1, 1, -1, 1, 1, 1, -1, 1, 1, -1, -1, 1, -1, -1, -1, 1, -1, 1, -1, 1, -1, 1, 1, 1, 1, -1, 1, -1, -1, -1, -1, -1,
-1, -1, 1, -1, -1, 1, -1, -1, 1, -1, 1, 1, -1, -1, -1, 1, 1, 1, -1, 1, -1, 1, -1, -1, 1, -1, 1, 1, -1, 1, 1, -1, -1, 1, -1, -1, 1, 1, -1, 1, -1,
-1, 1, -1, 1, 1, -1, - 1, -1, -1, 1, -1, 1, 1, -1, 1, 1, 1, -1, 1, 1, -1, -1, -1, 1, 1, -1, 1, -1, -1, -1, -1, -1, -1, 1, 1, -1, 1, -1, -1, -1, -1, 1, -1,
1, 1, 1, -1, -1, 1, 1, 1, -1, -1, 1, -1, -1, -1, -1, -1, 1, -1, -1, 1, 1, 1, -1, 1, 1, 1, 1, 1, -1, -1, 1, 1, 1, 1, -1, 1, -1, 1, 1, -1, 1, -1,
1, 1, -1, -1, -1, -1, -1, 1, -1, -1, 1, 1, -1, 1, 1, -1, -1, -1, 1, -1, 1, -1, -1, 1, 1, 1, -1, 1, -1, -1, -1, -1, 1, 1, -1, -1, -1, -1, 1,
-1, 1, -1, 1, -1, 1, -1, -1, 1, -1, -1, 1, -1, -1, 1, 1, 1, -1, -1, -1, -1, -1, -1, -1, -1, -1, -1, 1, -1, -1, 1, -1, -1, -1, 1, -1, 1, 1,
1, -1, -1, 1, 1, 1, -1, -1, 1, -1, -1, -1, -1, 1, -1, -1, -1, 1, 1, 1, -1, -1, -1, 1, 1, 1, 1, 1, - 1, 1, 1, -1, -1, 1, -1, 1, -1, -1, 1, -1, 1, 1, 1, 1,
-1, -1, 1, -1, 1, 1, -1, -1, 1, 1, -1, -1, 1, 1, 1, -1, 1, -1, -1, 1, 1, -1, -1, 1, -1, -1, -1, -1, 1, 1, -1, -1, -1, 1, -1, 1, 1, 1, 1, -1, -1,
-1, 1, -1, -1, -1, 1, 1, -1, -1, 1, 1, -1, -1, 1, 1, 1, -1, 1, 1, 1, -1, -1, -1, -1, 1, 1, 1, -1, -1, -1, 1, 1, 1, 1, -1, -1, 1, -1, -1, 1, -1,
1, -1, 1, -1, 1, 1, 1, -1, 1, 1, 1, -1, -1, -1, -1, 1, -1, 1, 1, -1, 1, -1, -1, -1, -1, -1, 1, 1, 1, 1, 1, -1, -1, -1, 1, -1, 1, 1, -1, 1, 1, 1,
-1, 1, 1, 1, -1, 1, -1, -1, 1, 1, -1, 1, 1, 1, -1, -1, 1, -1, -1, -1, -1, 1, -1, -1, -1, 1, 1, 1, 1, -1, 1, -1, 1, 1, 1, -1, 1]].

In an embodiment, Sn2048$_3$ may be as follows: Sn2048$_3$ = [1, -1, -1, 1, 1, -1, -1, 1, 1, 1, 1, 1, 1, 1, -1, 1, -1, -
1, -1, 1, 1, -1, -1, -1, -1, 1, -1, 1, -1, -1, -1, -1, -1, 1, -1, 1, -1, -1, 1, 1, 1, -1, 1, 1, 1, -1, -1, 1, 1, 1, -1, 1, -1, -1, -1, -1, 1,
1, 1, 1, 1, 1, 1, -1, 1, -1, -1, 1, 1, -1, -1, -1, 1, 1, 1, -1, 1, 1, 1, -1, -1, 1, -1, -1, -1, -1, -1, 1, 1, 1, 1, 1, -1, -1, -1, -1, -1,
-1, 1, -1, 1, 1, 1, -1, 1, 1, -1, 1, 1, -1, 1, 1, 1, 1, -1, 1, 1, 1, 1, 1, -1, -1, -1, 1, 1, 1, 1, -1, -1, 1, 1, -1, 1, 1, -1, 1, 1, -1, -1,
-1, 1, -1, 1, 1, -1, -1, -1, -1, 1, 1, 1, 1, 1, -1, -1, 1, 1, 1, -1, -1, -1, 1, 1, -1, -1, 1, -1, 1, 1, -1, -1, 1, 1, -1, -1, 1, 1, 1, -1, -1,
-1, 1, 1, 1, -1, 1, 1, 1, -1, 1, -1, 1, 1, -1, -1, -1, -1, -1, -1, -1, 1, 1, -1, 1, -1, - 1, 1, -1, 1, 1, -1, 1, 1, 1, 1, 1, -1, -1, -1,
-1, 1, 1, 1, -1, 1, 1, 1, -1, 1, 1, -1, 1, -1, -1, 1, -1, 1, 1, -1, 1, -1, -1, - 1, -1, 1, -1, 1, -1, 1, -1, -1, 1, -1, -1, 1, -1, -1, 1, 1, 1,
1, -1, 1, 1, -1, 1, -1, 1, -1, 1, -1, 1, 1, -1, 1, 1, -1, -1, -1, - 1, -1, -1, -1, 1, 1, -1, 1, -1, 1, -1, -1, 1, 1, 1, -1, 1, 1, 1, -1, 1, -1, 1,
-1, 1, 1, 1, 1, -1, -1, 1, 1, 1, 1, -1, -1, -1, -1, 1, 1, 1, -1, 1, -1, -1, 1, -1, 1, -1, 1, 1, 1, 1, 1, -1, -1, 1, -1, 1, -1, -1, -1, 1, -1,
1, 1, -1, 1, -1, 1, -1, 1, 1, 1, -1, -1, -1, 1, 1, 1, 1, -1, -1, -1, 1, 1, -1, 1, 1, 1, -1, -1, 1, -1, 1, 1, 1, -1, -1, -1, -1, 1, -1, 1, 1,
-1, -1, 1, 1, -1, -1, 1, 1, -1, - 1, -1, -1, 1, -1, -1, -1, -1, 1, -1, 1, 1, -1, 1, 1, -1, -1, -1, -1, -1, 1, -1, -1, -1, -1, 1, 1, 1, 1,
-1, -1, 1, 1, -1, 1, 1, -1, -1, 1, -1, -1, -1, 1, -1, -1, 1, -1, 1, -1, 1, 1, -1, 1, 1, 1, 1, 1, -1, -1, 1, 1, 1, -1, -1, -1, 1, -1, 1, 1, -1,
-1, -1, - 1, -1, 1, -1, 1, 1, 1, 1, 1, -1, 1, -1, 1, -1, -1, 1, -1, -1, -1, -1, 1, -1, -1, -1, -1, -1, -1, -1, 1, 1, 1, 1, -1, -1, -1, 1,
-1, -1, -1, 1, 1, -1, 1, -1, -1, 1, 1, -1, -1, -1, 1, 1, -1, 1, -1, 1, -1, -1, 1, 1, -1, 1, -1, 1, -1, 1, -1, 1, 1, -1, -1, -1, 1, 1, 1, -1, -1,
-1, -1, -1, -1, 1, 1, -1, -1, -1, -1, -1, -1, -1, 1, 1, -1, -1, 1, -1, 1, -1, -1, -1, -1, -1, 1, -1, -1, -1, 1, -1, -1, 1, 1, 1, -1, -1, 1, 1,
-1, 1, 1, -1, 1, 1, 1, -1, -1, -1, -1, -1, 1, 1, -1, -1, -1, 1, 1, 1, -1, 1, 1, -1, -1, -1, 1, -1, 1, 1, -1, 1, 1, -1, -1, 1, 1, -1, -1, -1, 1,
1, 1, -1, -1, -1, 1, -1, 1, -1, 1, -1, -1, -1, -1, 1, -1, -1, -1, -1, -1, 1, -1, 1, 1, -1, 1, -1, 1, -1, -1, 1, 1, -1, 1, -1, 1, 1, 1, 1, -1, 1,
1, 1, 1, 1, -1, 1, -1, 1, -1, 1, 1, 1, -1, 1, -1, -1, 1, 1, 1, -1, 1, -1, - 1, -1, -1, -1, 1, -1, 1, -1, 1, 1, 1, -1, -1, 1, 1, 1, 1, -1,
1, -1, 1, 1, 1, 1, 1, 1, -1, 1, -1, 1, 1, -1, 1, 1, -1, -1, 1, 1, 1, -1, 1, 1, 1, -1, -1, 1, 1, 1, 1, -1, -1, -1, 1, -1, -1, -1, 1,
1, -1, 1, 1, -1, -1, -1, -1, -1, -1, -1, -1, 1, -1, - 1, -1, 1, -1, 1, 1, 1, -1, -1, -1, -1, -1, -1, -1, -1, 1, 1, -1, -1, -1, -1, 1, -1, 1,
1, 1, -1, 1, 1, 1, -1, -1, -1, -1, 1, - 1, 1, -1, 1, -1, -1, -1, -1, 1, -1, 1, -1, 1, 1, 1, 1, -1, 1, 1, -1, -1, -1, 1, -1, -1, -1, 1, 1, -1,
1, -1, 1, 1, -1, 1, 1, -1, -1, -1, 1, -1, -1, -1, -1, 1, 1, -1, 1, 1, -1, -1, -1, 1, -1, -1, -1, 1, -1, 1, -1, 1, -1, 1, -1, 1, -1, 1, 1, 1, -1,
-1, -1, -1, 1, -1, 1, -1, -1, -1, 1, 1, 1, 1, -1, 1, 1, -1, 1, 1, 1, 1, 1, -1, 1, 1, -1, 1, 1, 1, -1, 1, -1, -1, -1, 1, 1, 1, -1, 1, 1, 1, 1,
1, -1, -1, -1, 1, 1, 1, -1, 1, 1, 1, 1, 1, 1, -1, -1, -1, -1, -1, -1, 1, 1, 1, 1, 1, 1, -1, -1, 1, -1, 1, 1, -1, -1, 1, 1, 1, -1, 1, -1, - 1,
1, -1, 1, 1, -1, -1, 1, -1, 1, 1, 1, -1, 1, -1, -1, 1, -1, -1, -1, 1, 1, -1, -1, -1, -1, 1, 1, -1, -1, -1, 1, 1, -1, -1, -1, 1, 1, 1, 1, -1, 1,
-1, 1, 1, -1, -1, 1, 1, 1, -1, 1, 1, 1, 1, -1, 1, 1, -1, -1, 1, 1, -1, -1, -1, 1, -1, -1, 1, 1, 1, 1, -1, 1, -1, -1, -1, -1, 1, 1, 1, -1, 1,
-1, -1, 1, -1, 1, 1, 1, 1, -1, -1, -1, 1, 1, 1, -1, -1, 1, 1, 1, 1, 1, 1, 1, -1, 1, 1, 1, -1, -1, -1, -1, -1, -1, -1, 1, 1, 1, -1,
-1, 1, -1, -1, 1, -1, 1, -1, -1, -1, -1, 1, -1, -1, 1, 1, 1, 1, -1, -1, -1, 1, 1, -1, 1, -1, 1, 1, 1, 1, 1, -1, -1, 1, -1, 1, 1, -1, -1, 1, 1,
-1, -1, -1, -1, -1, -1, 1, 1, 1, 1, 1, -1, 1, 1, 1, 1, 1, -1, 1, 1, 1, -1, -1, -1, 1, 1, -1, -1, 1, -1, 1, -1, -1, -1, -1, 1, -1, -1, -1, 1, 1, 1,
1, -1, -1, 1, -1, 1, 1, 1, 1, -1, -1, 1, -1, 1, 1, 1, -1, -1, -1, 1, 1, 1, -1, 1, -1, -1, 1, 1, 1, -1, 1, 1, 1, 1, 1, 1, 1, 1, -1, 1, -1, -1,
-1, 1, 1, 1, 1, 1, 1, -1, -1, 1, -1, -1, 1, -1, -1, 1, 1, -1, 1, - 1, 1, 1, -1, 1, -1, 1, 1, 1, -1, 1, 1, 1, 1, -1, -1, 1, -1, 1, 1, 1, 1, -1, 1, -1,
-1, 1, -1, 1, -1, -1, -1, -1, 1, 1, 1, 1, -1, 1, - 1, 1, 1, 1, 1, -1, -1, 1, 1, -1, -1, -1, 1, 1, 1, -1, -1, -1, -1, -1, 1, 1, -1, 1, -1, 1, -1, -1,
1, 1, -1, -1, -1, -1, -1, 1, -1, 1, 1, 1, 1, 1, -1, 1, 1, -1, 1, 1, -1, -1, -1, -1, 1, 1, -1, 1, -1, 1, -1, -1, -1, 1, 1, 1, 1, 1, 1, 1, 1, 1, 1,
-1, -1, 1, -1, 1, -1, 1, -1, 1, -1, -1, -1, 1, 1, 1, 1, 1, 1, 1, 1, 1, -1, 1, -1, 1, 1, 1, -1, -1, 1, 1, -1, 1, 1, 1, 1, -1, -1, -1, 1,

-1, -1, -1, -1, 1, 1, -1, -1, -1, -1, 1, 1, -1,1,-1, 1, -1, -1, 1, -1, -1, -1, 1, -1, -1, -1, -1, 1, -1, 1, 1, -1, -1, -1, 1, -1, -1, 1, -1, -1,
1, 1, -1, 1, 1, 1, -1, 1, 1, 1, -1, -1, -1, 1, -1, 1, -1, 1, 1, -1, 1, 1, -1, 1, 1, 1, 1, -1, 1, -1, -1, -1, -1, -1, 1, -1, 1, -1,
1, 1, 1, -1, -1, 1, -1, 1, 1, -1, -1, -1, 1, 1, 1, -1, 1, 1, 1, -1, -1, -1, -1, 1, -1, -1, 1, 1, -1, 1, -1, -1, -1, -1, 1, 1, -1, -1, -1, -1,
-1, 1, -1, - 1, 1, 1, 1, -1, -1, 1, 1, -1, -1, 1, -1, -1, -1, 1, -1, -1, 1, 1, 1, 1, 1, -1, -1, -1, 1, 1, 1, 1, -1, 1, 1, 1, 1, 1, 1, 1, -1, 1,
1, -1, 1, 1, 1, -1, -1, 1, -1, -1, 1, 1, 1, 1, -1, -1, 1, 1, -1, -1, 1, 1, -1, 1, 1, -1, -1, 1, 1, 1, 1, 1, 1, 1, 1, 1, 1, -1, -1, -1, 1, -1,
-1, 1, 1, 1, -1, 1, 1, 1, 1, -1, -1, 1, -1, 1, -1, 1, -1, 1, -1, -1, 1, -1, -1, -1, 1, 1, -1, 1, -1, -1, 1, 1, 1, 1, -1, -1, 1, 1, 1, -1, -1,
-1, -1, -1, 1, 1, 1, -1, 1, -1, 1, -1, 1, -1, 1, -1, 1, 1, 1, 1, 1, 1, -1, 1, -1, -1, 1, 1, -1, -1, 1, -1, -1, -1, -1, - 1, 1, 1, -1, -1, 1, -1, 1,
-1, 1, -1, 1, 1, -1, 1, -1, -1, 1, -1, -1, 1, -1, 1, 1, -1, -1, 1, -1, -1, -1, -1, -1, 1, -1, -1, -1, 1, -1, -1, 1, -1, -1, 1, -1, 1, 1, 1, 1,
-1, -1, -1, 1, 1, -1, 1, -1, -1, -1, -1, 1, 1, -1, -1, -1, 1, 1, -1, 1, -1, -1, 1, -1, 1, 1, 1, 1].

In an embodiment, Sn2048₄ may be as follows: Sn2048₄ = [1, -1, -1, 1, -1, 1, 1, 1, -1, 1, 1, 1, -1, 1, -1, -1, 1, -
1, -1, -1, 1, 1, 1, -1, 1, 1, 1, 1, -1, -1, 1, 1, -1, -1, -1, 1, -1, -1, -1, 1, -1, 1, -1, 1, 1, -1, 1, 1, 1, -1, 1, 1, 1, -1, -1, 1, -1, 1, -1,
1, -1, -1, -1, -1, 1, -1, 1, 1, -1, 1, 1, -1, -1, -1, 1, 1, -1, 1, 1, -1, -1, 1, -1, -1, -1, 1, -1, 1, 1, -1, 1, 1, - 1, 1, -1, -1, 1, 1, 1, 1,
-1, -1, -1, -1, -1, -1, -1, 1, -1, -1, 1, -1, -1, -1, -1, 1, 1, 1, 1, 1, 1, -1, 1, -1, -1, -1, 1, 1, 1, - 1, 1, -1, 1, 1, 1, -1, -1, 1, -1, -1,
-1, -1, -1, -1, -1, 1, 1, -1, 1, 1, 1, -1, 1, -1, -1, -1, 1, -1, -1, 1, 1, 1, -1, 1, 1, - 1, 1, 1, -1, 1, 1, -1, 1, 1, 1, 1, -1, 1, 1, 1,
-1, 1, -1, 1, -1, 1, 1, 1, -1, -1, -1, -1, 1, -1, 1, 1, -1, -1, -1, -1, -1, -1, -1, 1, -1, -1, 1, 1, -1, 1, 1, 1, 1, -1, -1, 1, 1, -1, 1, -1,
-1, -1, 1, -1, -1, 1, -1, 1, 1, 1, -1, 1, 1, 1, -1, -1, -1, 1, -1, -1, - 1, 1, 1, 1, -1, 1, -1, -1, 1, 1, -1, -1, 1, 1, -1, 1, 1, 1, 1, 1, 1, 1,
1, 1, 1, 1, 1, -1, -1, -1, -1, -1, 1, -1, 1, 1, -1, 1, -1, 1, 1, -1, 1, 1, -1, 1, -1, -1, -1, -1, 1, 1, -1, -1, -1, -1, 1, -1, 1, -1, 1, 1, 1, -1,
-1, 1, 1, -1, 1, 1, -1, 1, 1, 1, -1, 1, 1, 1, -1, - 1, 1, 1, -1, -1, 1, 1, 1, -1, 1, -1, 1, -1, -1, -1, 1, -1, 1, -1, -1, -1, -1, 1, 1, -1, 1, -1,
-1, -1, 1, 1, 1, -1, -1, -1, 1, -1, - 1, -1, -1, -1, -1, -1, -1, -1, 1, 1, 1, 1, -1, 1, -1, 1, 1, -1, -1, -1, -1, 1, 1, 1, -1, 1, -1, -1, -1, 1,
1, -1, -1, 1, 1, 1, -1, -1, 1, 1, -1, -1, 1, 1, -1, 1, -1, 1, 1, 1, 1, -1, 1, 1, -1, -1, -1, 1, -1, 1, -1, -1, 1, -1, -1, 1, 1, 1, 1, 1, 1, -1,
1, -1, 1, - 1, -1, -1, -1, -1, 1, -1, 1, 1, 1, 1, -1, -1, -1, -1, 1, -1, 1, 1, 1, -1, 1, -1, -1, -1, 1, -1, 1, -1, 1, -1, 1, -1, -1, -1, 1, -1,
-1, -1, -1, 1, -1, -1, 1, 1, -1, -1, -1, 1, -1, 1, -1, -1, 1, -1, -1, 1, 1, 1, 1, -1, -1, 1, 1, -1, -1, 1, 1, 1, -1, 1, 1, 1, 1, 1, -1, -1, -1,
1, -1, -1, 1, 1, 1, -1, -1, -1, -1, 1, -1, -1, 1, -1, -1, 1, 1, 1, -1, -1, -1, 1, 1, -1, 1, -1, -1, -1, 1, 1, 1, 1, 1, 1, 1, 1, -1, 1, 1, 1, -1,
-1, -1, 1, 1, -1, 1, 1, 1, 1, 1, -1, 1, 1, 1, 1, 1, -1, 1, 1, 1, -1, 1, -1, -1, -1, 1, 1, 1, 1, -1, -1, -1, -1, -1, -1, 1, -1, 1, 1, -1, -1, 1,
-1, 1, -1, 1, -1, -1, 1, 1, -1, 1, -1, 1, 1, 1, 1, 1, -1, -1, -1, -1, 1, 1, 1, -1, -1, -1, 1, 1, 1, -1, 1, -1, 1, 1, 1, 1, 1, 1, 1, 1, 1, -1,
-1, -1, 1, 1, -1, 1, 1, -1, 1, 1, -1, -1, -1, 1, -1, -1, -1, 1, 1, 1, -1, 1, -1, -1, 1, 1, 1, -1, 1, 1, 1, -1, -1, 1, 1, -1, 1, -1, 1, -1, 1, -1,
-1, 1, -1, 1, 1, 1, -1, -1, 1, -1, 1, -1, -1, -1, 1, 1, -1, 1, -1, 1, 1, 1, 1, 1, 1, 1, -1, -1, -1, 1, 1, 1, 1, 1, -1, 1, 1, 1, 1, -1, -1, -1,
1, 1, 1, -1, 1, 1, 1, -1, -1, 1, 1, 1, 1, 1, 1, -1, 1, -1, 1, 1, 1, -1, 1, 1, -1, 1, 1, 1, 1, -1, -1, 1, -1, 1, 1, -1, -1, 1, -1, -1, 1, 1, -1,
-1, -1, 1, -1, 1, -1, -1, -1, 1, 1, 1, -1, -1, -1, -1, -1, 1, -1, -1, 1, -1, 1, 1, -1, -1, 1, -1, -1, 1, -1, 1, 1, 1, -1, -1, -1, 1, 1, 1, -1,
1, 1, 1, -1, -1, 1, -1, -1, -1, -1, 1, - 1, 1, 1, -1, -1, 1, -1, 1, 1, -1, -1, -1, -1, 1, 1, 1, 1, 1, -1, -1, -1, 1, 1, -1, -1, -1, -1, -1, 1, 1,
-1, -1, -1, 1, -1, 1, 1, 1, -1, -1, 1, 1, 1, 1, -1, -1, 1, 1, 1, 1, -1, 1, 1, -1, -1, -1, -1, -1, -1, 1, -1, -1, 1, 1, -1, 1, -1, -1, 1,
-1, -1, 1, -1, - 1, -1, -1, -1, 1, 1, -1, 1, -1, 1, 1, 1, -1, 1, 1, 1, -1, -1, 1, 1, -1, -1, 1, 1, -1, 1, 1, 1, 1, -1, -1, -1, 1, -1, 1, 1, -1,
1, 1, -1, 1, 1, 1, -1, 1, -1, 1, -1, 1, -1, 1, 1, 1, 1, -1, 1, 1, 1, 1, -1, 1, 1, -1, -1, -1, 1, 1, 1, 1, -1, 1, -1, -1, -1, -1, -1, 1,-1,
-1,1,1,1,1, -1,1, -1, -1,1, -1, -1,1,1, -1,1, -1, -1,1, -1,1,1, 1, 1, 1, 1, 1, 1, -1,1, 1, 1, 1, 1, -1,1, -1,1,-1, -1, 1, 1, 1, 1, -1, -1,
1, -1, -1, 1, 1, 1, -1, -1, -1, -1, -1, 1, 1, -1, -1, -1, 1, -1, 1, 1, -1, 1, 1, 1, -1, -1, 1, -1, 1, 1, - 1, -1, -1, -1, 1, 1, -1, 1, -1, 1,
-1, -1, -1, -1, -1, -1, 1, -1, 1, 1, 1, -1, 1, -1, 1, -1, 1, -1, -1, -1, -1, -1, -1, 1, -1, 1, 1, 1, 1, 1, -1, -1, 1, -1, 1, -1, 1, 1, -1, -1,
1, -1, 1, -1, 1, 1, -1, 1, 1, 1, 1, -1, 1, -1, -1, 1, 1, -1, -1, 1, 1, 1, 1, 1, -1, - 1, 1, 1, 1, 1, -1, 1, -1, 1, 1, -1, -1, 1, 1, -1, 1, -1, 1,
-1, 1, 1, 1, 1, -1, 1, -1, -1, -1, 1, 1, -1, -1, 1, -1, -1, -1, -1, 1, 1, 1, -1, 1, -1, -1, 1, -1, -1, -1, 1, -1, -1, 1, -1, -1, -1, -1, -1, 1,
1, 1, 1, 1, 1, 1, 1, 1, -1, -1, 1, -1, 1, -1, -1, 1, -1, -1, -1, -1, -1, 1, -1, -1, -1, 1, 1, 1, 1, 1, 1, 1, -1, 1, -1, -1, -1, 1, -1, 1,
1, 1, -1, -1, 1, 1, 1, -1, -1, -1, -1, -1, -1, - 1, 1, 1, 1, -1, -1, 1, 1, 1, 1, -1, 1, -1, 1, -1, 1, 1, 1, -1, 1, 1, -1, -1, -1, 1, -1, -1, 1,
1, -1, 1, -1, -1, -1, -1, 1, 1, -1, 1, 1, -1, -1, 1, -1, 1, -1, 1, 1, -1, 1, 1, -1, 1, -1, 1, 1, -1, -1, 1, 1, -1, 1, -1, -1, -1, 1, -1, 1, 1,
-1, 1, 1, -1, -1, 1, -1, 1, -1, 1, -1, -1, -1, 1, -1, 1, -1, -1, -1, 1, 1, 1, 1, -1, 1, 1, -1, -1, 1, -1, -1, 1, -1, 1, 1, -1, -1, 1, -1, -1, 1,
1, -1, -1, - 1, -1, -1, -1, 1, 1, 1, 1, 1, -1, -1, -1, 1, 1, -1, -1, 1, -1, -1, -1, 1, -1, -1, -1, -1, -1, 1, -1, 1, 1, 1, -1, -1, 1, -1, 1, -1, -
1, -1, 1, -1, -1, 1, -1, 1, 1, 1, -1, -1, -1, -1, 1, -1, -1, -1, -1, 1, -1, -1, -1, 1, -1, 1, 1, 1, -1, -1, -1, -1, -1, 1, 1, 1, - 1, 1, -1, -1,
-1, -1, -1, 1, 1, -1, 1, 1, -1, 1, -1, -1, -1, 1, -1, -1, -1, 1, -1, -1, 1, 1, -1, -1, -1, 1, -1, -1, -1, 1, 1, 1, - 1, -1, 1, 1, 1, 1, -1, -1,
-1, 1, -1, -1, 1, 1, -1, -1, -1, 1, -1, 1, -1, 1, -1, -1, 1, 1, 1, -1, -1, 1, 1, -1, 1,1,-1, -1, 1, -1, 1, 1, 1, -1, 1, 1, 1, 1, 1, -1, 1,
-1, -1, 1, -1, 1, 1, -1, 1, 1, 1, 1, 1, -1, -1, 1, 1, -1, -1, -1, -1, 1, 1, -1, -1, 1, 1, -1, 1, -1, 1, -1, 1, -1, -1, 1, -1, -1, -1, -1, 1, 1,
-1, 1, -1, -1, 1, 1, -1, -1, 1, -1, -1, -1, 1, 1, -1, 1, 1, 1, -1, -1, 1, 1, 1, 1, 1, 1, -1, 1, 1, 1, -1, -1, -1, -1, 1, -1, -1, 1, -1, -1, -1,
-1, 1, 1, 1, 1, -1, 1, -1, -1, -1, 1, 1, -1, -1, -1, 1, 1, 1, 1, -1, -1, 1, 1, -1, 1, -1, -1, -1, 1, 1, 1, 1, -1, -1, 1, 1, 1, -1, -1, 1,
1, -1, -1, 1, -1, -1, 1, -1, 1, -1, -1, 1, -1, -1, -1, -1, -1, -1, -1, -1, -1, -1, 1, -1, 1, -1, 1, 1, -1, 1, 1, -1, -1, 1, 1, -1, 1, 1, 1, 1,
-1, 1, -1, -1, 1, -1, -1, 1, 1, 1, 1, 1, -1, -1, -1, 1, 1, 1, -1, -1, 1, 1, 1, 1, 1, -1, 1, 1, 1, -1, -1, -1, -1, 1, -1, -1, 1, -1, -1, -1,
-1, - 1, -1, 1, 1, -1, 1, 1, -1, -1, 1, 1, 1, 1, 1, 1, -1, -1, 1, 1, -1, 1, -1, -1, -1, 1, 1, 1, -1, -1, -1, 1, 1, 1, 1, -1, -1, 1, 1, 1, 1, - 1,
1, -1, 1, 1, -1, -1, -1, 1, 1, -1, 1, -1, -1, 1, -1, 1, -1, 1, 1, 1, -1, 1, 1, -1, 1, 1, 1, 1, -1, 1, -1, -1, 1, 1, -1, 1, -1, 1, 1, 1, -1,
1, -1, -1, 1, -1, -1, 1, 1, 1, -1, 1, 1, -1, 1, -1, -1, 1, 1, -1, 1, -1, -1, 1, 1, 1, 1, 1, -1, 1, -1, 1, 1, -1, 1, 1, - 1, 1, 1, -1, 1, -1, -1,
-1, 1, -1, -1, -1, -1, 1, 1, 1, 1, 1, -1, -1, 1, 1, 1, 1, -1, -1, -1, 1, 1, 1, -1, 1, 1, 1, 1, -1, 1,-1, 1, 1, -1, 1, 1, -1, 1, 1, 1,
-1, 1, -1, -1, -1, -1, 1, 1, 1, 1, 1, -1, -1, 1, 1, 1, 1, -1, -1, -1, 1, 1, 1, 1, -1, 1, -1, 1, 1, 1, 1, -1, -1, -1, 1, 1, 1, 1, 1, 1, -1, 1, 1,
1, -1, -1, 1, -1, -1, -1, 1, 1, -1, 1, 1, -1, -1, 1, 1, -1, 1, 1, 1, 1, -1, 1, 1, -1, -1, -1, 1, -1, 1, -1, -1, 1, -1, -1, 1, 1, 1, 1, 1, 1, -1,
1, -1, -1, 1, -1, -1, 1, -1, 1, -1, -1, 1, -1, -1, -1, -1, -1, -1, -1, -1, -1, -1, 1, -1, 1, -1, 1, 1, -1, 1, 1, -1, -1, 1, 1, -1, 1, 1, 1, 1,
-1, 1, -1, -1, 1, -1, -1, 1, 1, 1, 1, 1, -1, -1, -1, 1, 1, 1, -1, -1, 1, 1, 1, 1, 1, -1, 1, 1, 1, -1, -1, -1, -1, 1, -1, -1, 1, -1, 1, 1, 1,
-1, - 1, -1, 1, 1, -1, 1, 1, -1, -1, 1, 1, 1, 1, 1, 1, 1, -1, -1, 1, 1, -1, 1, -1, -1, -1, 1, 1, 1, -1, -1, -1, 1, 1, 1, -1, -1, 1, 1, 1, 1, - 1,
1, -1, 1, 1, -1, -1, -1, 1, 1, -1, 1, -1, -1, 1, -1, 1, -1, 1, 1, 1, -1, 1, 1, -1, 1, 1, 1, 1, -1, 1, -1, -1, 1, 1, -1, 1, -1, 1, 1, 1, -1,
1, -1, -1, 1, -1, -1, 1, 1, 1, -1, 1, 1, -1, 1, -1, -1, 1, 1, -1, 1, -1, -1, 1, 1, 1, 1, 1, -1, 1, -1, 1, 1, -1, 1, 1, - 1, 1, 1, -1, 1, -1, -1,
-1, 1, -1, 1, 1, 1, 1, -1, 1, -1, -1, -1, 1, -1, -1, 1, 1, 1, -1, -1, 1, 1, 1, 1, -1, 1, 1, 1, -1, 1,-1, 1, 1, -1, 1, 1, -1, 1, 1, 1,
-1, 1, -1, -1, -1, -1, 1, 1, 1, 1, 1, -1, -1, 1, 1, 1, 1, -1, 1, 1, 1, 1, 1, 1, -1, 1, 1, -1, 1, -1, 1, -1, -1, -1, -1, 1, 1, 1, 1, 1, 1, -1, 1, 1,

-1, 1, 1, -1, -1, 1, -1, 1, 1, 1, 1, -1, 1, 1, 1, -1, -1, -1, -1, 1, 1, -1, -1, -1, -1, 1, -1, -1, -1, -1, -1, -1, -1, 1, -1, -1, 1, 1, -1, -1, -1, -1, -1, 1, -1, 1, 1, 1, -1, -1, -1, -1, -1, 1, -1, -1, 1, -1, - 1,-1,1,1,-1].

In an embodiment, Sn2048₅ may be as follows: Sn2048₅ = [-1, 1, -1, -1, -1, 1, -1, -1, -1, -1, 1, -1, -1, -1, 1, 1, -1, -1, -1, -1, -1, 1, -1, -1, -1, 1, -1, 1, 1, 1, 1, 1, -1, -1, -1, 1, -1, -1, -1, 1, 1, 1, 1, -1, 1, -1, 1, -1, 1, -1, -1, 1, -1, 1, -1, -1, 1, -1, -1, -1, 1, -1, 1, -1, -1, -1, 1, 1, 1, 1, -1, -1, -1, -1, 1, 1, 1, -1, 1, 1, 1, 1, -1, 1, 1, -1, 1, 1, 1, 1, - 1, 1, 1, -1, 1, -1, 1, -1, 1, 1, 1, -1, -1, -1, -1, 1, 1, -1, 1, 1, 1, 1, -1, -1, -1, 1, -1, -1, 1, -1, - 1, 1, -1, -1, 1, 1, 1, -1, -1, -1, 1, -1, 1, 1, -1, 1, 1, -1, 1, -1, 1, 1, -1, -1, 1, 1, 1, -1, 1, 1, 1, -1, 1, 1, 1, -1, 1, -1, -1, 1, 1, 1, -1, 1, 1, 1, -1, 1, 1, -1, -1, 1, -1, 1, 1, 1, -1, 1, 1, 1, 1, 1, -1, 1, 1, -1, - 1, -1, 1, -1, 1, -1, 1, -1, 1, 1, 1, -1, 1, 1, 1, 1, -1, 1, -1, -1, 1, -1, 1, -1, 1, 1, 1, -1, 1, 1, 1, 1, -1, 1, -1, -1, 1, -1, 1, -1, 1, -1, 1, -1, 1, -1, 1, -1, 1, -1, 1, -1, 1,-1, -1, -1, -1, -1, 1, -1, -1, -1, 1, 1, 1, -1, 1, 1, 1, 1, 1, -1, 1, -1, -1, 1, 1, 1, 1, -1, 1, 1, -1, -1, -1, 1, -1, 1, 1, 1, -1, -1, -1, -1, 1, 1, 1, 1, 1, 1, -1, 1, -1, 1, -1, -1, 1, 1, -1, -1, 1, -1, -1, 1, 1, -1, -1, -1, -1, 1, - 1, -1, 1, -1, -1, 1, 1, -1, -1, -1, -1, -1, -1, -1, 1, 1, -1, -1, -1, 1, 1, -1, -1, -1, 1, -1, -1, -1, -1, -1, -1, -1, 1, 1, -1, 1, -1, -1, 1, -1, 1, -1, -1, -1, -1, 1, 1, 1, -1, 1, 1, 1, 1, -1, -1, -1, -1, -1, 1, 1, 1, -1, -1, 1, -1, 1, 1, 1, 1, -1, 1, 1, 1, -1, -1, -1, 1, -1, -1, -1, 1, -1, 1, -1, 1, -1, -1, -1, - 1, 1, 1, 1, -1, -1, -1, 1, 1, 1, 1, -1, -1, 1, 1, -1, 1, 1, 1, 1, -1, 1, 1, -1, -1, 1, -1, -1, 1, 1, 1, -1, -1, 1, -1, 1, 1, 1, 1, -1, 1, - 1, 1, 1, 1, -1, 1, 1, -1, -1, -1, -1, 1, -1, 1, 1, -1, -1, 1, -1, -1, 1, -1, -1, -1, -1, -1, 1, -1, 1, -1, - 1, 1, 1, 1, -1, -1, 1, 1, -1, 1, 1, 1, 1, 1, -1, 1, 1, -1, 1, 1, -1, -1, -1, -1, 1, 1, -1, 1, -1, -1, -1, -1, 1, -1, 1, -1, -1, -1, 1, -1, 1, -1, -1, -1, - 1, 1, 1, 1, -1, -1, 1, -1, 1, 1, 1, 1, -1, 1, 1, 1, -1, -1, 1, 1, 1, 1, -1, 1, 1, 1, 1, -1, 1, 1, -1, 1, 1, -1, -1, -1, 1, 1, -1, 1, -1, -1, 1, 1, 1, 1, 1, -1, -1, -1, 1, -1, 1, -1, -1, -1, 1, 1, -1, -1, 1, 1, -1, 1, -1, 1, -1, -1, -1, -1, 1, -1, -1, -1, -1, 1, -1, -1, -1, 1, 1, -1, -1, 1, 1, -1, 1, -1, 1, 1, 1, 1, 1, -1, 1, 1, -1, -1, -1, 1, 1, 1, 1, 1, -1, -1, 1, -1, -1, 1, 1, 1, 1, 1, -1, -1, 1, -1, -1, 1, -1, 1, -1, -1, -1, -1, 1, 1, 1, 1, -1, 1, 1, 1, 1, -1, -1, -1, -1, 1, 1, 1, -1, -1, -1, 1, -1, -1, -1, - 1, 1, 1, 1, -1, -1, 1, -1, 1, 1, 1, 1, -1, 1, 1, 1, 1, 1, -1, -1, 1, -1, 1, 1, -1, -1, 1, 1, 1, 1, -1, -1, 1, -1, 1, -1, -1, -1, -1, 1, -1, -1, 1, 1, -1, -1, 1, -1, 1, 1, 1, 1, -1, -1, -1, 1, -1, 1, 1, 1, 1, -1, -1, 1, -1, -1, 1, -1, -1, 1, 1, 1, 1, -1, -1, 1, 1, -1, -1, 1, 1, 1, 1, -1, -1, 1, 1, 1, 1, -1, 1, -1, -1, -1, 1, 1, 1, -1, -1, -1, -1, 1, -1, 1, 1, -1, -1, -1, -1, 1, -1, 1, -1, -1, - 1, 1, 1, 1, -1, -1, 1, -1, 1, 1, 1, 1, -1, 1, 1, 1, 1, 1, -1, -1, 1, 1, -1, -1, -1, -1, 1, -1, 1, 1, -1, 1, -1, -1, -1, -1, -1, -1, 1, -1, 1, -1, -1, 1, 1, 1, 1, -1, 1, 1, -1, -1, 1, -1, -1, -1, 1, 1, -1, -1, -1, -1, -1, -1, -1, 1, -1, 1, -1, -1, -1, 1, 1, 1, -1, -1, -1, -1, -1, -1, -1, 1, -1, 1, 1, 1, 1, -1, -1, -1, 1, -1, -1, -1, -1, -1, -1, -1, 1, 1, -1, -1, -1, 1, 1, -1, -1, -1, -1, -1, - 1, 1, 1, 1, -1, 1, 1, 1, 1, -1, -1, 1, -1, -1, -1, -1, 1, -1, 1, 1, -1, -1, 1, 1, 1, 1, -1, 1, 1, -1, -1, -1, 1, 1, 1, 1, -1, -1, 1, -1, 1, -1, -1, -1, -1, 1, 1, -1, -1, 1, -1, 1, 1, 1, -1, 1, -1, -1, -1, -1, 1, 1, 1, -1, -1, -1, -1, -1, 1, -1, 1, 1, 1, -1, -1, -1, -1, 1, -1, 1, -1, -1, -1, - 1, 1, 1, 1, 1, -1, -1, 1, -1, 1, 1, 1, 1, -1, -1, 1, -1, 1, 1, 1, 1, -1, -1, 1, -1, 1, 1, 1, 1, -1, -1, -1, 1, 1, -1, -1, 1, -1, -1, -1, -1, 1, -1, 1, -1, -1, -1, 1, 1, 1, -1, -1, 1, -1, 1, 1, 1, 1, -1, -1, 1, -1, 1, 1, 1, 1, -1, -1, -1, -1, 1, -1, -1, 1, 1, 1, -1, -1, -1, 1, -1, 1, 1, -1, -1, 1, -1, -1, -1, -1, 1, -1, 1, -1, -1, -1, 1, 1, -1, -1, 1, 1, 1, 1, -1, 1, -1, -1, -1, -1, 1, 1, -1, -1, 1, -1, -1, 1, 1, -1, -1, -1, -1, 1, 1, 1, -1, -1, 1, -1, 1, 1, 1, 1, -1, 1, -1, -1, -1, -1, 1, 1, 1, -1, -1, 1, -1, 1, 1, 1, 1, -1, 1, 1, 1, 1, -1, -1, 1, 1, -1, -1, -1, -1, 1, -1, 1, 1, -1, -1, 1, -1, -1, -1, 1, 1, -1, 1, -1, -1, 1, -1, -1, 1, 1, -1, 1, -1, -1, 1, -1, -1, -1, 1, -1, -1, -1, 1, 1, -1, 1, -1, -1, -1, 1, 1, 1, 1, -1, -1, 1, -1, 1, 1, 1, 1, -1, 1, 1, -1, -1, 1, -1, -1, -1, 1, 1, -1, 1, -1, -1, -1, -1, 1, -1, 1, 1, -1, - 1, -1, -1, 1, 1, 1, 1, -1, -1, -1, -1, -1, -1, 1, 1, 1, 1, -1, -1, -1, 1, 1, 1, 1, -1, -1, -1, -1, 1, 1, -1, -1, -1, 1, 1, -1, -1, -1, -1, -1, 1, -1, 1, 1, -1, -1, 1, -1, -1, -1, -1, 1, -1, 1, -1, -1, -1, 1, 1, 1, -1, -1, -1, 1, -1, 1, 1, 1, 1, -1, -1, -1, 1, -1, 1, 1, 1, 1, -1, -1, 1, -1, 1, 1, -1, -1, - 1, 1, 1, 1, -1, 1, 1, 1, -1, -1, -1, 1, -1, 1, 1, 1, 1, -1, 1, -1, -1, 1, 1, 1, 1, -1, -1, -1, -1, -1, -1, 1, -1, -1, -1, -1, -1, 1, -1, -1, -1, 1, -1, -1, -1, -1, -1, -1, -1, 1, 1, -1, -1, -1, 1, 1, -1, -1, -1, 1, -1, -1, -1, -1, -1, -1, -1, 1, 1, -1, 1, -1, -1, 1, -1, 1, -1, -1, -1, -1, 1, 1, 1, -1, 1, -1, -1, 1, -1, 1, -1, -1, -1, -1, 1, 1, 1, -1, -1, -1, 1, 1, 1, 1, -1, -1, -1, -1, -1, -1, 1, -1, -1, 1, 1, 1, 1, -1, -1, 1, -1, 1, 1, 1, 1, -1, -1, 1, -1, 1, 1, 1, 1, - 1, -1, 1, 1, 1, 1, -1, -1, -1, -1, -1, -1, 1, -1, 1, 1, -1, -1, 1, -1, -1, -1, -1, 1, -1, 1, -1, -1, -1, 1, 1, 1, -1, -1, -1, -1, 1, -1, 1, 1, 1, 1, -1, -1, -1, 1, -1, 1, 1, 1, 1, -1, -1, 1, -1, -1, 1, -1, -1, 1, 1, 1, 1, -1, -1, 1, 1, -1, -1, 1, 1, 1, 1, -1, -1, 1, 1, 1, 1, -1, 1, -1, -1, -1, 1, 1, 1, -1, -1, -1, -1, 1, -1, 1, 1, -1, -1, -1, -1, 1, -1, 1, -1, -1, -1, 1, 1, 1, -1, -1, 1, -1, 1, 1, 1, 1, -1, 1, 1, 1, 1, 1, -1, -1, 1, 1, -1, -1, -1, -1, 1, -1, 1, 1, -1, 1, -1, -1, -1, -1, -1, -1, 1, -1, 1, -1, -1, 1, 1, 1, 1, -1, 1, 1, -1, -1, 1, -1, -1, -1, 1, 1, -1, -1, -1, -1, -1, -1, -1, 1, -1, 1, -1, -1, -1, 1, 1, 1, -1, -1, -1, -1, -1, -1, -1, 1, -1, 1, 1, 1, 1, -1, -1, -1, 1, -1, -1, -1, -1, -1, -1, 1, 1, -1, -1, -1, 1, 1, 1, 1, 1, 1, -1, 1, -1, -1, -1, 1, 1, 1, 1, -1, 1, 1, -1, -1, -1, 1, 1, 1, 1, -1, -1, 1, -1, 1, -1, -1, -1, -1, -1, -1, 1, 1, 1, -1, 1, 1, 1, -1, -1, -1, 1, -1, 1, 1, 1, 1, 1, -1, 1, 1, 1, 1, 1, 1, -1, -1, 1, 1, 1, 1, -1, -1, -1, 1, 1, -1, -1, -1, 1, 1, - 1, -1, 1, 1, 1, 1, -1, 1, 1, -1, 1, 1, -1, -1, -1, -1, 1, -1, -1, -1, -1, 1, 1, -1, -1, 1, -1, - 1, 1, -1,1, -1, -1, 1, 1, 1, 1, -1, -1, -1, -1, -1, -1, - 1, -1, 1, 1, -1, 1,1, -1, -1, 1, 1, 1, 1, -1, -1, -1, -1, 1, 1, -1, -1, -1, 1, 1, -1, -1, -1, -1, 1, -1, 1, 1, -1, -1, -1, -1, 1, 1, -1, -1, 1, 1, 1, 1, -1, -1, 1, 1, -1, -1, 1, 1, 1, 1, 1, -1, -1, 1, 1, -1, - 1, 1, 1, -1, -1, 1, 1, 1, 1, -1, -1, 1, 1, 1, 1, -1, -1, 1, -1, 1, -1, -1, -1, -1, 1, 1, 1, 1, -1, -1, 1, -1, 1, -1, -1, -1, 1, 1, 1, 1, -1, -1, -1, 1, 1, -1, -1, 1, 1, 1, 1, -1, -1, 1, -1,1,-1, 1, 1, -1,1, -1,1,1,1, -1, 1, 1, 1, 1, 1, -1,1,1, -1, -1,1, -1, -1,1, -1,1,1,1, -1, -1,1,1, -1,1, 1, -1, -1, -1, 1, 1, -1, 1, 1, 1, 1, 1, -1, 1, 1, 1, 1, 1, -1, -1, -1, 1, -1, - 25 -1, -1, 1, -1, -1, -1, -1, -1, 1, -1, -1, -1, -1, -1, -1, 1, -1, -1, 1, 1, 1, 1, - 1, -1, -1, -1, 1, 1, 1, 1, 1, - 1, -1, 1, 1, -1, 1, 1, 1, 1, 1, -1, -1, -1, -1, 1, 1, -1, -1, -1, -1, -1, 1, 1, 1, 1, 1, -1, -1, -1, -1, -1, 1, 1, 1, 1, 1, -1, -1, -1, -1, -1, 1, -1, -1, -1, 1, 1, 1, 1, -1, -1, -1, 1, 1, 1, 1, 1, 1, -1, 1, -1, -1, -1, 1, 1, 1, 1, -1, -1, -1, -1, -1, -1, 1, -1, -1, 1, 1, -1, 1, -1, -1, -1, 1, 1, -1, -1, 1, 1, 1, 1, -1, -1, 1, -1, 1, 1, 1, 1, -1, -1, 1, -1, -1, 1, -1, -1, 1, 1, 1, 1, -1, -1, 1, 1, -1, -1, 1, 1, 1, 1, -1, -1, 1, 1, 1, 1, -1, 1, -1, -1, -1, 1, 1, 1, -1, -1, -1, -1, 1, -1, 1, 1, -1, -1, -1, -1, 1, -1, 1, -1, -1, -1, 1, 1, 1, -1, -1, 1, -1, 1, 1, 1, 1, -1, 1, 1, 1, 1, 1, -1, -1, 1, 1, -1, -1, -1, -1, 1, -1, 1, 1, -1, 1, -1, -1, -1, -1, -1, -1, 1, -1, 1, -1, -1, 1, 1, 1, 1, -1, 1, 1, -1, -1, 1, -1, -1, -1, 1, 1, -1, -1, -1, -1, -1, -1, -1, 1, -1, 1, -1, -1, -1, 1, 1, 1, -1, -1, -1, -1, -1, -1, -1, 1, -1, 1, 1, 1, 1, -1, -1, -1, 1, -1, -1, -1, -1, -1, -1, 1, 1, -1, -1, -1, 1, 1, -1, -1, 1, 1, 1, 1, -1, -1, -1, -1, -1, -1, 1, -1, -1, 1, 1, -1, 1, -1, -1, -1, 1, 1, -1, -1, 1, 1, 1, 1, -1, -1, 1, -1, 1, 1, 1, 1, -1, -1, 1, -1, -1, -1, -1, -1, -1, 1, 1, -1, 1, -1, -1, 1, -1, 1, -1, -1, -1, -1, 1, 1, 1, -1, 1, -1, -1, 1, -1, 1, -1, -1, -1, -1, 1, 1, 1, -1, -1, -1, 1, 1, 1, 1, -1, -1, -1, -1, -1, -1, 1, -1, -1, 1, 1, 1, 1, -1, -1, 1, -1, 1, 1, 1, 1, -1, -1, 1, -1, 1, 1, 1, 1, -1, -1, - 1, -1, 1, 1, 1, 1, -1, -1, -1, -1, -1, -1, 1, 1, -1, -1, -1, 1, 1, 1, 1, -1, -1, -1, -1, 1, 1, -1, -1, -1, 1, 1, -1, -1, -1, -1, 1, -1, 1, 1, -1, -1, -1, -1, 1, 1, -1, -1, 1, 1, 1, 1, -1, -1, 1, 1, -1, -1, 1, 1, 1, 1, 1, -1, -1, 1, 1, -1, -1, -1, -1, 1, 1, 1, 1, -1, -1, 1, -1, 1, -1, -1, -1, 1, 1, 1, 1, -1, -1, -1, 1, 1, -1, -1, 1, 1, 1, 1, -1, -1, 1, -1, 1, -1, 1, 1, -1, 1, -1, 1, 1, 1, -1, 1, 1, 1, 1, 1, -1, 1, 1, -1, -1, 1, -1, -1, 1, -1, 1, 1, 1, -1, -1, 1, 1, -1, 1, 1, -1, -1, -1, 1, 1, -1, 1, 1, 1, 1, 1, -1, 1, 1, 1, 1, 1, -1, -1, -1, 1, -1,1, -1, -1, 1, 1, 1, 1, -1, -1, -1, -1, -1, -1, 1, 1, 1, -1, -1, 1, 1, 1, 1, 1, -1, -1, -1, -1, -1, -1, 1, 1, 1, -1, -1, 1, 1, 1, 1, 1, -1, -1, 1, -1, -1, 1, 1, 1, 1, 1, -1, -1, -1, 1, 1, 1, 1, 1, 1, -1, -1, -1, 1, 1, 1, 1, 1, -1, -1, 1, -1, -1, 1, 1, 1, 1, -1, -1, 1, -1, 1, 1, 1, 1, -1, -1, 1, 1, 1, 1, -1, -1, -1, -1, 1, 1, -1, -1, -1, 1, 1, -1, -1, -1, -1, -1, 1, -1, 1, 1, -1, -1, -1, -1, 1, 1, -1, -1, 1, 1, 1, 1, -1, -1, 1, 1, -1, -1, 1, 1, 1, 1, 1, -1, -1, 1, 1, -1,1,1,1,1, -1,1, -1,1,1,1, -1, 1, 1, 1, 1, 1, -1,1,1, -1, -1,1, -1, -1,1, -1,1, -1,1, -1, -1,1,1, -1, -1,1,1, -1,1,1, -1,1, -1, -1, -1, 1, 1, 1, 1, 1, -1, 1, 1, -1, -1, 1, -1, -1, 1, 1, 1, 1, 1, -1, 1, 1, 1, 1, 1, -1, -1, -1, 25 -1, -1, -1, -1, -1, -1, 1, 1, 1, 1, 1, -1, -1, -1, -1, -1, 1, 1, 1, 1, 1, -1, -1, -1, 1, 1, 1, 1, 1, 1, -1, -1, 1, 1, 1, 1, 1, -1, -1, 1, -1, -1, 1, 1, 1, 1, -1, -1, 1, -1, 1, 1, 1, 1, 1, -1, -1, 1, 1, 1, 1, -1, -1, -1, -1, 1, 1, -1, -1, -1, 1, 1, -1, -1, -1, -1, -1, 1, -1, 1, 1, -1, -1, -1, -1, 1, 1, -1, -1, 1, 1, 1, 1, -1, -1, 1, 1, -1, -1, 1, 1, 1, 1, 1, -1, -1, 1, 1, - 40 -1, 1, 1, -1, 1, 1, -1, 1, 1, -1, 1, 1, 1, 1, -1, 1, 1, 1, 1, -1, -1, 1, -1, 1, -1, -1, -1, -1, 1, -1, -1, 1, 1, -1, -1, 1, -1, 1, 1, 1, 1, -1, -1, -1, 1, -1, 1, 1, 1, 1, -1, -1, 1, -1, -1, 1, -1, -1, 1, 1, 1, 1, -1, -1, 1, 1, -1, -1, 1, 1, 1, 1, -1, -1, 1, 1, 1, 1, -1, 1, -1, -1, -1, 1, 1, 1, -1, -1, -1, -1, 1, -1, 1, 1, -1, -1, -1, -1, 1, -1, 1, -1, -1, -1, 1, 1, 1, -1, -1, 1, -1, 1, 1, 1, 1, -1, 1, 1, 1, 1, 1, -1, -1, 1, 1, -1, -1, -1, -1, 1, -1, 1, 1, -1, 1, -1, -1, -1, -1, -1, -1, 1, -1, 1, -1, -1, 1, 1, 1, 1, -1, 1, 1, -1, -1, 1, -1, -1, -1, 1, 1, -1, -1, -1, -1, -1, -1, -1, 1, -1, 1, -1, -1, -1, 1, 1, 1, -1, -1, -1, -1, -1, -1, -1, 1, -1, 1, 1, 1, 1, -1, -1, -1, 1, -1, -1, -1, -1, -1, -1, 1, 1, -1, -1, -1, 1, 1, -1, -1, 1, 1, 1, 1, -1, -1, -1, -1, -1, -1, 1, -1, -1, 1, 1, 1, 1, -1, -1, 1, -1, 1, 1, 1, 1, -1, -1, 1, -1, 1, 1, 1, 1, -1, -1, -1, -1, 1, 1, 1, 1, -1, 1, 1, -1, -1, 1, -1, -1, 1, 1, 1, 1, -1, -1, -1, -1, 1, 1, 1, 1, -1, 1, 1, 1, 1, -1, -1, -1, -1, -1, -1, 1, -1, -1, 1, 1, -1, 1, -1, -1, -1, 1, 1, -1, -1, 1, 1, 1, 1, -1, -1, 1, -1, 1, 1, 1, 1, -1, -1, 1, -1, -1, -1, -1, -1, -1, 1, 1, -1, 1, -1, -1, 1, -1, 1, -1, -1, -1, -1, 1, -1, 1, 1, -1, -1, -1, -1, -1, -1, 1, 1, -1, -1, 1, 1, 1, 1, 1, -1, -1, 1, 1, 1, 1, -1, - 50 1, 1, -1, -1, -1, 1, 1, 1, -1, -1, 1, -1, 1, -1, 1, 1, -1, 1, -1, -1, 1, 1, -1, -1, 1, -1, -1, 1, 1, -1, -1, 1, 1, -1, -1, 1, -1, 1, -1, -1, 1, -1, 1, 1, 1, -1, 1, -1, 1, 1, 1, -1, -1, 1, 1, 1, 1, -1, - 1, -1, 1, 1, -1, 1, 1, 1, -1, -1, 1, -1, -1, -1, 1, 1, -1, 1, 1, -1, -1, 1, 1, -1, -1, 1, -1, 1, 1, 1, -1, 1, 1, -1, 1, 1, 1, 1, 1, -1, 1, 1, 1, 1, 1, -1, 1, -1, -1, 1, 1, -1, 1, 1, 1, 1, 1, -1, 1, 1, -1, 1, -1, 1, 1, -1, 1, 1, 1, -1, 1, 1, 1, 1, 1, -1, 1, 1, 1, 1, 1, 1, -1, -1, 1, 1, 1, 1, -1, -1, -1, 1, 1, -1, -1, -1, 1, 1, -1, - 1, 1, 1, 1, -1, -1, 1].

In an embodiment, Sn2048₅ may be as follows: Sn2048₆ = [1, -1, -1, -1, 1, -1, 1, -1, -1, -1, -1, 1, 1, 1, 1, 1, 1, 1, -1, 1, 1, -1, 1, 1, 1, 1, 1, 1, -1, -1, -1, 1, 1, 1, -1, 1, 1, -1, 1, 1, -1, 1, 1, -1, 1, 1, -1, 1, 1, -1, -1, 1, -1, -1, 1, 1, 1, -1, -1, 1, 1, -1, -1, 1, -1, 1, 1, 1, -1, -1, 1, 1, -1, -1, 1, -1, 1, 1, -1, -1, 1, 1, -1, -1, 1, 1, -1, -1, -1, 1, 1, -1, -1, 1, 1, -1, -1, 1, -1, -1, 1, 1, -1, -1, 1, 1, -1, -1, 1, 1, 1, 1, 1, -1, -1, -1, 1, 1, -1, -1, 1, 1, 1, - 1, 1, 1, 1, 1, -1, 1, -1, 1, -1, 1, 1, 1, 1, 1, 1, -1, 1, 1, -1, -1, 1, 1, 1, -1, 1, 1, -1, 1, 1, -1, -1, -1, -1, 1, -1, -1, -1, -1, -1, 1, 1, -1, 1, 1, 1, 1, 1, 1, -1, - 1, 1, 1, 1, 1, -1, 1, -1, 1, 1

1, 1, -1, -1, -1, -1, 1, 1, 1, -1, -1, 1, 1, 1, 1, -1, -1, -1, 1, -1, 1, -1, -1, 1, 1, 1, -1, 1, 1, 1, -1, -1, -1, -1, -1, -1, -1, -1, 1, 1, -1,
1, 1, -1, -1, 1, -1, 1, 1, 1, -1, -1, 1, -1, -1, -1, -1, 1, -1, -1, -1, 1, 1, 1, 1, -1, -1, -1, 1, 1, 1, 1, -1, -1, -1, 1, -1, -1, 1, 1, -1, 1,
1, -1, 1, -1, 1, -1, -1, -1, 1, -1, 1, 1, 1, -1, -1, -1, - 1, -1, 1, 1, 1, -1, 1, 1, 1, 1, 1, -1, -1, 1, 1, 1, -1, 1, 1, -1, -1, 1, -1, 1, -1,
1, 1, -1, -1, -1, -1, -1, 1, 1, 1, -1, -1, 1, 1, -1, -1, -1, 1, 1, -1, -1, 1, -1, 1, 1, -1, -1, 1, -1, 1, -1, 1, 1, -1, -1, 1, 1, -1, 1, 1, -1,
1, 1, 1, 1, 1, 1, -1, 1, -1, -1, -1, -1, -1, 1, 1, 1, 1, -1, 1, 1, 1, 1, -1, -1, 1, -1, -1, -1, 1, -1, -1, 1, -1, 1, -1, -1, -1, 1, -1, -1, 1, 1,
1, -1, -1, 1, -1, 1, 1, - 1, 1, -1, 1, 1, -1, -1, -1, 1, 1, 1, -1, -1, 1, 1, -1, -1, 1, -1, 1, -1, 1, -1, 1, -1, -1, -1, -1, -1, 1, 1, -1, 1, -1, 1,
-1, 1, 1, 1, -1, -1, -1, 1, 1, -1, 1, -1, 1, -1, -1, 1, 1, 1, -1, 1, 1, 1, 1, -1, -1, -1, 1, -1, 1, 1, -1, 1, -1, 1, 1, 1, 1, -1, 1, 1, -1,
1, -1, 1, 1, 1, -1, 1, 1, 1, -1, 1, 1, 1, 1, 1, 1, 1, -1, 1, 1, -1, 1, 1, 1, -1, -1, 1, 1, 1, -1, 1, -1, -1, -1, -1, -1, 1, 1, -1, -1, 1,
1, 1, -1, 1, 1, -1, 1, 1, 1, -1, -1, 1, 1, -1, -1, 1, 1, 1, -1, 1, 1, -1, 1, -1, -1, 1, 1, 1, 1, 1, -1, 1, 1, 1, -1, 1, -1, -1, 1, -1, -1, 1,
-1, 1, 1, -1, 1, 1, 1, 1, 1, -1, 1, 1, 1, -1, 1, 1, 1, 1, 1, -1, -1, -1, 1, -1, -1, -1, -1, 1, -1, -1, -1, -1, 1, 1, -1, 1, 1, 1, 1, -1, -1,
1, -1, -1, -1, 1, 1, 1, 1, -1, 1, -1, -1, 1, 1, -1, 1, 1, -1, 1, -1, -1, -1, -1, -1, -1, 1, -1, 1, - 1, 1, -1, 1, 1, 1, -1, 1, 1, 1, 1, -1, 1, 1,
-1, 1, -1, 1, -1, -1, -1, -1, -1, 1, -1, -1, 1, -1, -1, -1, -1, -1, 1, 1, 1, -1, 1, 1, 1, -1, - 1, -1, -1, -1, 1, -1, -1, -1, -1, 1, 1, -1, 1, -1, 1, -1,
-1, -1, 1, -1, 1, -1, -1, -1, 1, -1, -1, -1, 1, -1, 1, 1, -1, -1, -1, -1, - 1, 1, 1, 1, -1, -1, 1, -1, -1, -1, -1, 1, 1, -1, 1, 1, 1, -1, -1, 1,
-1, -1, 1, 1, -1, -1, -1, -1, 1, -1, 1, 1, 1, -1, -1, 1, 1, 1, 1, 1, 1, 1, 1, -1, -1, 1, -1, 1, -1, 1, 1, 1, 1, 1, -1, 1, 1, -1, -1, -1, 1, -1,
1, 1, -1, -1, 1, 1, 1, 1, -1, -1, -1, -1, -1, -1, -1, 1, -1, -1, 1, -1, -1, 1, -1, 1, 1, 1, 1, 1, -1, -1, 1, 1, 1, -1, 1, 1, 1, -1, -1, -1, 1, 1,
1, 1, -1, -1, 1, 1, -1, 1, 1, -1, -1, 1, - 1, -1, 1, 1, -1, 1, 1, -1, -1, -1, -1, -1, 1, 1, 1, 1, 1, -1, -1, 1, -1, 1, 1, -1, 1, -1, -1, -1, 1, -1, 1, 1,
-1, 1, 1, 1, 1, -1, -1, -1, 1, 1, -1, -1, -1, 1, -1, -1, 1, 1, 1, 1, -1, 1, -1, -1, -1, 1, 1, 1, 1, -1, 1, 1, -1, 1, -1, 1, -1, -1, -1, -1, -1,
-1, 1, 1, -1, - 1, 1, 1, 1, 1, -1, -1, 1, -1, 1, 1, 1, -1, -1, -1, 1, 1, 1, 1, 1, 1, 1, 1, -1, 1, 1, -1, -1, 1, 1, -1, 1, -1, -1, -1, 1, -1, -1,
1, 1, -1, -1, 1, 1, -1, -1, -1, 1, 1, -1, 1, -1, -1, -1, 1, 1, 1, 1, 1, -1, -1, 1, 1, 1, -1, 1, 1, 1, 1, 1, 1, -1, 1, -1, -1, 1, -1, 1,
-1, -1, 1, -1, 1, 1, -1, 1, 1, -1, 1, 1, -1, -1, 1, 1, 1, 1, -1, 1, -1, 1, -1, 1, -1, 1, -1, 1, -1, -1, -1, -1, 1, -1, - 1, -1, -1, 1, -1,
-1, -1, -1, 1, -1, 1, -1, 1, -1, 1, 1, 1, 1, -1, 1, -1, -1, 1, -1, 1, 1, -1, -1, 1, -1, 1, -1, 1, -1, -1, -1, 1, 1, 1, -1, 1, -1, 1, 1, -1, -1,
1, 1, -1, -1, -1, 1, 1, -1, 1, -1, -1, -1, 1, -1, 1, -1, -1, -1, 1, 1, 1, -1, -1, 1, 1, -1, 1, -1, 1, 1, -1, -1, -1, 1, 1, 1, -1, -1, 1, -1,
1, -1, 1, 1, -1, -1, -1, 1, 1, -1, 1, 1, -1, 1, 1, -1, 1, 1, -1, 1, 1, -1, -1, -1, 1, 1, 1,-1, -1, -1, -1, 1, -1, 1, 1, 1, -1, -1, -1, 1, -1, 1,
-1, 1, 1, 1, -1, -1, -1, -1, -1, -1, -1, -1, -1, -1, -1, 1, 1, 1, 1, -1, 1,-1, -1, -1, -1, 1, 1, 1, 1, -1, 1, 1, 1, 1, -1, -1, -1, -1, 1, 1, 1,
1, -1, 1, 1, 1, -1, -1, 1, -1, -1, -1, -1, 1, 1, 1, 1, -1, -1, 1, -1, 1, 1, 1, 1, 1, 1, -1, 1, 1, 1, 1, -1, -1, 1, -1, 1, 1, -1, 1, 1, 1, 1,
-1, 1, 1, -1, 1, 1, 1, -1, 1, -1, 1, -1, -1, -1, -1, - 1, -1, 1, 1, 1, -1, -1, -1, -1, -1, -1, -1, 1, 1, 1, 1, 1, -1, -1, 1, 1, 1, -1, 1, 1,
-1, 1, 1, -1, -1, -1, 1, -1, 1, 1, 1, -1, 1, 1, 1, 1, 1, -1, -1, 1, 1, -1, 1, 1, -1, -1, 1, 1, -1, 1, 1, 1, -1, -1, -1,1, -1, -1, 1, -1, -1,
-1, 1, 1, 1, 1, 1, -1, -1, 1, -1, - 1, 1, 1, 1, -1, -1, -1, -1, 1, 1, -1, -1, 1, 1, -1, 1, -1, 1, 1, -1, 1, 1, 1, -1, -1, 1, -1, 1, -1, -1, -1,
1, 1, 1, -1, -1, -1, 1, 1, 1, 1, -1, -1, 1, -1, 1, 1, -1, 1, -1, 1, 1, 1, -1, 1, 1, 1, 1, -1, 1, -1, -1, 1, 1, 1, 1, 1, 1, -1, 1, 1, 1, -1, 1,
1, -1, 1, -1, - 1, 1, -1, 1, 1, 1, 1, -1, 1, 1, 1, 1, 1, 1, -1, 1, 1, -1, -1, -1, -1, -1, 1, 1, -1, -1, 1, 1, -1, -1, -1, 1, -1, 1, -1, -1,
-1, -1, 1, -1, -1, -1, 1, 1, 1, -1, 1, 1, -1, 1, -1, -1, -1, 1, 1, 1, 1, 1, 1, -1, 1, -1, -1, 1, 1, -1, -1, -1, 1, 1, -1, 1, -1, -1, - 1, -1,
-1, 1, -1, -1, -1, -1, 1, -1, 1, 1, 1, 1, 1, -1, 1, -1, 1, -1, -1, -1, 1, 1, 1, -1, 1, -1, 1, -1, 1, -1, 1, 1, 1, 1, -1, -1, -1, -1, -1,
1, -1, 1, -1, 1, 1, -1, 1, 1, 1, -1, 1, -1, 1, 1, 1, -1, -1, 1, -1, -1, -1, -1, -1, -1, -1, -1, -1, 1, 1, 1, 1, 1, -1, 1, 1, -1, 1, 1, -1,
-1, 1, -1, 1, -1, -1, -1, -1, -1, 1, 1, -1, -1, -1, 1, 1, -1, 1, -1, -1, 1, 1, -1, 1, 1, 1, 1, - 1, 1, 1, -1, -1, -1, -1, 1, 1, -1, -1, 1,
1, -1, -1, 1, -1, -1, 1, -1, -1, -1, -1, 1, -1, -1, -1, 1, -1, -1, -1, 1, -1, 1, 1, - 1, -1, 1, 1, 1, -1, -1, -1, -1, -1, -1, -1, 1, -1,
1, -1, 1, 1, -1, -1, -1, 1, -1, -1, 1, 1, -1, -1, -1, 1, 1, 1, 1, 1, 1, -1, -1, 1, -1, 1, -1, 1, 1, 1, -1, 1, 1, 1, 1, -1, -1, -1, -1, -1, 1, 1,
-1, -1, -1, 1, -1, 1, 1, 1, -1, 1, 1, -1, 1, -1, 1, 1, 1, -1, - 1, 1, 1, -1, -1, 1, 1, 1, -1, 1, 1, 1, -1, -1, -1, -1, 1, -1, 1, 1, 1, 1, -1, -1, -1, 1,
1, -1, -1, 1, 1, -1, -1, 1, -1, 1, -1, -1, 1, - 1, 1, 1, -1, 1, 1, -1, -1, -1, -1, 1, 1, 1, -1, 1, -1, -1, 1, 1, 1, 1, 1, -1, -1, 1, -1, 1,
1, -1, -1, 1, 1, -1, -1, -1, 1, 1, 1, -1, 1, 1, -1, 1, -1, 1, 1, 1, -1, -1, -1, 1, -1, 1, -1, -1, -1, 1, 1, 1, -1, -1, 1, 1, -1, 1, 1, -1, 1, 1,
-1, 1, -1, -1, -1, -1, 1, 1, 1, 1, 1, 1, 1, 1, -1, 1, 1, -1, -1, 1, -1, 1, 1, 1, 1, 1, 1, 1, -1, 1, 1, -1, -1, 1, 1, -1, -1, 1, 1, 1, -1,
-1, -1, -1, - 1, 1, -1, -1, -1, 1, -1, 1, 1, -1, 1, -1, -1, 1, 1, -1, 1, -1, -1, 1, 1, -1, -1, 1, 1, -1, -1, -1, 1, 1, -1, -1, 1, -1, 1, -1, -1,
-1, -1, -1, 1, 1, 1, -1, 1, 1, -1, 1, -1, 1, - 1, 1, 1, 1, -1, 1, -1, -1, 1, 1, 1, -1, -1, -1, 1, -1, -1, 1, -1, -1, -1, 1, 1, 1, 1, -1,
-1, -1, -1, 1, -1, -1, 1, 1, -1, -1, -1, 1, -1, 1, 1, 1, 1, 1, -1, 1, -1, -1, -1, 1, 1, 1, 1, -1, -1, -1, 1, -1, 1, 1, 1, 1, 1, 1, -1, -1, -1,
1, 1, 1, -1, -1, 1, -1, -1, 1, 1, -1, 1, -1, 1, -1, -1, 1, -1, -1, 1, 1, 1, 1, 1, -1, 1, -1, 1, 1, 1, -1, - 1, -1, -1, -1, -1, 1, -1, 1, 1, 1,
-1, -1, 1, -1, 1, -1, -1, -1, -1, -1, -1, 1, -1, 1, -1, -1, 1, -1, -1, -1, 1, -1, -1, 1, -1, 1, -1, -1, 1, -1, 1, -1, -1, 1, 1, -1, -1, 1, -1,
1, 1, 1, -1, 1, 1, 1, -1, -1, -1, -1, -1, 1, 1, 1, -1, -1, 1, 1, 1, 1, -1, 1].

In an embodiment, Sn2048₇ may be as follows: Sn2048₇ = [1, -1, 1, 1, 1, 1, -1, 1, -1, 1, 1, -1, 1, 1, -1, 1, -1, 1,
-1, 1, -1, 1, -1, 1, 1, -1, -1, -1, 1, -1, -1, -1, -1, 1, 1, 1, -1, 1, -1, 1, -1, 1, -1, -1, 1, 1, 1, -1, -1, -1, -1, -1, 1,
1, 1, 1, 1, -1, 1, -1, -1, 1, 1, -1, -1, 1, -1, -1, 1, -1, 1, 1, 1, -1, -1, 1, -1, -1, 1, 1, 1, 1, -1, -1, -1, -1, 1, 1, -1, -1, 1, 1, 1, 1, 1,
1, -1, 1, -1, 1, 1, 1, -1, -1, 1, 1, -1, -1, 1, 1, -1, -1, -1, -1, 1, -1, 1, -1, -1, -1, 1, -1, 1, 1, -1, 1, -1, -1, 1, -1, -1, -1, 1, -1, -1,
-1, -1, 1, -1, -1, 1, 1, 1, -1, -1, -1, -1, 1, 1, 1, -1, 1, -1, 1, 1, 1, -1, -1, -1, 1, -1, 1, 1, -1, 1, 1, 1, -1, -1, -1, -1, -1, 1, 1, -1,
-1, 1, 1, -1, 1, -1, -1, 1, 1, 1, -1, -1, -1, 1, 1, -1, -1, 1, -1, 1,-1, -1, 1, -1, 1, 1, 1, -1, -1,1, -1,1, -1, 1, 1, -1,1, -1, 1, -1,
-1, 1, -1, 1, 1, 1, -1, 1, 1, -1, 1, 1, -1, -1, -1,1, -1, - 1, 1, -1, -1, 1, -1, -1, -1, 1, 1, -1, 1, 1, 1, 1, -1, -1, -1, -1, 1, 1, -1,
-1, 1, 1, 1, 1, 1, -1, -1,1, -1, 1, 1, 1, -1, -1, - 1, 1, -1, 1, 1, 1, 1, -1, -1, -1, 1, 1, -1, 1, 1, 1, -1, 1, 1, 1, -1, -1, -1, 1, 1, -1, 1,
1, 1, -1, -1, -1, -1, -1, -1, -1, -1, 1, -1, 1, -1, -1, -1, -1, -1, 1, 1, -1, -1, -1, -1, -1, -1, 1, 1, 1, 1, 1, 1, -1, -1, 1, 1, -1, -1, 1,
1, -1, -1, 1, -1, 1,-1, -1, 1, 1, -1, -1, 1, -1, 1, 1, 1, -1, -1, 1, 1, 1, -1, -1, 1, -1, -1, -1, 1, -1, 1, -1, -1, 1, 1, 1, 1, -1, -1, 1, -1,
1, -1, - 1, -1, 1, 1, -1, 1, 1, -1, 1, -1, 1, 1, -1, 1, -1, -1, 1, 1, -1, 1, -1, -1, 1, 1, 1, -1, -1, 1, -1, -1, -1, 1, -1, -1, -1, -1, -1, 1,
-1, 1, -1, -1, -1, 1, -1, -1, 1, 1, 1, 1, 1, -1, 1, -1, -1, 1, 1, -1, -1, 1, -1, -1, -1, -1, -1, -1, 1, -1, 1, 1, -1, -1, 1, 1, 1, -1, 1,

-1, 1, -1, 1, 1, 1, 1, -1, 1, 1, -1, 1, 1, 1, -1, 1, -1, 1, 1, 1, 1, 1, -1, 1, 1, -1, -1, 1, 1, 1, -1, -1, -1, 1, -1, 1, 1, -1, 1, 1, -1, -1,
1, 1, -1, 1, 1, 1, 1, -1, -1, 1, -1, -1, 1, -1, 1, -1, -1, -1, 1, -1, 1, 1, -1, -1, -1, 1, 1, -1, -1, - 1, -1, 1, 1, 1, 1, 1, 1, -1, -1, -1,
-1, 1, -1, -1, -1, 1, -1, 1, -1, 1, -1, -1, -1, 1, -1, 1, -1, -1, -1, -1, -1, -1, -1, 1, 1, - 1, -1, 1, -1, -1, 1, -1, -1, -1, 1, 1, 1, -1, 1,
1, 1, -1, -1, 1, 1, -1, -1, 1, 1, -1, 1, -1, 1, 1, -1, 1, -1, 1, 1, -1, -1, 1, 1, 1, -1, -1, -1, -1, 1, -1, 1, 1, -1, -1, 1, 1, 1, -1, -1, -1,
-1, -1, 1, 1, -1, 1, 1, -1, -1, 1, -1, -1, 1, -1, -1, 1, -1, -1, -1, 1, -1, 1, -1, -1, 1, -1, -1, -1, 1, -1, -1, -1, 1, -1, -1, 1, -1, 1, -1, 1,
-1, 1, 1, -1, 1, 1, -1, 1, -1, -1, -1, 1, 1, 1, 1, 1, - 1, -1, 1, 1, 1, -1, 1, 1, 1, -1, -1, -1, -1, -1, -1, -1, 1, 1, 1, 1, -1, 1, -1, -1,
-1, -1, -1, -1, -1, 1, -1, -1, -1, -1, - 1, 1, 1, 1, 1, 1, 1, 1, -1, 1, 1, 1, 1, -1, -1, 1, -1, 1, 1, -1, 1, -1, -1, -1, 1, 1, 1, -1, -1, 1, -1,
-1, -1, -1, 1, 1, 1, 1, 1, -1, - 1, 1, -1, -1, -1, 1, -1, -1, 1, 1, -1, -1, -1, 1, -1, -1, 1, 1, -1, 1, 1, -1, 1, 1, 1, -1, -1, -1, -1, -1, -1,
-1, 1, 1, 1, -1, - 1, -1, -1, 1, -1, -1, -1, -1, -1, -1, -1, 1, 1, 1, -1, -1, -1, 1, 1, 1, 1, -1, 1, 1, -1, 1, 1, -1, -1, -1, -1, -1,
1, 1, -1, 1, -1, -1, -1, -1, 1, -1, 1, 1, -1, 1, -1, -1, -1, -1, 1, -1, 1, 1, -1, 1, -1, -1, -1, 1, 1, 1, 1, -1, 1, 1, -1, 1, 1, 1, 1, -1,
-1, 1, 1, -1, 1, -1, -1, 1, 1, 1, 1, -1, 1, 1, 1, 1, -1, -1, 1, -1, -1, -1, -1, 1, 1, 1, -1, 1, -1, -1, -1, -1, -1, 1, 1, 1, 1, 1, 1, -1, 1, 1,
1, -1, 1, -1, 1, -1, -1, -1, 1, 1, -1, -1, -1, 1, -1, 1, -1, -1, 1, -1, 1, 1, 1, -1, -1, 1, 1, 1, 1, 1, -1, 1, -1, 1, -1, -1, 1, -1, -1, 1, 1,
-1, -1, -1, -1, -1, 1, -1, 1, 1, -1, 1, -1, -1, 1, -1, 1, 1, 1, -1, -1, 1, -1, 1, -1, -1, 1, -1, 1, 1, -1, 1, -1, 1, -1, -1, 1, -1, 1, 1, -1, 1, 1,
1, 1, 1, -1, 1, 1, -1, 1, 1, 1, 1, 1, 1, 1, 1, 1, -1, 1, 1, -1, -1, -1, 1, 1, -1, 1, 1, -1, 1, -1, 1, -1, 1, 1, -1, -1, -1, -1, 1, 1, -1,
-1, 1, -1, 1, 1, 1, 1, -1, -1, 1, 1, -1, -1, 1, -1, 1, -1, -1, 1, 1, 1, -1, 1, 1, - 1, 1, -1, 1, -1, -1, -1, -1, 1, 1, -1, 1, -1, 1, -1, 1, -1, 1,
-1, 1, -1, -1, 1, -1, -1, 1, 1, 1, 1, 1, 1, -1, 1, -1, 1, -1, -1, 1, 1, -1, -1, 1, 1, 1, 1, 1, -1, 1, -1, 1, -1, -1, 1, -1, -1, -1, 1, -1, 1,
1, -1, -1, 1, 1, 1, -1, -1, -1, -1, 1, -1, 1, 1, -1, 1, 1, -1, -1, -1, -1, -1, 1, 1, 1, -1, -1, 1, 1, 1, 1, -1, 1, -1, 1, -1, -1, 1, 1, -1, 1, 1,
1, 1, -1, 1, 1, 1, -1, -1, 1, -1, -1, -1, 1, - 1, -1, -1, -1, -1, 1, -1, 1, 1, -1, 1, 1, -1, -1, 1, -1, 1, -1, -1, -1, -1, 1, -1, -1, 1, -1, -1,
1, 1, 1, -1, -1, -1, 1, 1, 1, 1, -1, -1, -1, 1, -1, 1, 1, 1, 1, 1, 1, -1, -1, -1, -1, 1, -1, -1, 1, 1, 1, -1, 1, -1, 1, -1, 1, 1, -1, 1, -1, 1,
-1, 1, -1, 1, -1, 1, 1, 1, 1, 1, 1, 1, -1, -1, 1, 1, 1, 1, -1, -1, 1, 1, -1, 1, -1, -1, 1, 1, -1, 1, -1, -1, -1, 1, 1, 1, 1, -1, -1, 1, -1, 1,
-1, -1, - 1, -1, 1, 1, 1, 1, -1, 1, 1, -1, -1, -1, -1, -1, -1, 1, 1, 1, 1, 1, -1, 1, 1, 1, 1, -1, 1, -1, 1, -1, -1, 1, 1, -1, -1, -1, 1, 1, -1, -
1, 1, 1, -1, -1, 1, 1, -1, 1, -1, 1, 1, 1, 1, -1, -1, -1, -1, -1, -1, 1, 1, -1, -1, 1, -1, 1, 1, 1, -1, 1, -1, -1, 1, 1, -1, 1, 1, 1, 1, -1, -1,1,
-1, 1, 1, 1, 1, 1, 1, 1, 1, -1, -1, 1, 1, 1, -1, 1, -1, 1, 1, -1, 1, 1, 1, -1, -1, 1, -1, -1, -1, 1, 1, 1, 1, 1, - 1, 1, 1, 1, 1, 1, -1, 1,
1, 1, 1, -1, -1, 1, -1, -1, -1, 1, 1, -1, -1, -1, -1, 1, -1, -1, -1, 1, -1, 1, -1, -1, -1, 1, 1, 1, -1, 1, 1, 1, -1, 1, -1, -1, -1, 1, -1, 1, 1,
-1, -1, 1, 1, -1, 1, 1, -1, -1, -1, 1, -1, 1, 1, -1, 1, -1, 1, 1, 1, 1, 1, 1, -1, -1, 1, 1, 1, 1, 1, 1, 1, -1, 1, 1, -1, -1, -1, -1, 1, -1, 1, -1,
1, -1, -1, 1, -1, -1, 1, -1, 1, 1, -1, -1, 1, 1, -1, -1, -1, 1, 1, -1, 1, 1, 1, - 1, -1, 1, 1, 1, 1, -1, 1, -1, -1, -1, 1, 1, -1, 1, -1, -1, 1, 1,
-1, 1, 1, -1, 1, -1, 1, -1, -1, 1, 1, -1, -1, 1, 1, 1, -1, 1, -1, -1, 1, -1, 1, 1, -1, -1, 1, 1, 1, 1, 1, 1, -1, -1, 1, -1, -1, 1, 1, -1, -1, 1, -1,
-1, 1, -1, -1, 1, 1, -1, -1, 1, 1, -1, -1, -1, -1, -1, 1, - 1, 1, -1, 1, -1, -1, -1, 1, -1, 1, 1, -1, -1, 1, 1, 1, -1, -1, -1, 1, -1, -1, -1,
-1, -1, 1, 1, -1, 1, 1, -1, -1, 1, -1, 1, -1, - 1, -1, 1, 1, 1, 1, 1, 1, -1, -1, 1, 1, -1, 1, 1, -1, 1, 1, -1, 1, -1, -1, 1, 1, -1, 1, -1, 1, -1,
-1, -1, 1, 1, -1, 1, 1, 1, -1, 1, 1, 1, 1, 1, -1, -1, -1, 1, 1, -1, -1, 1, -1, 1, -1, 1, 1, 1, -1, 1, -1, -1, 1, 1, -1, 1, 1, -1, 1, -1, 1,
1, -1, -1, 1, -1, 1, 1, -1, 1, -1, -1, 1, -1, 1, 1, -1, -1, -1, 1, -1, 1, 1, -1, 1, -1, -1, 1, -1, -1, -1, -1, 1, 1, 1, 1, -1, -1, -1, -1, 1,
-1, -1, -1, 1, 1, -1, 1, 1, -1, -1, 1, 1, 1, 1, 1, 1, -1, -1, -1, -1, -1, 1, -1, 1, 1, -1, 1, -1, -1, -1, 1, 1, -1, -1, 1, -1, 1, 1, -1, -1,
- 1, -1, 1, -1, 1, 1, 1, -1, 1, -1, -1, -1, 1, 1, 1, -1, -1, -1, -1, 1, -1, -1, -1, 1, -1, 1, -1, 1, 1, 1, 1, 1, -1, 1, -1, 1, 1, -1, -1, -1, 1,
1, -1, -1, -1, -1, 1, 1, 1, 1, 1, -1, -1, -1, 1, -1, 1, 1, 1, 1, -1, -1, 1, -1, -1, -1, 1, 1, -1, 1, 1, 1, -1, 1, -1, 1, 1, 1, 1, -1, 1, 1,
1, 1, 1, -1, -1, 1, 1, -1, -1, 1, 1, 1, 1, 1, 1, 1, -1, 1, 1, 1, -1, -1, 1, 1, -1, 1, -1, -1, -1, -1, 1, -1, -1, -1, - 1, 1, 1, -1, 1, 1, 1, 1, 1, 1,
1, -1, 1, -1, -1, 1, 1, 1, 1, 1, 1, 1, -1, 1, -1, -1, -1, -1, 1, -1, 1, 1, 1, -1, 1, 1, 1, -1, 1, - 1, -1, 1, -1, -1, 1, 1, 1, 1, 1, 1, -1, 1,
-1, -1, 1, -1, 1, 1, 1, 1, 1, -1, 1, -1, 1, -1, 1, -1, 1, -1, -1, -1, -1, -1, -1, 1, -1, - 1, -1, -1, -1, 1, -1, 1, -1, 1, 1, -1, -1, -1, 1, 1,
1, -1, 1, 1, 1, 1, 1, 1, 1, 1, 1, -1, -1, 1, -1, 1, -1, -1, 1, -1, 1, -1, 1, 1, 1, 1, 1, 1, -1, -1, 1, 1, 1, 1, -1, -1, -1, 1, -1, 1, -1, 1, 1,
-1, 1, 1, -1, -1, -1, -1, -1, -1, -1, 1, 1, -1, 1, 1, 1, 1, 1, 1, 1, - 1, -1, 1].

In an embodiment, $Sn2048_8$ may be as follows: $Sn2048_8$ = [-1, -1, 1, 1, -1, 1, -1, -1, 1, 1, 1, -1, 1, 1, 1, -1, -1,
-1, -1, -1, 1, -1, 1, -1, 1, -1, 1, 1, 1, -1, 1, 1, -1, 1, -1, 1, -1, -1, -1, -1, -1, 1, 1, 1, 1, 1, 1, -1,
-1, -1, 1, -1, 1, 1, 1, 1, -1, -1, -1, -1, 1, 1, 1, -1, 1, 1, 1, -1, 1, 1, -1, -1, 1, -1, -1, -1, 1, -1, -1, 1, 1, 1, -1, 1, 1, 1, -1, 1, 1, 1,
1, -1, 1, -1, 1, -1, 1, 1, -1, -1, 1, 1, -1, -1, -1, -1, -1, 1, 1, 1, -1, -1, -1, 1, -1, 1, -1, 1, -1, 1, -1, -1, -1, -1, 1, 1, -1, -1, -1, 1,
-1, -1, 1, -1, 1, -1, -1, -1, 1, 1, 1, -1, -1, -1, -1, -1, 1, -1, 1, -1, -1, 1, 1, 1, -1, - 1, 1, 1, 1, -1, -1, 1, -1, 1, -1, -1, 1, 1, 1, 1, -1,
-1, -1, 1, -1, 1, -1, 1, 1, -1, 1, 1, -1, 1, -1, 1, -1, -1, 1, -1, -1, -1, -1, - 1, -1, -1, -1, 1, -1, 1, 1, 1, 1, 1, 1, 1, -1, 1, -1, 1, -1, -1, 1,
-1, -1, 1, 1, -1, -1, 1, 1, -1, 1, 1, 1, 1, 1, -1, -1, 1, 1, 1, -1, -1, 1, -1, -1, 1, -1, -1, -1, 1, 1, 1, 1, -1, 1, 1, -1, -1, -1, -1, 1, 1, -1,
1, 1, -1, 1, 1, -1, 1, -1, -1, 1, 1, -1, -1, -1, 1, 1, -1, - 1, -1, 1, 1, -1, -1, 1, 1, 1, -1, 1, 1, 1, 1, -1, 1, 1, -1, 1, 1, 1, 1, -1, 1, 1,
1, -1, -1, -1, -1, 1, 1, 1, -1, -1, -1, 1, -1, - 1, -1, 1, 1, 1, -1, -1, 1, -1, -1, -1, 1, -1, 1, -1, -1, -1, -1, 1, -1, -1, -1, 1, 1, 1, -1, 1, 1,
-1, -1, 1, -1, 1, 1, -1, 1, 1, 1, -1, 1, -1, 1, -1, 1, 1, 1, 1, 1, 1, -1, -1, 1, 1, -1, -1, -1, -1, -1, 1, -1, 1, 1, -1, 1, 1, -1, 1, 1, 1, -1,
1, 1, 1, -1, 1, -1, 1, 1, -1, -1, 1, 1, -1, 1, 1, -1, 1, -1, 1, 1, -1, 1, 1, -1, -1, -1, 1, 1, 1, 1, 1, 1, 1, 1, -1, -1, -1, -1, -1, 1, -1,
1, -1, -1, 1, 1, 1, -1, -1, 1, 1, 1, 1, 1, -1, -1, 1, 1, -1, -1, 1, 1, -1, 1, 1, -1, 1, 1, -1, 1, -1, -1, -1, 1, -1, -1, -1, -1, -1, 1, 1, -1, -1, -1, 1,
1, 1, -1, 1, -1, 1, -1, 1, 1, -1, -1, 1, 1, 1, -1, -1, 1, 1, 1, -1, -1, -1, -1, -1,1, -1, -1, 1, 1, -1, 1, 1, -1, -1, -1, - 1, -1, 1, 1, -1,
-1, 1, 1, 1, -1, 1, -1, 1, 1, 1, -1, -1, -1, 1, 1, 1, -1, -1, -1, 1, -1, 1, 1, -1, -1, 1, -1, 1, 1, -1, 1, -1, 1, -1, -1, -1, 1, 1, -1, 1,
1, 1, -1, 1, 1, 1, 1, 1, -1, 1, 1, -1, 1, 1, -1, 1, 1, 1, 1, 1, 1, 1, 1, 1, -1, 1, -1, 1, -1, 1, -1, - 1, -1, -1, -1, -1, 1, 1, 1, 1,
-1, 1, 1, -1, 1, 1, 1, 1, -1, -1, -1, 1, -1, 1, -1, 1, 1, -1, -1, -1, 1, -1, 1, -1, -1, -1, 1, 1, 1, 1, -1, -1, -1, -1, 1, -1, -1, 1, -1, -1,
1, -1, -1, -1, -1, 1, -1, 1, -1, -1, 1, 1, -1, -1, 1, 1, -1, -1, -1, 1, -1, 1, 1, 1, 1, -1, -1, -1, -1, 1, -1, 1, -1, 1, 1, 1, 1, -1, -1, 1, 1, 1,
-1, -1, -1, -1, -1, 1, 1, 1, -1, 1, 1, 1, -1, 1, -1, 1, 1, -1, -1, 1, -1, -1, -1, 1, 1, 1, 1, 1, 1, 1, -1, 1, -1,1, -1,1, -1, -1,1,1,1,1, -1,1, -1,
-1,1, -1,1,1, -1,1, -1,1,1,1,1,1, 1, 1, -1, -1,1,-1, -1, -1,1, 1, -1, 1, 1, 1, 1, 1, 1, -1, 1, 1, -1, 1, -1, -1, 1, 1, 1, -1, -1, -1,

1, -1, -1, -1, 1, 1, -1, -1, -1, 1, - 1, -1, 1, 1, 1, 1, -1, 1, 1, 1, -1, 1, 1, 1, 1, 1, -1, -1, 1, 1, 1, -1, -1, -1, -1, 1, 1, -1, 1, 1, -1,
1, -1, -1, 1, 1, 1, 1, 1, 1, 1, 1, 1, 1, -1, -1, -1, 1, 1, 1, -1, -1, 1, -1, 1, -1, -1, -1, -1, -1, -1, -1, -1, 1, 1, -1, 1, -1, -1, 1, -1,
-1, -1, 1, 1, 1, -1, 1, -1, 1, 1, 1, -1, 1, 1, 1, 1, 1, 1, 1, -1, 1, -1, 1, -1, 1, 1, -1, 1, 1, -1, 1, 1, 1, 1, -1, -1, 1, -1, 1, -1, 1, 1, -1,
-1, 1, 1, 1, 1, -1, 1, -1, -1, -1, 1, -1, -1, 1, -1, 1, -1, 1, 1, 1, -1, -1, 1, 1, -1, 1, -1, -1, -1, -1, -1, 1, 1, 1, 1, 1, -1, -1, 1, - 1, 1,
1, -1, -1, 1, -1, 1, -1, -1, -1, -1, 1, 1, -1, 1, -1, -1, 1, -1, -1, 1, 1, -1, -1, -1, -1, -1, 1, -1, -1, -1, 1, 1, 1, 1, 1, 1, 1, -1, 1, -1,
-1, -1, 1, -1, -1, 1, 1, -1, -1, -1, -1, 1, -1, -1, -1, 1, 1, -1, 1, -1, 1, 1, -1, 1, -1, 1, 1, -1, -1, -1, 1, 1, 1, -1, -1, 1, -1, 1, 1, 1, 1,
1, 1, 1, 1, -1, 1, -1, -1, -1, -1, 1, 1, -1, -1, 1, 1, 1, 1, 1, -1, 1, 1, -1, 1, -1, 1, -1, 1, -1, 1, -1, 1, 1, 1, -1, 1, -1, -1, -1, 1, -1, 1, 1,
-1, -1, -1, 1, 1, -1, -1, 1, -1, -1, 1, -1, -1, -1, -1, 1, 1, -1, 1, -1, -1, -1, 1, 1, - 1, 1, -1, -1, -1, -1, -1, 1, 1, 1, 1, 1, -1, 1, -1, -1,
-1, 1, 1, 1, 1, 1, 1, -1, -1, 1, -1, 1, -1, 1, 1, 1, -1, -1, -1, -1, -1, 1, -1, 1, -1, 1, 1, -1, 1, 1, -1, 1, 1, -1, 1, -1, 1, -1, 1, -1, -1, 1, -1,
-1, -1, -1, -1, 1, -1, -1, 1, 1, 1, -1, 1, 1, 1, 1, -1, 1, -1, 1, -1, -1, 1, -1, -1, -1, -1, -1, 1, 1, 1, -1, -1, 1, 1, -1, 1, -1, -1, 1,
-1, 1, 1, 1, -1, -1, 1, -1, 1, 1, 1, 1, -1, -1, -1, 1, 1, -1, 1, 1, -1, 1, -1, -1, -1, 1, 1, -1, -1, 1, 1, -1, 1, -1, -1, -1, 1, -1, 1, -1, 1,
-1, 1, 1, -1, -1, 1, 1, 1, -1, -1, 1, -1, - 1, -1, -1, -1, -1, 1, -1, -1, 1, 1, -1, -1, 1, 1, -1, -1, -1, 1, -1, -1, 1, 1, 1, -1, 1, -1, 1, 1,
-1, 1, 1, 1, 1, 1, -1, -1, -1, - 1, -1, 1, -1, -1, 1, 1, 1, -1, -1, -1, 1, -1, 1, 1, 1, 1, -1, 1, 1, -1, -1, 1, 1, 1, -1, -1, -1, -1, -1, 1, 1,
-1, -1, -1, -1, 1, - 1, 1, 1, 1, -1, -1, -1, 1, 1, -1, 1, -1, -1, 1, -1, 1, -1, -1, 1, 1, 1, -1, -1, -1, 1, -1, 1, -1, 1, 1, -1, -1, -1, 1, 1,
-1, 1, - 1, -1, -1, 1, -1, -1, -1, 1, -1, 1, -1, 1, 1, -1, -1, -1, 1, -1, -1, 1, 1, -1, 1, 1, -1, -1, 1, -1, 1, -1, 1, -1, 1, -1, -1, 1, 1, -1, 1, 1,
-1, -1, 1, 1, 1, 1, -1, 1, -1, 1, -1, 1, -1, 1, 1, -1, -1, -1, 1, 1, 1, 1, 1, 1, 1, -1, 1, -1, -1, -1, 1, -1, -1, 1, 1, 1, 1, 1, 1, -1, 1, 1,
-1, 1, 1, -1, -1, 1, 1, -1, 1, -1, -1, 1, 1, -1, 1, -1, 1, 1, -1, -1, 1, -1, 1, 1, 1, -1, 1, 1, 1, -1, 1, 1, 1, 1, 1, 1, 1, -1, -1, -1, 1, 1,
-1, -1, 1, 1, -1, -1, -1, 1, -1, 1, 1, 1, 1, -1, -1, 1, 1, 1, -1, -1, -1, 1, -1, 1, -1, -1, 1, -1, 1, -1, -1, 1, -1, -1, 1, -1, 1, -1, 1, -1,
1, 1, 1, -1, -1, 1, 1, -1, -1, -1, -1, 1, 1, -1, -1, -1, 1, 1, 1, -1, -1, 1, 1, 1, 1, -1, -1, - 1, -1, 1, 1, 1, -1, 1, 1, 1, 1, -1, 1, -1, -1,
-1, -1, -1, -1, -1, -1, -1, -1, -1, 1, 1, -1, -1, 1, -1, -1, 1, 1, 1, 1, 1, 1, -1, - 1, -1, 1, -1, 1, 1, 1, -1, -1, -1, 1, 1, 1, 1, -1, -1, 1,
-1, 1, -1, 1, -1, -1, -1, 1, -1, -1, 1, 1, 1, -1, -1, 1, -1, -1, -1, 1, 1, 1, 1, 1, -1, -1, 1, 1, 1, -1, 1, -1, 1, 1, 1, 1, 1, 1, 1, -1, -1, 1,
-1, 1, 1, -1, 1, -1, -1, -1, 1, -1, -1, 1, -1, -1, 1, 1, -1, 1, -1, 1, 1, 1, 1, -1, -1, 1, -1, 1, 1, 1, 1, -1, 1, 1, 1, 1, -1, -1, 1, 1, 1, 1,
1, -1, -1, -1, 1, 1, 1, 1, -1, 1, 1, 1, 1, 1, -1, 1, -1, 1, -1, -1, -1, -1, -1, -1, 1, -1, -1, 1, -1, -1, -1, -1, -1, 1, -1, 1, 1, -1, -1, 1,
-1, -1, 1, -1, -1, 1, 1, 1, -1, -1, 1, 1, 1, 1, 1, -1, -1, -1, -1, -1, -1, 1, -1, 1, -1, -1, 1, -1, 1, 1, -1, -1, -1, -1, -1, 1, 1, 1, 1, 1, 1,
-1, 1, -1, 1, 1, 1, -1, 1, 1, 1, 1, 1, 1, -1, -1, 1, -1, -1, -1, -1, -1, -1, 1, 1, 1, -1, 1, -1, 1, -1, -1, 1, -1, -1, -1, 1, -1, -1, 1, 1,
-1, 1, 1, 1, 1, 1, -1, 1, -1, -1, 1, 1, 1, -1, -1, 1, 1, -1, -1, 1, -1, -1, 1, -1, -1, -1, 1, 1, 1, -1, -1, -1, -1, 1, -1, 1, -1, -1, 1, -,
1, -1, 1, -1, 1, -1, 1, -1, 1, -1, 1, 1, -1, -1, 1, -1, 1, -1, -1, 1, 1, -1, -1, -1, 1, 1, 1, 1, 1, 1, 1, -1, 1, 1, -1, 1, -1, 1, 1, 1, 1,
-1, -1, 1, 1, 1, -1, -1, -1, 1, -1, 1, -1, 1, -1, -1, -1, -1, -1, 1, -1, -1, 1, 1, -1, 1, -1, -1, 1, -1, -1, -1, 1, -1, - 1, -1, -1, 1, 1, -1,
-1, -1, -1, -1, 1, -1, -1, 1, -1, -1, -1, -1, 1, -1, -1, 1, 1, 1, 1, -1, 1, -1, 1, -1, -1, 1, -1, 1, 1, 1, -1, 1, -1, -1, -1, -1, 1, 1,
1, -1, -1, 1, 1, -1, -1, -1, 1, -1, 1, 1, -1, -1, 1, -1, -1, -1, -1, -1, -1, 1, -1, -1, 1, 1, - 1, 1, 1, 1, 1, 1, -1, -1, 1, -1, -1, 1, -1, 1,
1, -1, 1, -1, -1, -1, 1, -1, -1, -1, 1, 1, 1, 1, -1, -1, 1, 1, -1, 1, 1, 1, 1, -1, - 1, -1, 1, -1, -1, -1, -1, -1, -1, 1, 1, 1, -1, -1, -1,
1, -1, 1, -1, -1, 1, -1, 1, 1, 1, -1, -1, 1, -1, 1, 1, 1, 1, 1, -1, -1, -1, 1, -1, 1, -1, 1, 1, -1, -1]].

It may be understood that a specific quantity of sequences included in the training field in step S110 may be determined based on an actual application scenario. The sequence may include at least one of the eight sequences provided in the foregoing embodiment. In other words, the sequence may include at least one of the eight sequences whose lengths are 256, may include at least one of the eight sequences whose lengths are 512, may include at least one of the eight sequences whose lengths are 1024, or may include at least one of the eight sequences whose lengths are 2048.

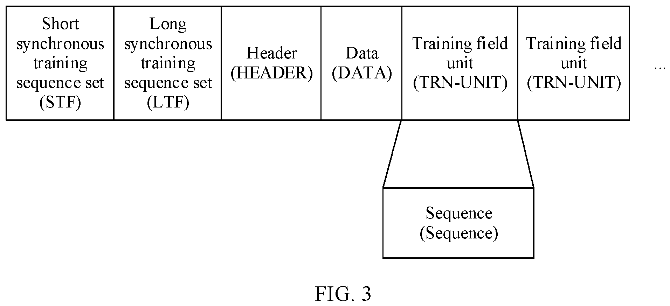

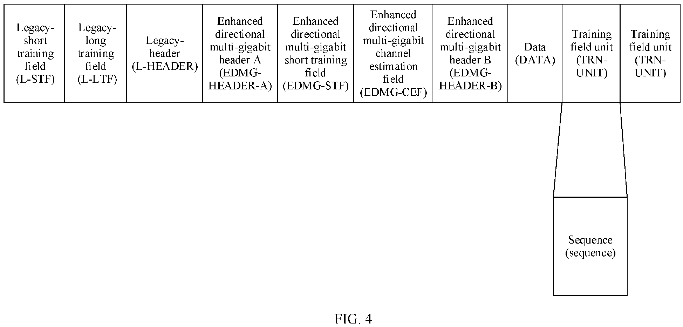

In addition, FIG. 3 is a typical frame structure of an 802.11ad high frequency band. A sequence included in a training field unit (TRN-UNIT) shown in FIG. 3 is the sequence provided in the foregoing embodiment. In the 802.11ad standard, target sensing is performed by using the sequence, to improve sensing performance. For another example, FIG. 4 is a typical frame structure of a high frequency band 802.11ay. In this embodiment, a sequence included in a training field unit (TRN-UNIT) shown in FIG. 4 is the sequence provided in the foregoing embodiment. In the 802.11ay standard, target sensing is performed by using the sequence, to improve sensing performance.

The sequence provided in the foregoing embodiment meets that energy of an auto-ambiguity function is minimum in a local range of $\pm 128$, and energy of a cross-ambiguity function is minimum in the local range. Based on this, a generated sequence can be well sensed in an existing high-frequency standard, and has positive effect on improving sensing performance.

S120: The transmit device sends the PPDU.

In this step, optionally, the transmit device may send the PPDU in a broadcast, unicast, or multicast manner.

S130: A receive device receives the PPDU.

In this step, the receive device receives the PPDU, and performs target sensing by using the sequence included in the PPDU.

S140: Perform target sensing based on the sequence used for target sensing.

In another embodiment of this application, a sequence set generation method in the conventional technology is studied.

In the conventional technology, a method for optimizing a sequence set according to an accelerated iterative sequential optimization (AISO) algorithm is provided. In this method, it is assumed that a single unit modulus sequence with a length of N is s, and the sequence is an N*1 column vector. By introducing a step factor computing method in the AISO algorithm, a sequence set design problem is converted into a plurality of unimodular quadratic programming (UQP, Unimodular Quadratic Programming) problems for solving, and a sequence set with a good local ambiguity function is obtained.

It is assumed that there are M sequences in the sequence set, a length of each sequence is L, and an $m^{th}$ sequence is represented as $\mathbf{s}_m := \left\{ s_m(n) \right\}_{n=1}^{L}$. $f_d$ and $T_b$ are respectively used to represent a Doppler shift and a bit time, and a sequence affected by the Doppler shift may be represented as $\mathbf{s}_{m,f_d} := \left\{ s_m(n)e^{j2\pi f_d n T_b} \right\}_{n=1}^{L}$. Discretization is performed on the Doppler shift $f_d$ by using a parameter $p$, and a correspondence between the parameter $p$ and the Doppler shift $f_d$ is

$$f_d = \frac{p}{LT_b} \quad , \text{ and } \quad \mathbf{s}_{m,p} := \left\{ s_m(n)e^{j2\pi n \frac{p}{N}} \right\}_{n=1}^{L}$$

is obtained. A correlation between the sequence $\mathbf{s}_m$ and the sequence $\mathbf{s}_{m',p}$ is defined as follows:

$$r_{m,m'}(k,p) = \sum_{n=1}^{L} s_m(n)s_{m'}^{*}(n+k)e^{j2\pi n \frac{p}{L}}$$

$k = -L + 1, \ldots,$ or $L - 1$, $p = -L/2, \ldots,$ or $L/2 - 1$, and $*$ represents conjugation. When $n + k < 1$ or $n + k > L$, $s_{m'}^{*}(n+k) = 0$. A sequence is represented by using a column vector $\mathbf{s}_m = [e^{j\varphi_m(1)}, e^{j\varphi_m(1)}, \ldots, e^{j\varphi_m(L)}]^T$, and the foregoing formula is represented by using a matrix, namely:

$$r_{m,m'}(k,p) = \mathbf{s}_m^H \mathbf{J}_k \mathbf{s}_m^{(p)}$$

$$\mathbf{s}_m^{(p)} = \text{Diag}(\mathbf{f}(p))\mathbf{s}_m \quad , \text{ and } \quad \mathbf{f}(p) = \left[ e^{j2\pi \frac{p}{L} \cdot 1}, e^{j2\pi \frac{p}{L} \cdot 2}, \cdots, e^{j2\pi \frac{p}{L} \cdot L} \right]^T$$

. When a value of an element in an $a^{th}$ row and a $b^{th}$ column of the matrix $\mathbf{J}_k$ is $\mathbf{J}_k(a,b) = \begin{cases} 1 & a-b=k \\ 0 & a-b \neq k \end{cases}$, a non-periodic AF is computed. When $\mathbf{J}_k$ is a cyclic shift matrix of a unit matrix $\mathbf{I}_L$ (when $k > 0$, an $\mathbf{I}_N$ cyclic left shift is performed by $k$; and when $k < 0$, an $\mathbf{I}_N$ cyclic right shift is performed by $|k|$), a periodic AF is computed.

A local auto-ambiguity function energy of the $m^{th}$ sequence is defined as follows:

$$E_a(\mathbf{s}_m) = \sum_{p \in P}\sum_{k \in K} w_a(k,p)\left| r_{m,m}(k,p) \right|^2$$

$$= \sum_{p \in P}\sum_{k \in K} w_a(k,p)\left| \mathbf{s}_m^H \mathbf{U}_{k,p}\mathbf{s}_m \right|^2$$

$$= \text{vec}(\mathbf{S}_m)^H \mathbf{U}\text{vec}(\mathbf{S}_m)$$

$\mathbf{U}_{k,p} = \mathbf{J}_k\text{Diag}(\mathbf{f}(p))$, $\mathbf{U} = \sum_{p \in P}\sum_{k \in K} w_a(k,p)\text{vec}(\mathbf{U}_{k,p})\text{vec}(\mathbf{U}_{k,p})^H$, and $\mathbf{S}_m = \mathbf{s}_m\mathbf{s}_m^H$, where vec() represents a column vectorization operation, a set $P$, $K$ represents a delay range and a Doppler shift range that are related to sequence design, and a weighting factor $w_a(k,p) \geq 0$. When the weighting factor $w_a(k,p) = 0$, it indicates that energy of the side lobe does not need to be optimized. Therefore, to optimize the local auto-ambiguity function of the $m^{th}$ sequence, the following optimization problem may be solved:

$$\max_{\mathbf{s}_m^{(t+1)}} \left[\mathbf{s}_m^{(t+1)}\right]^H (-\mathbf{A}_{\mathbf{s}_m^{(t)}})\mathbf{s}_m^{(t+1)}$$

$$s.t. \ |s_m^{(t+1)}(n)|=1, \ n=1,2,\cdots,L$$

$\mathbf{s}_m^{(t)}$ represents a sequence $\mathbf{s}_m$ obtained by solving the $t^{\text{th}}$ iteration, a matrix $\mathbf{A}_{\mathbf{s}_m^{(t)}} = \mathbf{Q}_{\mathbf{s}_m^{(t)}} + \left[\mathbf{Q}_{\mathbf{s}_m^{(t)}}\right]^H$ and is related to $\mathbf{s}_m^{(t)}$, and a matrix $\mathbf{Q}_{\mathbf{s}_m^{(t)}} = \sum_{p\in P}\sum_{k\in K} w_a(k,p)\left[\mathbf{s}_m^{(t)}\right]^H \mathbf{U}_{k,p}^H \mathbf{s}_m^{(t)}\mathbf{U}_{k,p} - \lambda_{\mathbf{U}}\mathbf{s}_m^{(t)}\left[\mathbf{s}_m^{(t)}\right]^H$. If optimization is for a WISL, the matrix $\mathbf{Q}_{\mathbf{s}_m^{(t)}}$ is rewritten to $\mathbf{Q}_{\mathbf{s}_m^{(t)}} = \frac{1}{|P|}\sum_{p\in P}\sum_{k=-N+1}^{N-1} w_a(k,p)\left[\mathbf{s}_m^{(t)}\right]^H \mathbf{U}_{k,p}^H \mathbf{s}_m^{(t)}\mathbf{U}_{k,p} - \lambda_{\mathbf{U}}\mathbf{s}_m^{(t)}\left[\mathbf{s}_m^{(t)}\right]^H$. $\lambda_{\mathbf{U}}$ is selected to be a real number greater than or equal to a maximum eigenvalue of the matrix U.

Local cross-AF energy of the $m^{\text{th}}$ sequence and the $m'^{\text{th}}$ sequence may be represented as:

$$E_{c1}^{m'}(\mathbf{s}_m) = \sum_{p\in P}\sum_{k\in K} w_c(k,p)\left|r_{m,m'}(k,p)\right|^2$$

$$= \mathbf{s}_m^H \left[\sum_{p\in P}\sum_{k\in K} w_c(k,p)\mathbf{U}_{k,p}^H \mathbf{s}_{m'}\mathbf{s}_{m'}^H \mathbf{U}_{k,p}\right]\mathbf{s}_m$$

$$= \mathbf{s}_m^H \mathbf{C}_{1,\mathbf{s}_{m'}}\mathbf{s}_m$$

Local cross-AF energy of the $m'^{\text{th}}$ sequence and the $m^{\text{th}}$ sequence may be represented as:

$$E_{c2}^{m'}(\mathbf{s}_m) = \sum_{p\in P}\sum_{k\in K} w_c(k,p)\left|r_{m',m}(k,p)\right|^2$$

$$= \mathbf{s}_m^H \left[\sum_{p\in P}\sum_{k\in K} w_c(k,p)\mathbf{U}_{k,p}\mathbf{s}_{m'}\mathbf{s}_{m'}^H \mathbf{U}_{k,p}^H\right]\mathbf{s}_m$$

$$= \mathbf{s}_m^H \mathbf{C}_{2,\mathbf{s}_{m'}}\mathbf{s}_m$$

$$\text{Set} \ \mathbf{C}_{\mathbf{s}_{m'}} = \sum_{\substack{m'=1 \\ m'\neq m}}^{M} (\mathbf{C}_{1,\mathbf{s}_{m'}} + \mathbf{C}_{2,\mathbf{s}_{m'}}).$$

Therefore, a specific optimization problem of this solution is as follows:

$$\max_{\mathbf{s}_m^{(t+1)}} \left[\mathbf{s}_m^{(t+1)}\right]^H (-(\mathbf{A}_{\mathbf{s}_m^{(t)}} + \mathbf{C}_{\mathbf{s}_{m'}}))\mathbf{s}_m^{(t+1)}$$

$$s.t. \ |s_m^{(t+1)}(n)|=1, \ n=1,2,\cdots,L$$

Specifically, the method includes the following steps.

Step 1: Randomly initialize phases of M unit modulus sequences $s_m$.

Step 2: For an $m^{\text{th}}$ unit modulus sequence, perform sequential iterative optimization on the $m^{\text{th}}$ unit modulus

sequence according to the AISO algorithm, to obtain an optimal value $\mathbf{s}_{ac1} = e^{j \arg((\lambda_m^{(t)} \mathbf{I}_L - (\mathbf{A}_{s_m^{(t)}} + \mathbf{C}_{s_{m'}^{(t)}})\mathbf{s}_m^{(t)}))}$ of the $m^{th}$ unit modulus sequence, where $j$ is an imaginary unit root, and arg is an argument operation of a complex number.

Step 3: Select an appropriate step factor $\alpha$ by using a two-point acceleration policy in the AISO algorithm to update the $m^{th}$ unit modulus sequence: $\mathbf{s}_{ac} = e^{j \arg(\mathbf{s}_m^{(t)} - 2\alpha \mathbf{r} + \alpha^2 \mathbf{v})}$, where $\mathbf{r} = \mathbf{s}_{ac1} - \mathbf{s}_m^{(t)}$, $\mathbf{v} = \mathbf{s}_{ac2} - \mathbf{s}_{ac1} - \mathbf{r}$, $\mathbf{s}_{ac2} = e^{j \arg((\lambda_{ac1} \mathbf{I}_N - (\mathbf{A}_{\mathbf{s}_{ac1}} + \mathbf{C}_{s_{m'}^{(t)}})\mathbf{s}_{ac1}))}$, and $\mathbf{s}_{ac1} = e^{j \arg((\lambda_m^{(t)} \mathbf{I}_N - (\mathbf{A}_{s_m^{(t)}} + \mathbf{C}_{s_{m'}^{(t)}})\mathbf{s}_m^{(t)}))}$.

Step 4: Update other unit modulus sequences in the sequence set by using step 2 and step 3, until the entire sequence set is updated.

Step 5: If the sequence set does not meet an end condition, return to step 2. Otherwise, stop searching and output the sequence set.

The foregoing steps in the technical solution are for updating a unit modulus sequence. Therefore, only a unit modulus sequence having a local ambiguity function can be designed. However, the technical solution is not applicable to a design of a multi-variable sequence. Therefore, a multi-variable sequence having a good local ambiguity function cannot be designed.

Based on the conventional technology, an embodiment of this application provides a sequence set generation method. It should be noted herein that one sequence set includes a plurality of sequences, and all sequences in the sequence set meet the foregoing sequence design rule. In this solution, the simulated annealing algorithm and the coordinate descent algorithm are combined to generate a sequence set having good local ambiguity functions. The sequence set may be a multi-variable sequence set. A sequence included in the sequence set may be applied to transmission of a training field unit (TRN-UNIT) of a standard related to high frequency band. The training field unit is used for beam training in a standard related to high frequency band. The training field unit has a variable length, and may be flexibly used to send a sequence.

The following describes in detail a sequence set generation method provided in an embodiment of this application with reference to the accompanying drawings.

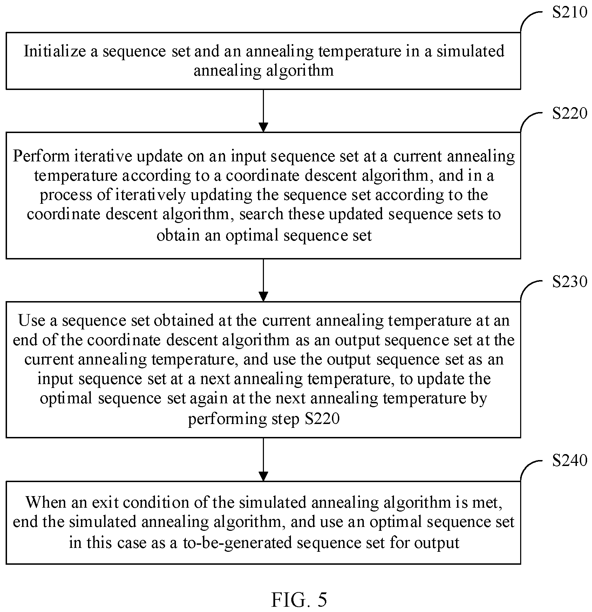

Refer to the flowchart shown in FIG. 5, the sequence set generation method provided in this embodiment mainly includes steps S210 to S230. The following sequentially describes the steps.

S210: Initialize a sequence set and an annealing temperature in the simulated annealing algorithm.

Each sequence set includes a plurality of sequences. A total quantity of sequences included in each sequence set (that is, a size of the sequence set) may be configured according to a requirement. Each sequence includes a plurality of elements, and a total quantity (that is, a length) of elements included in each sequence may be configured as required. For example, the sequence may be a binary sequence, a quaternary sequence, or a multi-variable sequence. In other words, the sequence set generation method provided in this embodiment of this application may be applied to a design of a binary sequence, a quaternary sequence, and a multi-variable sequence.

S220: Perform iterative update on an input sequence set at a current annealing temperature according to the coordinate descent algorithm, and in a process of iteratively updating the sequence set according to the coordinate descent algorithm, search these updated sequence sets to obtain an optimal sequence set.

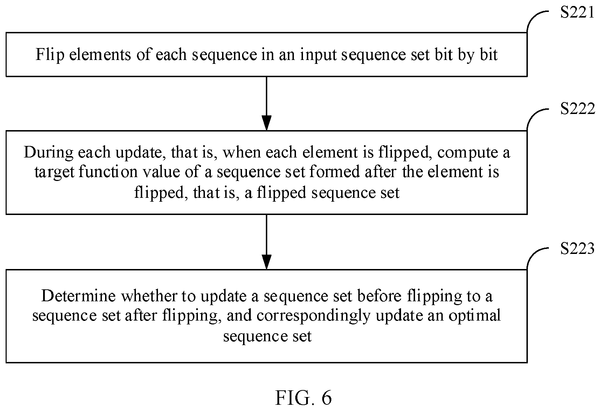

In some embodiments, in a flowchart shown in FIG. 6, this step may include the following substeps S221 to S223.

S221: Flip elements of each sequence in the input sequence set bit by bit, where each flipped element corresponds to one iterative update according to the coordinate descent algorithm.

S222: During each update, that is, when each element is flipped, compute a target function value of a sequence set formed after the element is flipped, that is, a flipped sequence set. Computation of the target function value may include the following two steps.

Step 1: Compute an auto-ambiguity function and a cross-ambiguity function of each sequence in the sequence set obtained after flipping according to the following formula:

After an $i^{th}$ element of an $m^{th}$ sequence in the sequence set is flipped, an auto-ambiguity function $r_{m,m}(k, p)$ of the $m^{th}$ sequence in the flipped sequence set is:

$$r_{m,m}(k,p) = \begin{cases} r'_{m,m}(k,p) - 2x_m(i)x_m(i+k)e^{j2\pi i \frac{p}{L}} & k>0, 1 \le i \le k, i \le L-k \\ & or\ k<0, L+k+1 \le i \le L,\ -k+1 \le i \\ r'_{m,m}(k,p) - 2x_m(i)x_m(i+k)e^{j2\pi i \frac{p}{L}} + 2x_m(i-k)x_m(i)e^{j2\pi(i-k)\frac{p}{L}} & k>0, k+1 \le i \le L-k; \\ & or\ k<0, -k+1 \le i \le L+k; \\ r'_{m,m}(k,p) - 2x_m(i-k)x_m(i)e^{j2\pi(i-k)\frac{p}{L}} & k+0, L-k+1 \le i \le L, i \ge k+1 \\ & or\ k<0, 1 \le i \le -k, i \le L+k \\ r'_{m,m}(k,p) & otherwise \end{cases}$$

After the $i^{th}$ element of the $m^{th}$ sequence in the sequence set is flipped, a cross-ambiguity function $r_{m,m'}(k, p)$ of the $m^{th}$ sequence in the flipped sequence set and an $m'^{th}$ sequence in the sequence set is:

$$r_{m,m'}(k,p) = \begin{cases} r'_{m,m'}(k,p) - 2x_m(i)x_{m'}(i+k)e^{j2\pi i \frac{p}{L}} & 0 \le k \le L-i \\ & or\ -i \le k < 0 \\ r'_{m,m'}(k,p) & otherwise \end{cases}$$

After an $i^{th}$ element of the $m'^{th}$ sequence in the sequence set is flipped, a cross-ambiguity function $r_{m,m'}(k, p)$ of the $m^{th}$ sequence in the flipped sequence set and the $m'^{th}$ sequence in the sequence set is:

$$r''_{m,m'}(k,p) = \begin{cases} r'_{m,m'}(k,p) - 2x_m(i)x_{m'}(i+k)e^{j2\pi(i-k)\frac{p}{L}} & 0 \le k \le L-i \\ & or\ -i \le k < 0 \\ r'_{m,m'}(k,p) & otherwise \end{cases}$$

In the foregoing formula,

$r_{m,m}(k,p)$ is the auto-ambiguity function of the $m^{th}$ sequence in the sequence set formed after flipping. $r'_{m,m}(k,p)$ is an auto-ambiguity function of the $m^{th}$ sequence in the sequence set before flipping. $x_m(i)$ is the $i^{th}$ element of the $m^{th}$ sequence in the sequence set before flipping. $x_m(i + k)$ is an $i + k^{th}$ element of the $m^{th}$ sequence in the sequence set before flipping. $x_m(i-k)$ is an $i-k^{th}$ element of the $m^{th}$ sequence in the sequence set before flipping, $k$ is a current delay, and i is an $i^{th}$ element.

$r_{m,m'}(k, p)$ is the cross-ambiguity function of the $m^{th}$ sequence in which the flipped element is located and the $m'^{th}$ sequence in the sequence set after flipping. $r''_{m,m'}(k,p)$ is the cross-ambiguity function of the $m^{th}$ sequence and the $m'^{th}$ sequence in which the flipped element is located in the sequence set after flipping. $r'_{m,m'}(k,p)$ is a cross-ambiguity function of the $m^{th}$ sequence and the $m'^{th}$ sequence in the sequence set before flipping.

$x_m(i)$ is the $i^{th}$ element of the $m^{th}$ sequence in the sequence set before flipping, and $x_{m'}(i+k)$ is the $i+k^{th}$ element of the $m'^{th}$ sequence in the sequence set before flipping.

j is an imaginary unit root, P is a Doppler shift range of the sequence set, and L is a length of a single sequence in the sequence set.

Step 2: Compute a target function f of the flipped sequence set according to the following formula:

$$f = \begin{cases} \min \begin{cases} \left[ \frac{1}{|P|} \sum_{p \in P} \sum_{k \in K} w_a(k,p) \, | \, r_{m,m}(k,p) |^2 \right] + \\ \left[ \frac{1}{|P|} \sum_{p \in P} \sum_{k \in K} w_c(k,p) \, | \, r_{m,m'}(k,p) |^2 \right] + \\ \left[ \frac{1}{|P|} \sum_{p \in P} \sum_{k \in K} w_c(k,p) \, | \, r_{m',m}(k,p) |^2 \right] \\ s.t. \quad \mathrm{r}_m = 1或\text{-}1, \; \mathrm{m} = 1,2,...,M \end{cases} \end{cases}$$

In the foregoing formula,
f is the target function value of the sequence set.

P is a Doppler shift range of the sequence set, $P$ is a current Doppler shift range, and $p \in P$.

K is a delay range of the sequence set, $k$ is a current delay, and $k \in K$.

$r_{m,m}(k, p)$ is an auto-ambiguity function of the $m^{\text{th}}$ sequence in the sequence set formed after flipping.

$r_{m,m'}(k, p)$ is a cross-ambiguity function of the $m^{\text{th}}$ sequence in which the flipped element is located and the $m'^{\text{th}}$ sequence.

$r_{m',m}(k,p)$ is a cross-ambiguity function of the $m^{\text{th}}$ sequence in which the flipped element is located and the $m'^{\text{th}}$ sequence.

$r_m$ is the $m^{\text{th}}$ sequence in the sequence set, and M is a total quantity of sequences in the sequence set.

$w_a(k, p)$ is a weight factor of the auto-ambiguity function of the $m^{\text{th}}$ sequence in the sequence set, and $w_a(k, p) \geq 0$.

$w_c(k, p)$ is a weight factor of the cross-ambiguity function of the $m^{\text{th}}$ sequence and the $m'^{\text{th}}$ sequence in the sequence set, and $w_c(k, p) \geq 0$.

S223: Determine, corresponding to each iterative update of step S222, that is, when each element is flipped, and based on one of the following cases, whether to update a sequence set before flipping to a sequence set after flipping, and correspondingly update an optimal sequence set:

(A) When the target function value of the sequence set formed after flipping is not greater than a target function value of the sequence set before the current flipping, the sequence set before the flipping is updated to the sequence set formed after the flipping. In other words, update of the sequence set in the current iteration is accepted (that is, the current element flipping is received). The optimal sequence set is updated to the sequence set formed after the flipping. The target function value needs to be updated to the target function value of the sequence set formed after the flipping.

(B) When the target function value of the sequence set formed after flipping is greater than a target function value of the sequence set before the current flipping, and a value of an acceptance probability function is less than a value, the sequence set formed after the flipping is updated from the sequence set before the flipping (that is, the current element flipping is accepted at a probability). The target function value is updated to the target function value of the sequence set formed after the flipping. In this case, the optimal sequence set is not updated (that is, the optimal sequence set is still the optimal sequence set before the flipping).

(C) When the target function value of the sequence set formed after the flipping is greater than a target function value of the sequence set before the current flipping, and a value of an acceptance probability function is greater than or equal to a value, the sequence set before the current flipping is not updated (that is, the sequence set formed after the current flipping is updated to the sequence set before the current flipping, and the current element flipping is not accepted). In this case, neither the optimal sequence set nor the target function value of the sequence set is updated. In other words, the optimal sequence set nor the target function value are values related to the sequence set before the flipping.

The acceptance probability function is $P = e^{-\frac{(f-f_0)}{T}}$. $P$ is a value of the acceptance probability function. $f$ is the target function value of the sequence set formed after the flipping. $f_0$ is the target function value of the sequence set before the flipping. $T$ is the current annealing temperature in the simulated annealing algorithm. The value compared with the value of the acceptance probability function may be a random number between [0,1], or may be a preset value.

In the foregoing steps, whether to accept update of the sequence set in the current iteration process is determined according to a value relationship between target function values in two iteration processes and a greedy search probability (that is, the foregoing acceptance probability) designed according to a simulated annealing algorithm criterion. This ensures convergence of the target function, uses an annealing temperature in the simulated annealing algorithm as a determining condition for iteratively updating the sequence set by using a coordinate descent algorithm, avoids that the obtained sequence set is locally optimal, and can find sequence sets with good local auto-ambiguities and cross-ambiguities.

S230: Use a sequence set obtained at the current annealing temperature at an end of the coordinate descent algorithm as an output sequence set at the current annealing temperature, and use the output sequence set as an input sequence set at a next annealing temperature, to update the optimal sequence set again at the next annealing temperature by performing step S220.

S240: When an exit condition of the simulated annealing algorithm is met, end the simulated annealing algorithm, and use an optimal sequence set in this case as a to-be-generated sequence set for output.

In some embodiments, the exit condition may be one of the following:

Exit condition 1: The annealing temperature of the simulated annealing algorithm gradually decreases to reach a preset minimum threshold of the annealing temperature.

Exit condition 2: A target function value of each output sequence set at these annealing temperatures is stable at continuously decreasing annealing temperatures, and a current annealing temperature is lower than a preset value.

When the target function value of each output sequence set at continuously decreasing annealing temperatures is stable, it indicates that the optimal sequence set is stable. Therefore, the simulated annealing algorithm is exited. The optimal sequence set in this case is used as the to-be-generated sequence set for output.

That the target function value of each output sequence set is stable indicates that: at an annealing temperature that continuously decreases for a specific quantity of times, a target function value of each output sequence set at these annealing temperatures does not change or changes at an extent below a threshold.

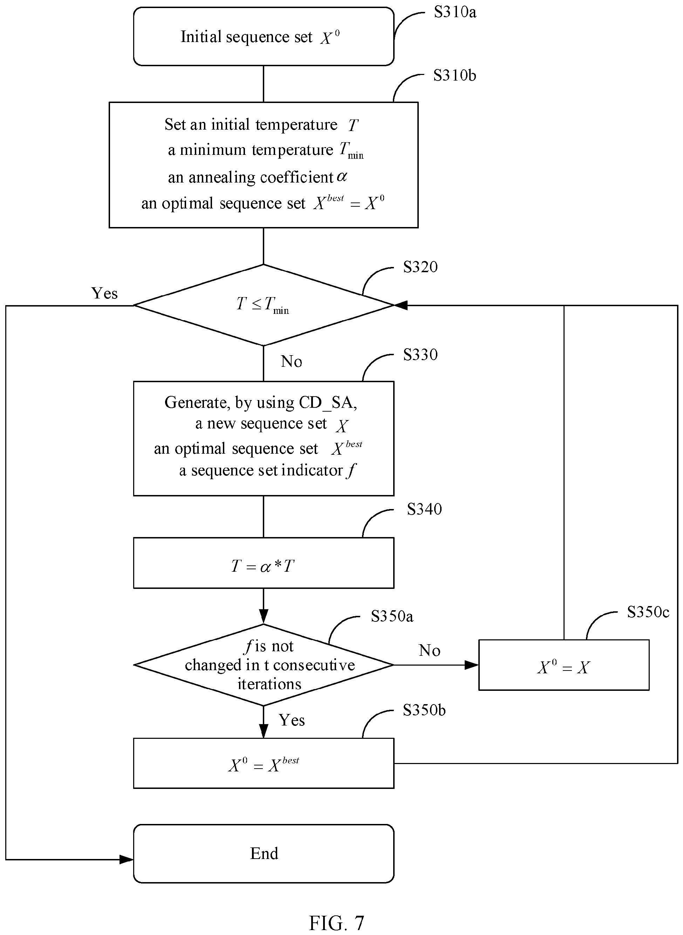

To further better understand the sequence set generation method provided in embodiments of this application, the following describes, with reference to FIG. 7 to FIG. 8, a specific implementation of the sequence set generation method provided in an embodiment of this application.

FIG. 7 is a main flowchart of the sequence set generation method according to this specific implementation, and the method may include the following steps.

S310a and S310b: Receive an initial input parameter value, and initialize each parameter, including:

setting an initial sequence set of an input sequence set X to $X^0$, that is, setting $X=X^0$, and setting an initial value of an optimal sequence set $X^{best}$ to the $X^0$, that is, setting $X^{best}=X^0$, where a total quantity (namely, a size of a sequence set) of sequences included in the initial sequence set $X^0$ is M, and a quantity (namely, a length) of elements included in each sequence in the sequence set is L; and

setting a preset minimum annealing temperature to be used in the simulated annealing algorithm to $T_{min}$, and setting a preset annealing coefficient to $\alpha$, where $\alpha > 0$, and its value may be a value less than and close to 1, for example, 0.96, 0.95, and the like.

S320: Determine a value relationship between a current annealing temperature T and the preset minimum annealing temperature $T_{min}$ ; when $T \leq T_{min}$, that is, when the current annealing temperature is less than the preset minimum annealing temperature (corresponding to the exit condition 1 in S240), output the optimal sequence set, and end the procedure; otherwise, perform step S330.

S330: Perform n iterative updates on the input sequence set X according to the coordinate descent algorithm, iteratively update the optimal sequence set $X^{best}$, and compute a target function value f of the sequence set after each update. After iteration according to the coordinate descent algorithm ends, the output sequence set is used as an output sequence set of the current annealing temperature T. This step is described in detail hereinafter.

For a specific computing method for computing the target function value f of the sequence set after each update, refer to the foregoing step S222.

S340: Update the annealing temperature based on $T=\alpha *T$, where, as described in step S310, $\alpha$ is a preset annealing coefficient.

S350a to S350c: Determine a target function value f of an output sequence set of a previous annealing temperature (that is, before the annealing temperature is updated), and determine whether the target function value is stable for t consecutive times in a process of t consecutive temperature reductions of the simulated annealing algorithm; if yes, use an optimal sequence set $X^{best}$ formed when iteration update of the coordinate descent algorithm at the current annealing temperature ends as an output sequence set at the current annealing temperature, and use the sequence set as an input sequence set at a next annealing temperature, and return to step S320; if not, use a sequence set formed when iterative update of the coordinate descent algorithm at the current annealing temperature ends as an output sequence set at the current annealing temperature, use the sequence set as an input sequence set at a next annealing temperature, and return to step S320.

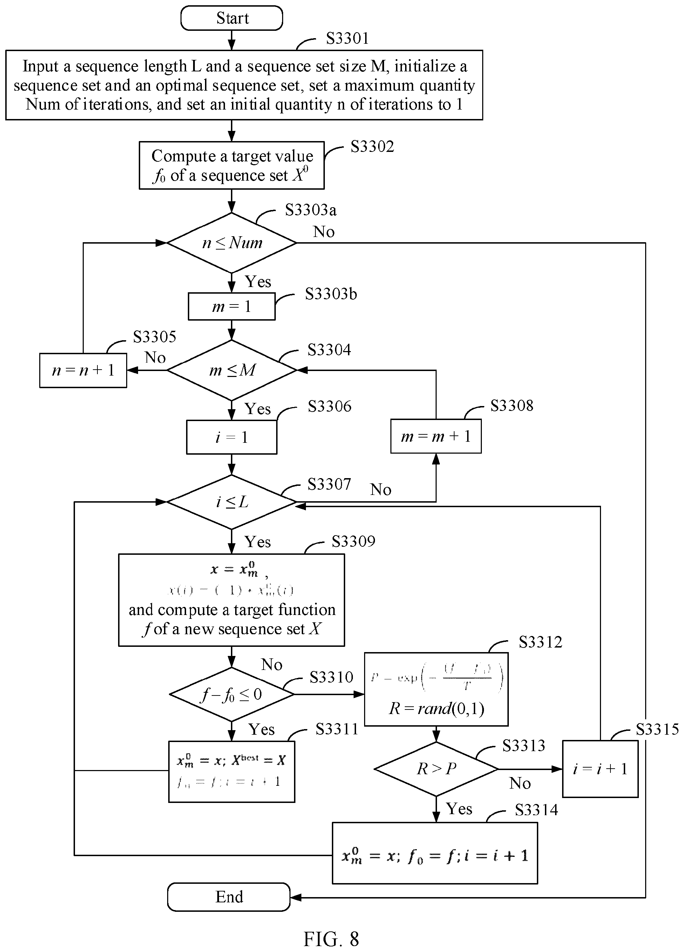

FIG. 8 is a specific implementation of performing n iterative updates on the sequence set X according to a coordinate descent algorithm in step S330, and the following steps are included.

S3301: Input an initialized sequence set $X^0$, including a total quantity M of sequences that are input into the sequence set $X^0$ and a quantity L of elements included in each sequence, preset a maximum quantity of iterations used in the coordinate descent algorithm to *Num* , and a variable n used for each iterative computation, and initialize $n = 1$; and set a variable m used for computing each sequence corresponding to the total quantity M of sequences in the sequence set $X^0$, where $m \in M$ , and set a variable i used for iterative computation of each element corresponding to the quantity L of elements, where $i \in L$.

S3302: Compute a target function value f of the sequence set $X^0$ as an initial value of the target function value. For a specific method for computing the target function value f, refer to the foregoing step S222.

S3303a and S3303b: Determine a value relationship between n and the maximum quantity *Num* of iterations; if $n \le Num$ , a current quantity of iterations is less than or equal to the maximum quantity of iterations, set the variable $m = 1$, that is, set the variable m to an initial value 1 (starting iterative computation from a first sequence in the sequence set), and perform step S3304; and if $n > Num$ , it indicates that iterations of the coordinate descent algorithm are completed, and the process of the coordinate descent algorithm ends.

S3304: Determine a value relationship between m and M, if $m \le M$ , it indicates that iterative computation is not completed for all sequences in the current sequence set, in this case, perform step S3306, if $m > M$ , it indicates that iterative computation is completed for all sequences in the sequence set, and in this case, perform step S3305.

S3305: Set $n = n + 1$, and return to step S3303a, to perform next iterative computation in the coordinate descent algorithm,

S3306: Set the variable $i = 1$, that is, set the variable i to an initial value 1 (perform flipping computation starting from a first element in a sequence), and then perform step S3307.

S3307: Determine a value relationship between *i* and L, and if $i \le L$ , indicating that flipping computation is not completed on all elements in the sequence, perform step S3309, or if $i > L$, indicating that flipping computation is completed on all elements in the sequence, perform step S3308.

S3308: Set $m = m + 1$, and return to step S3304, to perform processing on a next sequence.

S3309: Set a sequence x variable to an $m^{th}$ sequence in the sequence set $X^0$ , that is, $X = X_m^0$ . This step indicates that the $m^{th}$ sequence needs to be processed.

The sequence x is processed, to flip an $i^{th}$ element of the $m^{th}$ sequence in the sequence set $X^0$ , that is,

$$\mathrm{x}\left(i\right) = \left(-1\right) * x_m^0\left(i\right).$$

The sequence x is updated. To be specific, an original element at a same location is replaced with a flipped element x($i$), and the replaced element and an element at another location constitute a new $m^{th}$ sequence, and an updated sequence x and another sequence form a new sequence set, that is, a sequence set formed after the flipping. In addition, a target function value of the sequence set formed after the flipping is computed, and step S3 310 is performed. For a specific method for computing the target function value, refer to the foregoing step S222.

S3310: Determine a value relationship between a target function value f of the sequence set formed after the flipping and a target function value of the sequence set before the flipping. The value relationship may be obtained herein by obtaining a difference between the two target function values and comparing the difference with 0. If $f - f_0 \le 0$, it indicates that the sequence set formed after the current flipping is accepted, and the sequence set is used as a sequence set input in a next iteration. In this case, S3311 is performed; otherwise, S3312 is performed.

S3311: Set $x_m^0 = x$ , $X^{best} = X$, $f_0 = f$ , and $i = i + 1$, indicating to accept a sequence set that is formed after flipping and that is generated in this iteration. In other words, set a flipped sequence x to the $m^{th}$ sequence in the sequence set $X^0$. In other words, the $m^{th}$ sequence is updated to the flipped sequence, a flipped sequence set in this iteration is set to an optimal sequence set. A target function value of the flipped sequence set corresponding to this iteration is set to an initial target function value in a next iteration, and an element in the sequence is moved to a next element for flipping computation. Then, return to step S3307.

S3312: Compute an acceptance probability P, where $P = e^{-\frac{(f - f_0)}{T}}$ , and generate a random number R, where R is a random number between [0,1], *P* is a value of the acceptance probability function. *f* is the target function value of the sequence set formed after the flipping. $f_0$ is the target function value of the sequence set before the flipping. *T* is the current annealing temperature.

S3313 to S3315: Determine a value relationship between R and P. If $R > P$, set $x_m^0 = x$ , $f_0 = f$ , and $i = i + 1$, indicating to accept a sequence set that is formed after flipping and that is generated in this iteration. In other words, set a flipped sequence x to the m$^{th}$ sequence in the sequence set $X^0$. In other words, the m$^{th}$ sequence is updated to the flipped sequence. A target function value of the flipped sequence set corresponding to this iteration is set to an initial target function value in a next iteration, and an element in the sequence is moved to a next element for flipping computation. Then, return to step S3307.

If $R \leq P$, only set $i = i+1$, indicating that the m$^{th}$ sequence is not updated, the optimal sequence set is not updated, and a target function value of the sequence set formed after the flipping is not updated. In other words, the sequence set obtained after the flipping is not accepted, and only an initial sequence set in a next iteration is a sequence set before the flipping. Return to step S3307.

To better understand a function of this application, the following uses a fully polarized radar as an example to describe a basic principle of performing ranging and speed measurement by using the sequence set in this application by the radar. When the fully polarized radar performs ranging and speed measurement, any two of the sequence sets provided in the foregoing embodiments may be used.

The fully polarized radar implements the ranging and speed measurement by using polarization scattering matrix (PSM, polarization scattering matrix) information of a target. PSM is used to describe the polarization characteristics of the target, and can provide more abundant electromagnetic scattering information than that of a radar-cross section (radar-cross section, RCS). Therefore, how to obtain the PSM is a prerequisite for implementing ranging and speed measurement. The following describes how to obtain the PSM information.

A fully polarized radar system is a system that can transmit and receive signals simultaneously on two orthogonal polarizations.

The fully polarized radar system includes a transmit antenna and a receive antenna in a vertical polarization direction V, and a transmit antenna and a receive antenna in a horizontal polarization direction H. The transmit antenna in the vertical polarization direction V is configured to transmit a signal in the vertical polarization direction, and the transmit antenna in the horizontal polarization direction H is configured to transmit a signal in the horizontal polarization direction. The signals transmitted in the vertical polarization direction V and the horizontal polarization direction H are generated by using the sequence set generation method in the foregoing embodiment, that is, the foregoing first signal. The receive antenna in the vertical polarization direction V is configured to receive a signal transmitted by the transmit antenna in the vertical polarization direction V, and the receive antenna in the horizontal polarization direction H is configured to receive a signal transmitted by the transmit antenna in the horizontal polarization direction H. When the receiving antenna in the vertical polarization direction V and/or the receiving antenna in the horizontal polarization direction H receive a corresponding signal, the corresponding signal is filtered by using a filter. A convolution operation is performed on a filtered signal and the received corresponding signal (the signal before filtering) to obtain an output signal. The signal is a radar output signal. It should be noted that the foregoing describes a specific process of obtaining the radar output signal. During actual application, a radar may directly obtain the output signal received by the radar.

In addition, based on the input sequence set, an auto-ambiguity function and a cross-ambiguity function of the sequence set at a current delay and in a current Doppler shift state may be obtained by performing the step S 122, and an ambiguity matrix may be obtained based on the current delay and the auto-ambiguity function and the cross-ambiguity function in the current Doppler shift state.

Based on the radar output signal and ambiguity matrix obtained above, a PSM can be obtained.

After the PSM is obtained, the ranging and speed measurement of the fully polarized radar can be implemented according to the PSM.

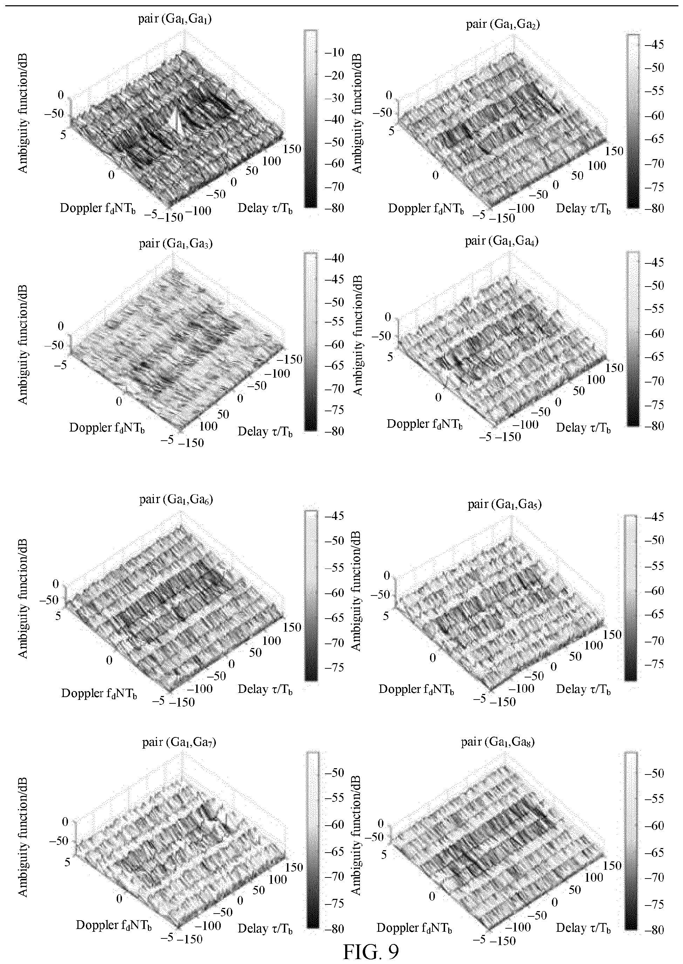

To verify efficiency of embodiments of this application, the following provides some analog simulation images in embodiments of this application, as shown in FIG. 9.

To verify performance of the method provided in the foregoing embodiments, an example is used herein. In this example, a sequence length is 512, a sequence set size is 3, a delay range set K = {-10, -9, ..., 9, 10}, a Doppler shift range P = {-3, ..., 3 }, an initial temperature of the simulated annealing algorithm is 1000, and an annealing coefficient is 0.97. An iteration exit condition is that an annealing temperature is less than $10^{-3}$ (the temperature is a preset value in the exit condition 2 in the foregoing embodiment) and the target function does not change for 20 consecutive times (the exit condition of the simulated annealing algorithm herein is the exit condition 2 in the foregoing embodiment).

First, a binary sequence set is randomly generated, and then iterative update is performed by using the foregoing set coordinate descent process of the simulated annealing algorithm (a specific iterative update process is the same as that in the foregoing embodiment, and therefore details are not described herein again). The simulated annealing algorithm is used as a main framework. The coordinate descent algorithm is used to perform local iteration at each annealing temperature. During local iteration, each element of each sequence in the sequence set is flipped bit by bit. In addition, a target function value is computed by using the fast target function computation method provided in step S122, and finally, a greedy policy in the simulated annealing algorithm is introduced to determine whether to accept the flipped sequence set.

Energy of a side lobe of a local auto-ambiguity function of the sequence set shown in pain (Ga1,Ga1) in FIG. 9 is obviously reduced compared with that of other regions. Energy of a side lobe of a maximum auto-ambiguity function in a local range is reduced to -57.68 dB. In FIG. 9, energy of a side lobe of a cross-ambiguity function of the sequence set shown by pain (Ga1,Ga2), pain (Ga1,Ga3), pain (Ga1,Ga4), pain (Ga1,Ga5), pain (Ga1,Ga6), pain (Ga1,Ga7) and pain (Ga1,Ga8) is obviously reduced compared with that of another region, and energy of a side lobe of a maximum cross-ambiguity function in a local range is separately reduced to -45.64 bB. Therefore, a sequence set with a good local ambiguity function may be generated by using the method provided in this application.

In addition, when an ambiguity function of each sequence is computed by using the method for fast computing an ambiguity function of each sequence in a sequence set provided in step S222 in the foregoing embodiment of this application, complexity of $O(L^2)$ in the conventional technology may be simplified to complexity of $O(L)$. In other words, during computation of an ambiguity function of a sequence, two-dimensional complexity in the conventional technology may be simplified to one-dimensional complexity, thereby accelerating a computing process of a target function.

The foregoing describes the data transmission method and the method for generating a sequence in a training field in the data transmission method provided in embodiments of this application. The following describes a data transmission apparatus provided in embodiments of this application. It should be understood that the data transmission apparatus applied to a transmit device is the transmit device in the foregoing data transmission method, and has any function of the transmit device in the foregoing method. The data transmission apparatus applied to a receive device is the receive device in the foregoing data transmission method, and has any function of the receive device in the foregoing method.

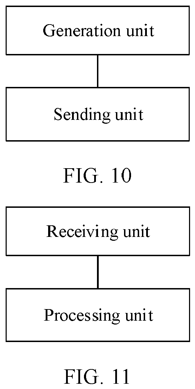

As shown in FIG. 10, a data transmission apparatus applied to a transmit device includes:

a generation unit, configured to generate a physical layer protocol data unit PPDU, where the PPDU includes a training field, and the training field includes a sequence used for target sensing; and
a sending unit, configured to send the PPDU.

The data transmission apparatus applied to the transmit device provided in this embodiment of this application is the transmit device in the foregoing method, and has any function of the transmit device in the foregoing method. For specific details, refer to the foregoing method. Details are not described herein again.

As shown in FIG. 11, a data transmission apparatus applied to a receive device includes:

a receiving unit, configured to receive a physical layer protocol data unit PPDU, where the PPDU includes a training field, and the training field includes a sequence used for target sensing; and
a processing unit, configured to perform target sensing based on the sequence used for target sensing.

The data transmission apparatus applied to the receive device provided in this embodiment of this application is the receive device in the foregoing method, and has any function of the receive device in the foregoing method. For specific details, refer to the foregoing method. Details are not described herein again.

The foregoing describes the data transmission apparatus applied to the transmit device and the data transmission apparatus applied to the receive device in embodiments of this application. The following describes possible product forms of the data transmission apparatus applied to the transmit device and the data transmission apparatus applied to the receive device. It should be understood that any form of product having the features of the data transmission apparatus applied to the transmit device shown in FIG. 10 and any form of product having the features of the data transmission apparatus applied to the receive device shown in FIG. 11 fall within the protection scope of this application. It should be further understood that the following description is merely an example, and a product form of the data transmission apparatus applied to the transmit device and a product form of the data transmission apparatus applied to the receive device in embodiments of this application are not limited thereto.

As a possible product form, the data transmission apparatus applied to the transmit device and the data transmission apparatus applied to the receive device in embodiments of this application may be implemented by using general bus architectures.

The data transmission apparatus applied to the transmit device includes a processor and a transceiver internally communicating with the processor. The processor is configured to generate a physical layer protocol data unit PPDU. The PPDU includes a training field, and the training field includes a sequence used for target sensing. The transceiver is configured to send the physical layer protocol data unit PPDU. Optionally, the data transmission apparatus applied to the transmit device may further include a memory. The memory is configured to store instructions executed by the processor.

The data transmission apparatus applied to the receive device includes a processor and a transceiver internally communicating with the processor. The transceiver is configured to receive a physical layer protocol data unit PPDU. The PPDU includes a training field, and the training field includes a sequence used for target sensing. The processor is configured to perform target sensing based on the sequence used for target sensing. Optionally, the data transmission apparatus applied to the receive device may further include a memory. The memory is configured to store instructions executed by the processor.

As a possible product form, the data transmission apparatus applied to the transmit device and the data transmission apparatus applied to the receive device in embodiments of this application may be implemented by using general-purpose processors.

The data transmission apparatus applied to the transmit device includes a processing circuit and an output interface internally communicating with the processing circuit. The processing circuit is configured to generate a physical layer protocol data unit PPDU. The PPDU includes a training field, and the training field includes a sequence used for target sensing. The output interface is configured to send the PPDU. Optionally, the general-purpose processor may further include a storage medium, and the storage medium is configured to store instructions executed by the processing circuit.

The data transmission apparatus applied to the receive device includes a processing circuit and an input interface internally communicating with the processing circuit. The input interface is configured to receive a physical layer protocol data unit PPDU. The PPDU includes a training field, and the training field includes a sequence used for target sensing. The processing circuit is configured to perform target sensing based on the sequence used for target sensing. Optionally, the general-purpose processor may further include a storage medium, and the storage medium is configured to store instructions executed by the processing circuit.

As a possible product form, the data transmission apparatus applied to the transmit device and the data transmission apparatus applied to the receive device in embodiments of this application may alternatively be implemented by using the following components: one or more FPGAs (field programmable gate arrays), PLDs (programmable logic devices), controllers, state machines, gate logic, discrete hardware components, any other suitable circuits, or any combination of circuits that can perform various functions described in this application.

It should be understood that the data transmission apparatus applied to the transmit device and the data transmission apparatus applied to the receive device in the foregoing product forms respectively have any function of the transmit device and any function of the receive device in the foregoing method embodiments. Details are not described herein again.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by persons skilled in the art that, for convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

   generating a physical layer protocol data unit PPDU, wherein the PPDU comprises a training field, and the training field comprises a sequence used for target sensing; and
   sending the PPDU.

2. A data transmission method, comprising:

   receiving a physical layer protocol data unit PPDU, wherein the PPDU comprises a training field, and the training field comprises a sequence used for target sensing; and
   performing target sensing based on the sequence used for target sensing.

3. The method according to claim 1 or 2, wherein the sequence comprises at least one of eight sequences.

4. The method according to claim 3, wherein when a length of the sequence is 256, the eight sequences are respectively:

   $Sn256_1$, $Sn256_2$, $Sn256_3$, $Sn256_4$, $Sn256_5$, $Sn256_6$, $Sn256_7$, and $Sn256_8$, wherein
   for specific forms of $Sn256_1$, $Sn256_2$, $Sn256_3$, $Sn256_4$, Sn256s, $Sn256_6$, $Sn256_7$, and $Sn256_8$, refer to description of embodiments.

5. The method according to claim 3, wherein when a length of the sequence is 512, the eight sequences are respectively:

   $Sn512_1$, $Sn512_2$, $Sn512_3$, $Sn512_4$, $Sn512_5$, $Sn512_6$, $Sn512_7$, and $Sn512_8$, wherein
   for specific forms of $Sn512_1$, $Sn512_2$, $Sn512_3$, $Sn512_4$, Sn512s, $SnS12_6$, $Sn512_7$, and Sn512s, refer to description of embodiments.

6. The method according to claim 3, wherein when a length of the sequence is 1024, the eight sequences are respectively:

   $Sn1024_1$, $Sn1024_2$, $Sn1024_3$, $Sn1024_4$, $Sn1024_5$, $Sn1024_6$, $Sn1024_7$, and $Sn1024_8$, wherein
   for specific forms of $Sn1024_1$, $Sn1024_2$, $Sn1024_3$, $Sn1024_4$, $Sn1024_5$, $Sn1024_6$, $Sn1024_7$, and $Sn1024_8$, refer to description of embodiments.

7. The method according to claim 3, wherein when a length of the sequence is 2048, the eight sequences are respectively:

   $Sn2048_1$, $Sn2048_2$, $Sn2048_3$, $Sn2048_4$, $Sn2048_5$, $Sn2048_6$, $Sn2048_7$, and $Sn2048_8$, wherein
   for specific forms of $Sn2048_1$, $Sn2048_2$, $Sn2048_3$, $Sn2048_4$, $Sn2048_8$, $Sn2048_6$, $Sn2048_7$, and $Sn2048_8$, refer to description of embodiments.

8. A data transmission apparatus, comprising a unit configured to perform the method according to any one of claims 1 and 3 to 7.

9. A data transmission apparatus, comprising a unit configured to perform the method according to any one of claims 2 and 3 to 7.

10. A data transmission apparatus, comprising a processor and a transceiver internally communicating with the processor, wherein

the processor is configured to generate a physical layer protocol data unit PPDU, wherein the PPDU comprises a training field, and the training field comprises a sequence used for target sensing; and
the transceiver is configured to send the physical layer protocol data unit PPDU.

11. A data transmission apparatus, comprising a processor and a transceiver internally communicating with the processor, wherein

the transceiver is configured to receive a physical layer protocol data unit PPDU, wherein the PPDU comprises a training field, and the training field comprises a sequence used for target sensing; and
the processor is configured to perform target sensing based on the sequence used for target sensing.

12. A data transmission apparatus, comprising a processing circuit and an output interface internally communicating with the processing circuit, wherein

the processing circuit is configured to generate a physical layer protocol data unit PPDU, wherein the PPDU comprises a training field, and the training field comprises a sequence used for target sensing; and
the output interface is configured to send the PPDU.

13. A data transmission apparatus, comprising a processing circuit and an input interface internally communicating with the processing circuit, wherein

the input interface is configured to receive a physical layer protocol data unit PPDU, wherein the PPDU comprises a training field, and the training field comprises a sequence used for target sensing; and
the processing circuit is configured to perform target sensing based on the sequence used for target sensing.

14. A computer-readable storage medium, configured to store a computer program, wherein the computer program comprises instructions used to perform the method according to any one of claims 1 to 7.

15. A computer program, wherein the computer program comprises instructions used to perform the method according to any one of claims 1 to 7.

| Transmit device | | Receive device |

S110:
Generate a physical layer protocol data unit
PPDU, where the PPDU includes a training
field, and the training field includes a
sequence used for target sensing

S120: Send the PPDU

S130: Receive the PPDU

S140: Perform target sensing based on
the sequence used for target sensing

FIG. 1

Delay-Doppler range
related to sequence set
design

FIG. 2

| Short synchronous training sequence set (STF) | Long synchronous training sequence set (LTF) | Header (HEADER) | Data (DATA) | Training field unit (TRN-UNIT) | Training field unit (TRN-UNIT) | ... |
|---|---|---|---|---|---|---|

| Sequence (Sequence) |
|---|

FIG. 3

| Legacy-short training field (L-STF) | Legacy-long training field (L-LTF) | Legacy-header (L-HEADER) | Enhanced directional multi-gigabit header A (EDMG-HEADER-A) | Enhanced directional multi-gigabit short training field (EDMG-STF) | Enhanced directional multi-gigabit channel estimation field (EDMG-CEF) | Enhanced directional multi-gigabit header B (EDMG-HEADER-B) | Data (DATA) | Training field unit (TRN-UNIT) | Training field unit (TRN-UNIT) |
|---|---|---|---|---|---|---|---|---|---|

Sequence (sequence)

FIG. 4

S210

Initialize a sequence set and an annealing temperature in a simulated annealing algorithm

S220

Perform iterative update on an input sequence set at a current annealing temperature according to a coordinate descent algorithm, and in a process of iteratively updating the sequence set according to the coordinate descent algorithm, search these updated sequence sets to obtain an optimal sequence set

S230

Use a sequence set obtained at the current annealing temperature at an end of the coordinate descent algorithm as an output sequence set at the current annealing temperature, and use the output sequence set as an input sequence set at a next annealing temperature, to update the optimal sequence set again at the next annealing temperature by performing step S220

S240

When an exit condition of the simulated annealing algorithm is met, end the simulated annealing algorithm, and use an optimal sequence set in this case as a to-be-generated sequence set for output

FIG. 5

S221

Flip elements of each sequence in an input sequence set bit by bit

S222

During each update, that is, when each element is flipped, compute a target function value of a sequence set formed after the element is flipped, that is, a flipped sequence set

S223

Determine whether to update a sequence set before flipping to a sequence set after flipping, and correspondingly update an optimal sequence set

FIG. 6

S310a — Initial sequence set $X^0$

S310b — Set an initial temperature $T$
a minimum temperature $T_{min}$
an annealing coefficient $\alpha$
an optimal sequence set $X^{best} = X^0$

S320 — $T \leq T_{min}$

Yes

No

S330 — Generate, by using CD_SA,
a new sequence set $X$
an optimal sequence set $X^{best}$
a sequence set indicator $f$

S340 — $T = \alpha * T$

S350a — $f$ is not changed in t consecutive iterations

No

S350c — $X^0 = X$

Yes

S350b — $X^0 = X^{best}$

End

FIG. 7

Start

S3301

Input a sequence length L and a sequence set size M, initialize a sequence set and an optimal sequence set, set a maximum quantity Num of iterations, and set an initial quantity n of iterations to 1

S3302

Compute a target value $f_0$ of a sequence set $X^0$

S3303a

$n \leq Num$     No

Yes

$m = 1$     S3303b

S3305
No

$n = n + 1$     $m \leq M$     S3304

Yes     S3306

$i = 1$     $m = m + 1$     S3308

S3307     No

$i \leq L$

Yes     S3309

$x = x_m^0$,
$x(i) = (-1) \cdot x_m^0(i)$
and compute a target function $f$ of a new sequence set $X$

No     S3312

$f - f_0 \leq 0$     S3310     $P = \exp\left(-\dfrac{(f - f_0)}{t}\right)$
$R = rand(0,1)$

Yes     S3311

$x_m^0 = x; X^{best} = X$
$f_0 = f; i = i + 1$     $R > P$     S3313     $i = i + 1$     S3315

No

Yes     S3314

$x_m^0 = x; f_0 = f; i = i + 1$

End

FIG. 8

FIG. 9

Generation unit

Sending unit

FIG. 10

Receiving unit

Processing unit

FIG. 11

## INTERNATIONAL SEARCH REPORT

| International application No. |
| --- |
| **PCT/CN2021/119034** |

**A. CLASSIFICATION OF SUBJECT MATTER**

H04W 84/12(2009.01)i; H04W 72/00(2009.01)i; H04W 4/30(2018.01)i

According to International Patent Classification (IPC) or to both national classification and IPC

**B. FIELDS SEARCHED**

Minimum documentation searched (classification system followed by classification symbols)

H04W G01S

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 感知, 感测, 物理层协议数据单元, 训练字段, 序列, 高频, 60GHZ, sensing, WLAN, PPDU, training field, sequence, high frequency

**C. DOCUMENTS CONSIDERED TO BE RELEVANT**

| Category* | Citation of document, with indication, where appropriate, of the relevant passages | Relevant to claim No. |
| --- | --- | --- |
| X | WO 2016179807 A1 (HUAWEI TECHNOLOGIES CO., LTD.) 17 November 2016 (2016-11-17)<br>    description page 6 last paragraph - page 13 paragraph 2 | 1-15 |
| X | CN 110138421 A (HUAWEI TECHNOLOGIES CO., LTD.) 16 August 2019 (2019-08-16)<br>    description paragraphs 0110-0133 | 1-15 |
| A | CN 111988858 A (NOKIA SOLUTIONS AND NETWORKS OY) 24 November 2020 (2020-11-24)<br>    entire document | 1-15 |
| A | US 2018198654 A1 (MARVELL WORLD TRADE LTD.) 12 July 2018 (2018-07-12)<br>    entire document | 1-15 |
| A | CN 111953630 A (HUAWEI TECHNOLOGIES CO., LTD.) 17 November 2020 (2020-11-17)<br>    entire document | 1-15 |
| A | S.Sanjana et al. "Development and enhancement of CFR estimate in WLAN and testing in Vector Signal Transceiver"<br>    *2018 3rd IEEE International Conference on Recent Trends in Electronics, Information & Communication Technology (RTEICT-2018)*, 19 May 2018 (2018-05-19),<br>    entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2021** | **15 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/119034**

| Patent document cited in search report | | | Publication date (day/month/year) | Patent family member(s) | | | Publication date (day/month/year) |
|---|---|---|---|---|---|---|---|
| WO | 2016179807 | A1 | 17 November 2016 | CN | 107409432 | A | 28 November 2017 |
| CN | 110138421 | A | 16 August 2019 | WO | 2019154188 | A1 | 15 August 2019 |
| CN | 111988858 | A | 24 November 2020 | EP | 3742654 | A1 | 25 November 2020 |
| | | | | FI | 128778 | B1 | 15 December 2020 |
| | | | | US | 20200374729 | A1 | 26 November 2020 |
| US | 2018198654 | A1 | 12 July 2018 | EP | 3568943 | A1 | 20 November 2019 |
| | | | | CN | 110582970 | A | 17 December 2019 |
| | | | | WO | 2018132428 | A1 | 19 July 2018 |
| CN | 111953630 | A | 17 November 2020 | None | | | |

Form PCT/ISA/210 (patent family annex) (January 2015)